(19) **Europäisches Patentamt**
**European Patent Office**
**Office européen des brevets**

(11) **EP 2 346 223 B1**

(12) **EUROPEAN PATENT SPECIFICATION**

(45) Date of publication and mention
of the grant of the patent:
**08.05.2013   Bulletin 2013/19**

(51) Int Cl.:
***H04L 25/06*** *(2006.01)*

(21) Application number: **10150664.0**

(22) Date of filing: **13.01.2010**

(54) **Calculation of log-likelihood ratios in a demodulator**

Errechnung von Log-Wahrscheinlichkeitsverhältnissen in einem Demodulator

Calcul des logarithme des rapports de vraisemblence dans un démodulateur

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**20.07.2011   Bulletin 2011/29**

(73) Proprietor: **Universität Duisburg-Essen**
**45141 Essen (DE)**

(72) Inventors:
• **Jung, Peter**
**47051 Duisburg (DE)**
• **Bruck, Guido H.**
**46562 Voerde (DE)**
• **Bai, Zijian**
**47057 Duisburg (DE)**

(74) Representative: **Zinkler, Franz**
**Schoppe, Zimmermann, Stöckeler & Zinkler Patentanwälte**
**Postfach 246**
**82043 Pullach bei München (DE)**

(56) References cited:
**WO-A1-2009/127243     US-A1- 2008 260 075**

• **MONG-SUAN YEE ET AL.: "Radial Basis Function-Assisted Turbo Equalization" IEEE TRANSACTIONS ON COMMUNICATIONS, vol. 51, no. 4, 1 April 2003 (2003-04-01), XP011071186**
• **MONG-SUAN YEE ET AL.: "Burst-by-Burst Adaptive Turbo-Coded Radial Basis Function-Assisted Decision Feedback Equalization" IEEE TRANSACTIONS ON COMMUNICATIONS, vol. 49, no. 11, November 2001 (2001-11), XP011010068**

• **MINYING SUN ET AL.: "SNR mismatch in bit-interleaved turbo-coded modulation" ELECTRONICS LETTERS, vol. 39, no. 19, 18 September 2003 (2003-09-18), pages 1392-1394, XP006020965**
• **M TIMIS: "Design of a max-log-MAP decoder" ANNALS OF THE ORADEA UNIVERSITY, FASCICLE OF MANAGEMENT AND TECHNOLOGICAL ENGINEERING, vol. VI, no. XVI, 2007, pages 415-419, XP002587033 Iasi, RO**
• **DE JONG, WILLINK: "Iterative tree search detection for mimo wireless systems" IEEE . VEHICULAR TECHNOLOGY CONFERENCE, vol. 2, 24 September 2002 (2002-09-24), pages 1041-1045, XP010608973**
• **CONEXANT SYSTEMS INC.: "VDSL2: Turbo Trellis Coded Modulation for VDSL2: Complexity" INTERNATIONAL TELECOMMUNICATION UNION, STUDY GROUP 15 - DELAYED CONSTRIBUTION 37, 29 November 2004 (2004-11-29), pages 1-10, XP017407154**
• **FABER T ET AL: "Metric processing in joint source-channel decoders applied to impulsive noise environments" ELECTRONICS LETTERS, vol. 39, no. 24, 27 November 2003 (2003-11-27), pages 1735-1737, XP006024474 STEVENAGE, GB**
• **EFANIAN ET AL.: "Reduced complexity symbol detectors with parallel structure for ISI channels" IEEE TRANSACTIONS ON COMMUNICATIONS, vol. 42, no. 2/3/4, 1994, pages 1661-1671, XP002587034 New York, US**
• **BAUCH, FRANZ: "A COMPARISON OF SOFT-IN/SOFT-OUT ALGORITHMS FOR "TURBO-DETECTION"" IEEE INTERNATIONAL CONFERENCE ON TELECOMMUNICATIONS, vol. 2, 21 June 1998 (1998-06-21), pages 259-263, XP001032981 New York, US**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- ROBERTSON ET AL.: "A COMPARISON OF OPTIMAL AND SUB-OPTIMAL MAP DECODING ALGORITHMS OPERATING IN THE LOG DOMAIN" INTERNATIONAL CONFERENCE ON COMMUNICATIONS, vol. 2, 18 June 1995 (1995-06-18), pages 1009-1013, XP000533149
- KOCH, BAIER: "Optimum and sub-optimum detection of coded data disturbed by time-varying intersymbol interference" IEEE GLOBAL TELECOMMUNICATIONS CONFERENCE, 2 December 1990 (1990-12-02), pages 1679-1684, XP010038977 New York, US
- SYBIS ET AL.: "Reduced-complexity algorithms for near-optimal decoding of turbo TCM codes" ELECTRONIC LETTERS, vol. 45, no. 5, 26 February 2009 (2009-02-26), pages 278-280, XP006032670 Stevenage, GB
- PAPAHARALABOS ET AL.: "Modified Log-MAP Algorithm for Simplified Decoding of Turbo and Turbo TCM Codes" IEEE VEHICULAR TECHNOLOGY CONFERENCE, 26 April 2009 (2009-04-26), pages 1-5, XP031474636

**Description**

The present invention is related to signal detection in digital communication systems and, in particular, to the determination of so-called soft information for higher-order digital modulation schemes, such as, e.g. *M*-QAM (*M*-ary Quadrature Amplitude Modulation).

In digital modulation, typically an analog carrier signal is modulated by a digital bit stream. In the case of PSK (Phase Shift Keying), a plurality of $\nu$ bits is mapped to a finite number of $M = 2^\nu$ phases. In the case of FSK (Frequency Shift Keying), a plurality of $\nu$ bits is mapped to a finite number of $M = 2^\nu$ frequencies. In the case of ASK (Amplitude Shift Keying), a plurality of $\nu$ bits is mapped to a finite number of $M = 2^\nu$ amplitudes. In the case of QAM, a finite number of at least two phases, and at least two amplitudes are used. QAM conveys two digital bit streams by changing the amplitudes of two carrier waves, using ASK. These two waves, usually sinusoids, are out of phase with each other by 90° and are thus called quadrature carriers or quadrature components. The modulated waves are summed, and the resulting waveform is a combination of both PSK and ASK. PSK modulators are often designed using the QAM principle. PSK can be regarded as a special case of QAM, where the magnitude of the modulating signal is a constant, with only the phase varying. This can also be extended to FSK since this can be regarded as a special case of phase modulation.

As with many digital modulation schemes, the constellation diagram is a useful representation. In QAM, e.g., the constellation points are usually arranged in a square grid with equal vertical and horizontal spacing, although other configurations are possible (e.g. Cross-QAM). Since in digital telecommunications the data are usually binary, the number *M* of points in the grid is usually a power of 2 (i.e., 2, 4, 8 ...). Since QAM is usually square, some of these are rare - the most common forms are 16-QAM, 64-QAM, 128-QAM and 256-QAM. By moving to a higher-order constellation, it is possible to transmit more bits per transmit symbol. However, if the mean energy of the constellation is to remain the same (by way of making a fair comparison), the points must be closer together and are thus more susceptible to noise and other corruption. This results in a higher bit error rate and so higher-order QAM can deliver more data less reliably than lower-order QAM, for constant mean constellation energy.

If data-rates beyond those offered by 8-PSK are required, it is more usual to move to QAM since it achieves a greater distance between adjacent points in the I-Q plane by distributing the points more evenly. The complicating factor is that the points are no longer all the same amplitude and so the demodulator must now correctly detect both phase and amplitude, rather than just phase.

Hence, higher-order digital modulation schemes, such as, e.g. *M*-QAM, are attractive digital modulation techniques to achieve a high data rate transmission over wire line or wireless communication channels without increasing bandwidth. For this reason said higher level modulation schemes are in use or under discussion for communication systems, such as 3rd generation and 4th generation mobile communication systems, wireless local area networks (WLAN), and digital video broadcasting (DVB).

In order to detect such higher-order modulated signals also under harsh conditions of wireless communication scenarios, iterative decoding techniques, such as turbo or turbo-like channel decoding relying on so-called soft probability information in form of bitwise log-likelihood ratios (LLR) have to be used. Hence, such iterative decoding schemes require calculation of a bitwise matrix which tends to be a quite complex and computational expensive task for higher-order modulated signals, in particular when not using inaccurate computational approximations. In order to simplify circuit logic for LLR computation, improved concepts are needed.

Therefore, it is the object of the present invention to provide both a more exact and hardware-efficient concept for determining the bitwise soft information for higher-order digitally modulated signals.

This object is solved by an apparatus for determining probability information according to claim 1 and a method for determining the probability information according to claim 14.

Further aspects of the present invention also provide a computer program for carrying out the steps of the inventive method.

For a higher-order digitally modulated signal, such as, e.g. *M*-PSK or *M*-QAM, the bitwise log-likelihood ratio of a current bit position *k* of a transmitted symbol may be computed based on a logarithm of a quotient of sums, wherein the numerator of the quotient comprises a first sum of conditional probabilities denoting the probability of a received signal sample $\hat{b}$ given the transmission of a first binary value (e.g. "1") at the current bit position *k*, and wherein the denominator of the quotient comprises a second sum of conditional probabilities denoting the probability of the received signal sample $\hat{b}$, given the transmission of a second binary value (e.g. "0") at the current bit position *k*. I.e., in general, the bitwise LLR A of bit $b_k$ may be computed according to

$$\Lambda\left(b_k\right) = \ln \frac{\sum\limits_{b_k \in S_1}\left(\Pr\left(b_k = 1\right) p\left(\hat{b}\middle| b_k = 1\right)\middle/ \Pr\left(\hat{b}\right)\right)}{\sum\limits_{b_k \in S_0}\left(\Pr\left(b_k = 0\right) p\left(\hat{b}\middle| b_k = 0\right)\middle/ \Pr\left(\hat{b}\right)\right)}$$

$$= \ln \frac{\sum\limits_{b_k \in S_1}\Pr\left(b_k = 1\right) p\left(\hat{b}\middle| b_k = 1\right)}{\sum\limits_{b_k \in S_0}\Pr\left(b_k = 0\right) p\left(\hat{b}\middle| b_k = 0\right)}, \quad k = 0,1,2,\ldots,\upsilon-1 \tag{1}$$

wherein $\Pr(b_k=0)$, $\Pr(b_k=1)$ denote the respective a-priori probabilities for bit $b_k$, $p(\hat{b}\,|b_k = 0)$ denotes the conditional probability density of the received signal sample $\hat{b}$, given the transmission of "0" at the current bit position $k$, and $p(\hat{b}\,|b_k = 1)$ denotes the conditional probability density of the received signal sample $\hat{b}$, given the transmission of "1" at the current bit position $k$. $S_0$ and $S_1$ denote the respective set of modulation symbols comprising a logical "0" / "1" at the current bit position $k$.

For higher-order digitally modulated signals and specific transmission scenarios, Eq. (1) may be transformed to a logarithm of a quotient of sums, wherein the numerator of the quotient comprises a first sum of exponential functions, and wherein the denominator of the quotient comprises a second sum of exponential functions, according to

$$\Lambda\left(b_k\right) = \ln \frac{\sum\limits_{\lambda=1}^{f(M)} \exp\left(f\left(\hat{b}, b_{i_{(k)\lambda}}\right)\right)}{\sum\limits_{\lambda=1}^{f(M)} \exp\left(f\left(\hat{b}, b_{\rho_{i_{(k)\lambda}}}\right)\right)}, \quad k = 0,1,\ldots,\left(\nu-1\right), \tag{2}$$

wherein $\nu$ bits are mapped to a quadrature component of a $M$-ary complex valued symbol alphabet, $f(M)$ denotes a function of the size $M$ of the symbol alphabet, $f\left(\hat{b}, b_{i_{(k)\lambda}}\right)$ denotes a function of the received signal sample $\hat{b}$ and a hypothetic complex valued transmit symbol $b_{i_{(k)\lambda}}$ comprising the first binary value at the $k$-th bit position, and $f\left(\hat{b}, b_{\rho_{i_{(k)\lambda}}}\right)$ denotes a function of the received signal sample $\hat{b}$ and a hypothetic transmit symbol $b_{\rho_{i_{(k)\lambda}}}$ comprising the second binary value at the $k$-th bit position.

The finding of the present invention is that the bitwise log-likelihood ratio $\Lambda(b_k)$ of a higher-order modulated signal, such as, e.g. $M$-PSK, $M$-ASK, $M$-FSK or $M$-QAM ($M \geq 4$), may be computed more hardware-efficient and, at the same time more exactly, by recursively applying the so-called Jacobi-logarithm / Jacobian logarithm or an approximation thereof to evaluate Eq. (2). The Jacobian logarithm $J(.,.)$ may be expressed according to

$$J\left(B,C\right) = \ln\left\{\exp\left(B\right) + \exp\left(C\right)\right\} = \max\left\{B,C\right\} + \ln\left\{1 + \exp\left\{-\middle|B - C\middle|\right\}\right\}. \tag{3}$$

Hence, $\exp(B) + \exp(C) = \exp(J(B,C))$. Considering three summands in the ln-expression of Eq. (2), the respective Jacobian logarithm may be expressed according to $\ln\{\exp(A) + \exp(B) + \exp(C)\} = \ln\{\exp(A) + \exp(J(B,C)\} = \max\{A, J(B,C)\} + \ln\{1 + \exp\{-| A - J(B,C)|\}\}$. From this it becomes clear that Eq. (2) may be solved recursively.

According to an embodiment, the Jacobian logarithm $J(.,.)$ may be computed exactly in each step of the recursion. According to preferred embodiments, however, the Jacobian logarithm is approximated by a maximum-operation max {B,C} in each step of the recursion, leading to a low-complexity implementation of the present invention. According to further preferred embodiments, the Jacobian logarithm is approximated by the maximum-operation complemented by a lookup operation in a lookup-table (LUT) with pre-calculated values for ln{1+exp{-|B-C|}}. Depending on the quantization of these pre-calculated values, the error compared to the exact evaluation of the Jacobian logarithm may be kept small, thus leading to both a hardware-efficient and exact implementation of the inventive concept.

Embodiments of the present invention allow an exact or quasi exact determination of the bitwise log-likelihood ratio of higher level modulated signals, such as, e.g., $M$-PSK, $M$-ASK, $M$-FSK or $M$-QAM ($M \geq 4$) signals. The resulting bitwise log-likelihood ratios, i.e. the log-likelihood ratios per bit, differ from well-known approximate solutions, in particular for low signal-to-noise ratios (SNR) experienced at a communications system receiver in which the inventive concept may be implemented.

In order to correctly demodulate transmitted higher-order ($M \geq 4$) modulated symbols and/or to compute the bitwise LLRs, an amplitude or equivalently, scaling factor $\mu$ of the transmitted symbols has to be known. In many communications systems the amplitude is not known a-priori on the receiver side and therefore has to be estimated. The accuracy of this estimate has a direct impact on the link-level performance in terms of frame error rate and/or data throughput. If no information on the amplitude $\mu$ of the transmitted symbols is signaled, this amplitude $\mu$ has to be blindly "estimated" by the receiver, for example, based only on unknown received data symbols. In real world transmission systems, the received signal samples are additionally distorted by noise and/or interference with unknown statistical parameters. Therefore, also the resulting signal-to-noise ratio has to be estimated for correctly demodulating transmitted symbols and /or for computing the respective bitwise LLRs. Hence, it is necessary to determine values of one or more signal parameters at the receiver, such as amplitude $\mu$, noise power and/or SNR. Embodiments of the present invention utilize second-order and fourth-order moments of received signal samples and transmit symbols to estimate amplitude, noise power and SNR of received signal samples.

Document WO 2009/127243 A1 (FUNDACIO PRIVADA CENTRE TECNOLOGIC DE TELECOMUNICACIONS DE CATALUNYA) 22 October 2009 discloses (see page 5) using the Jacobian logartithm in the calculation of the a posteriori probability.

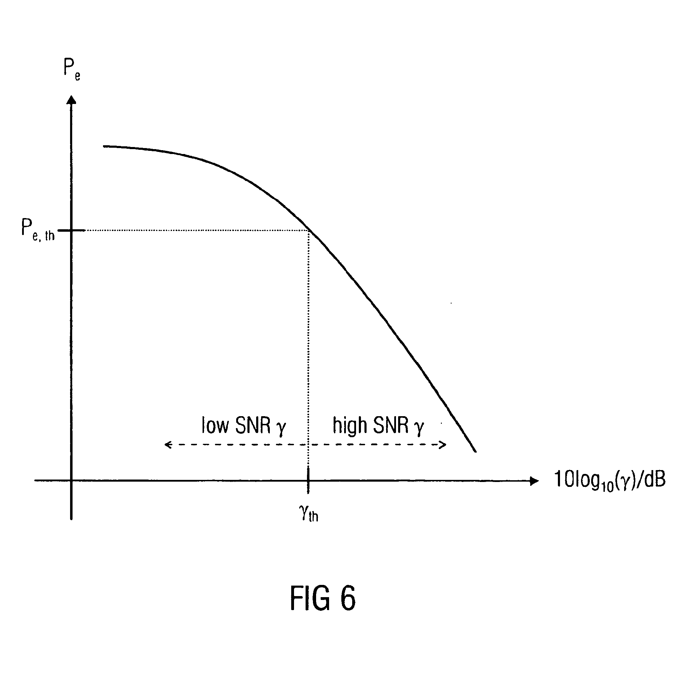

The invention relates to the embodiment disclosed in Fig. 6 (see description between equations (40) and (41)). Other references to "embodiments" are to be understood as examples useful for understanding the invention.

Preferred embodiments of the present invention will be described in detail with respect to the accompanying drawings, in which:

Figs. 1a-p    show exemplary symbol constellation diagrams for BPSK, QPSK and 16-QAM, 32-QAM and 8-PSK modulation schemes:

Fig. 2    shows a schematic block diagram of an apparatus for determining probability information according to an embodiment of the present invention;

Fig. 3    shows a flowchart describing the inventive recursive concept;

Figs. 4a-c    show the correction term $f_c(|B$-$C|)$ vs. $|B$-$C|$;

Fig. 5    shows a block diagram of a receiver structure using the inventive concept; and

Fig. 6    shows a relation between a bit-error- and a signal-to-noise-ratio threshold for applying embodiments of the present invention.

The following description sets forth specific details such as particular embodiments, procedures, techniques, etc. for purposes of explanation and not limitation. It will be appreciated by those skilled in the art that other embodiments may be employed apart from these specific details. For example, although the following description is facilitated using non-limiting example applications, the technology may be employed to any type of higher-order ($M \geq 4$) digital modulation schemes. In some instances, detailed descriptions of well-known methods, interfaces, circuits and devices are omitted so as to not obscure the description with unnecessary detail. Moreover, individual blocks are shown in some of the figures. Those skilled in the art will appreciate that the functions of those blocks may be implemented using individual hardware circuits, using software programs and data, in conjunction with a suitably programmed digital micro processor or general purpose computer, using application-specific integrated circuitry (ASIC) and/or using one or more digital signal processors (DSPs).

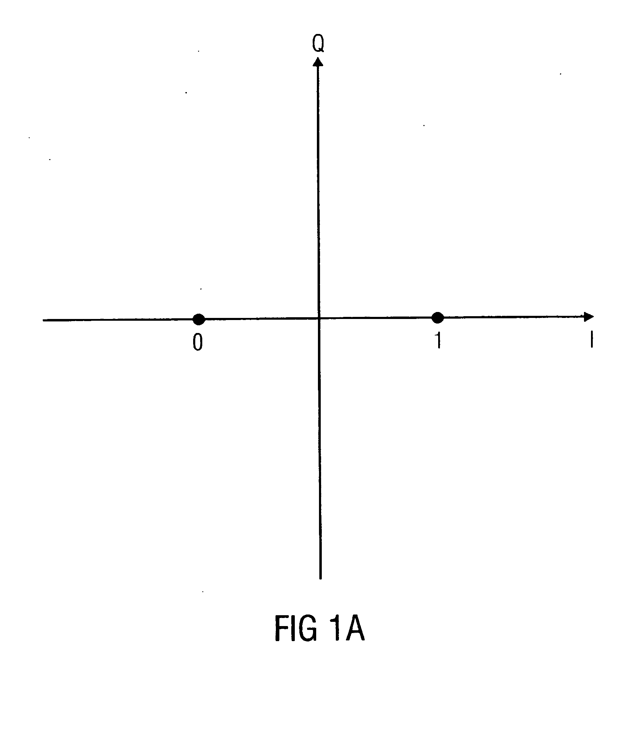

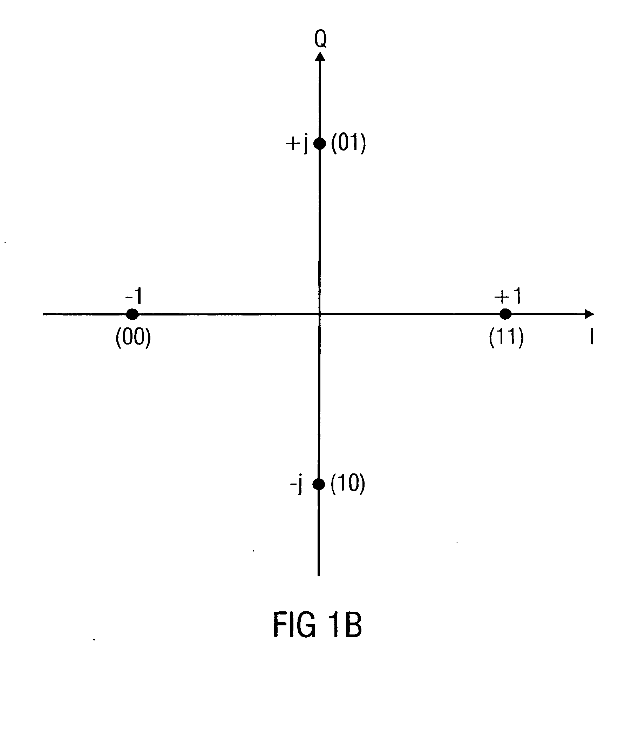

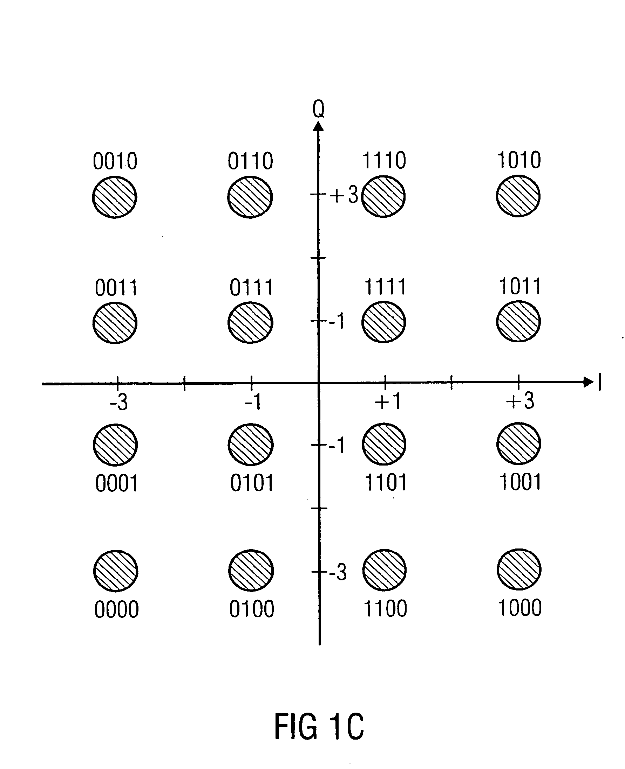

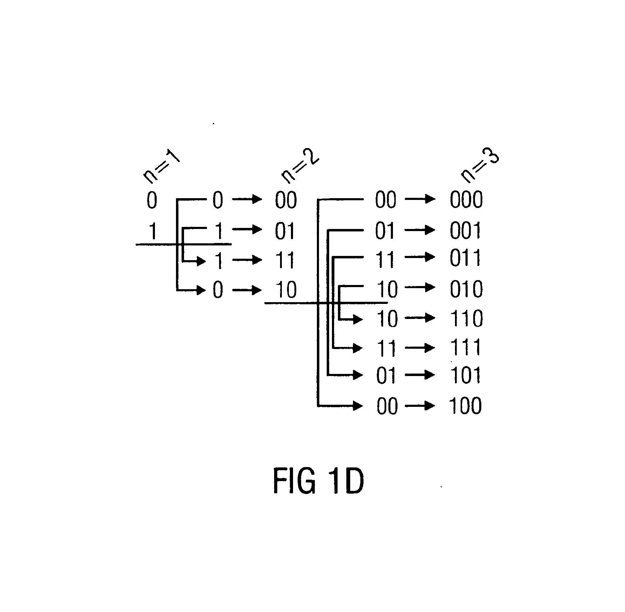

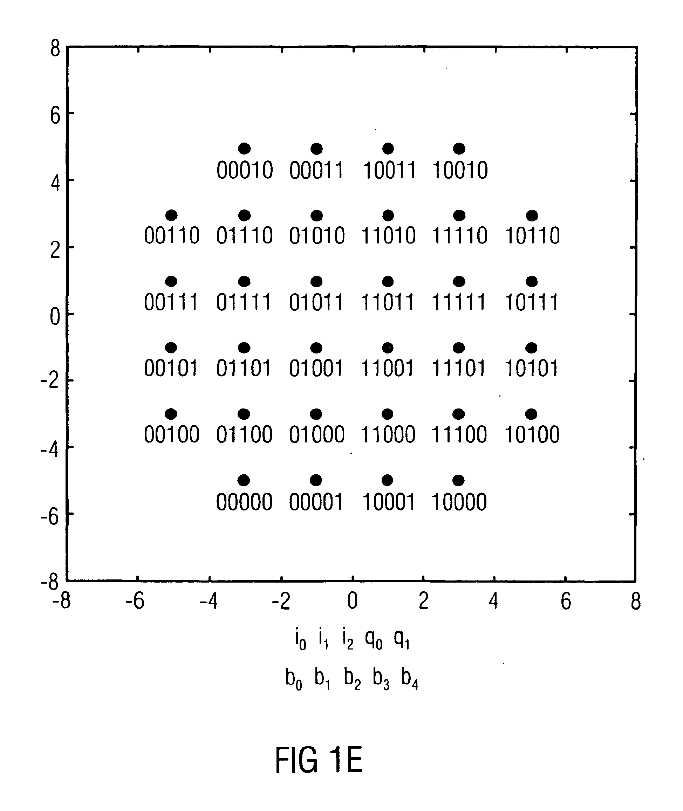

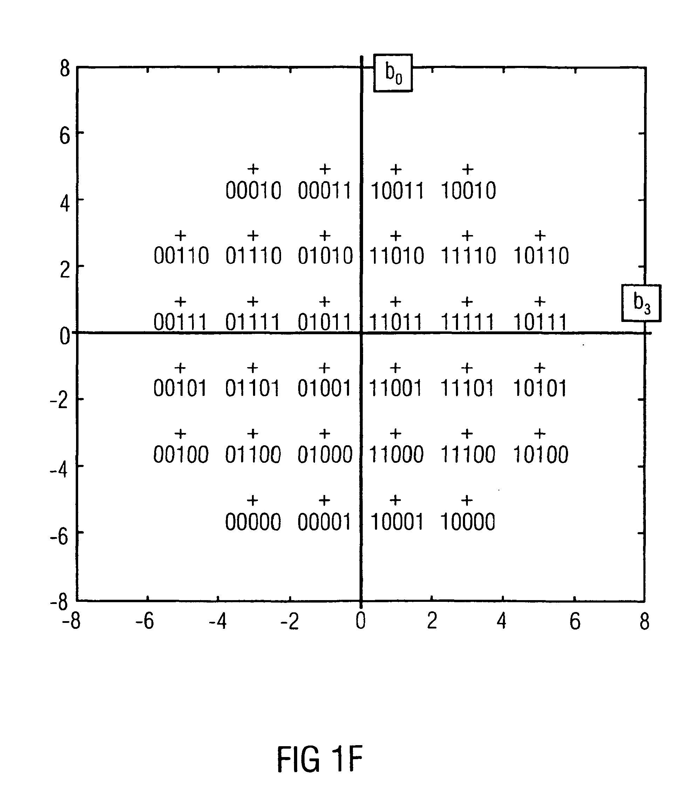

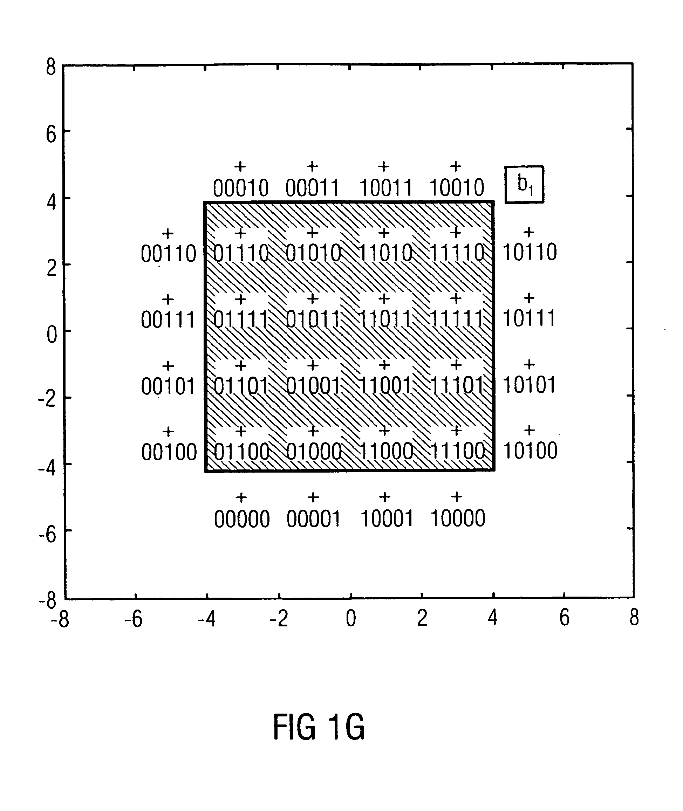

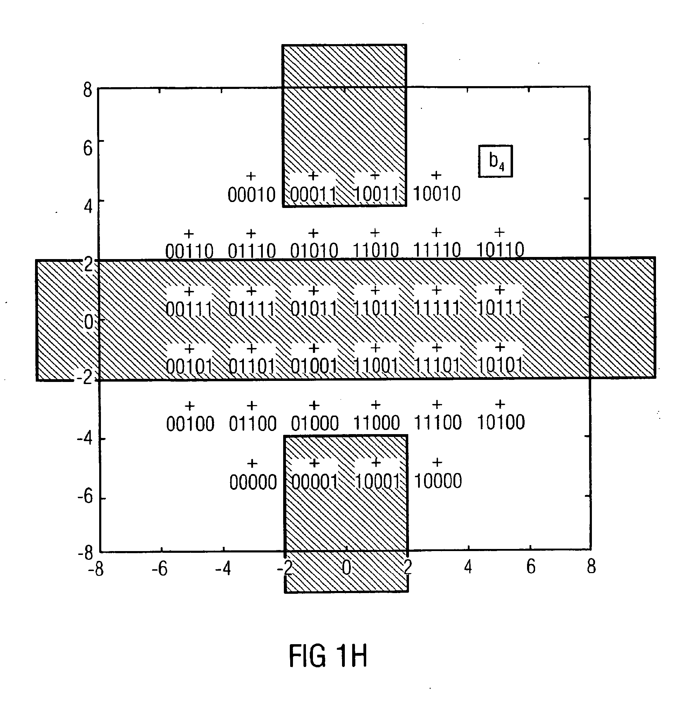

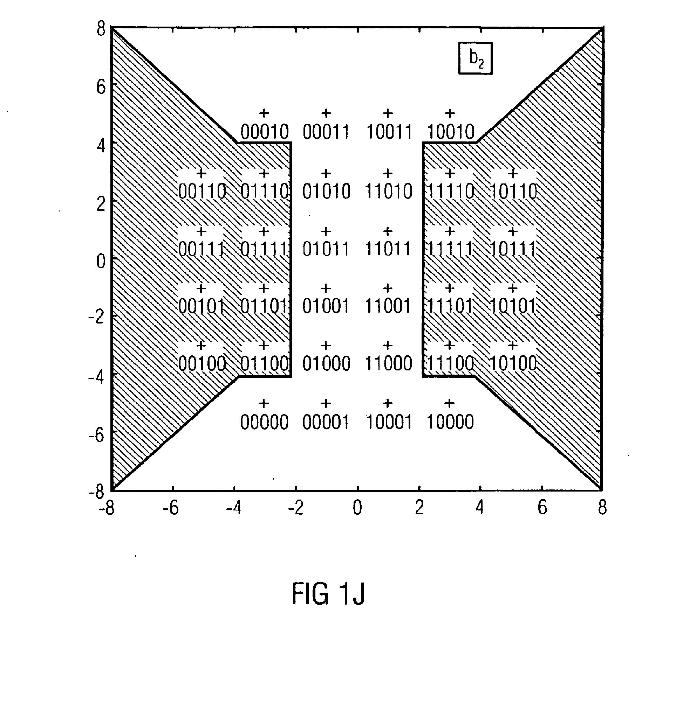

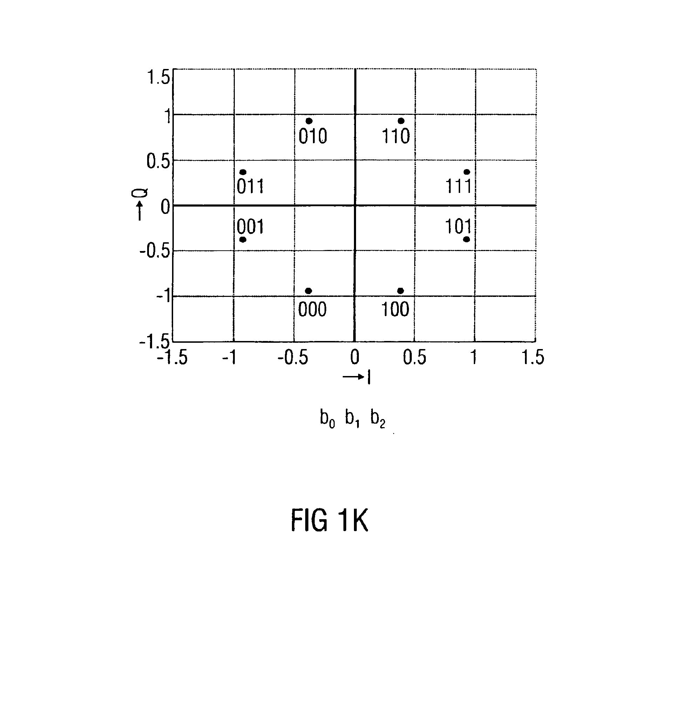

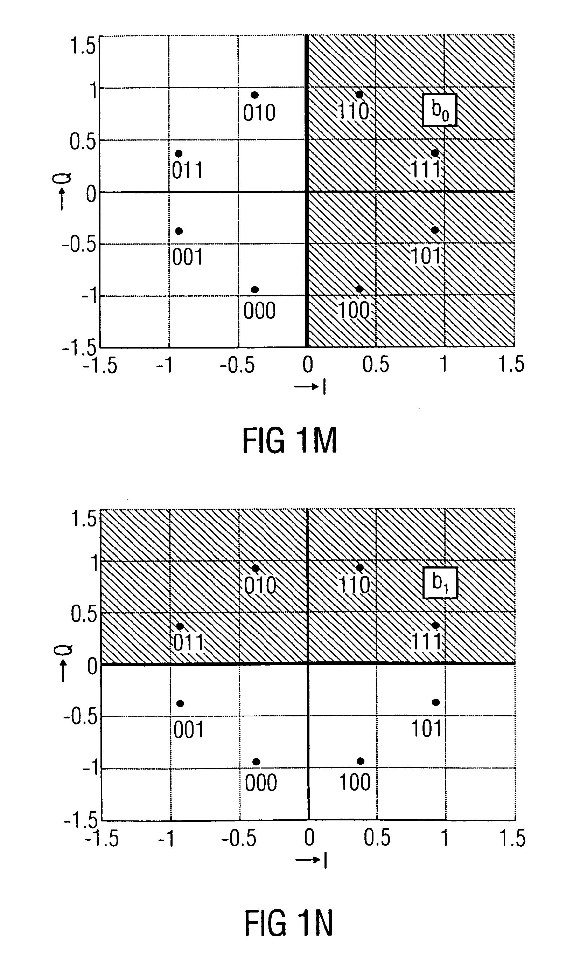

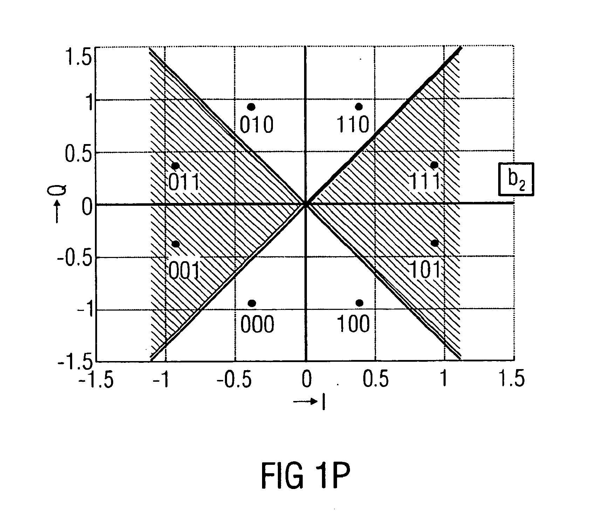

Figs. 1a-c exemplarily show schematic complex constellation diagrams, wherein the horizontal or x-axis correspond to the so-called inphase (I-channel) (i.e., the real part) of the complex symbol and the vertical axis or y-axis corresponds to the quadrature (Q-channel) (or imaginary part) of the complex symbols, respectively. Fig. 1 a exemplarily shows a complex signal constellation for BPSK (binary phase shift keying) modulation, Fig. 1b shows an exemplary signal constellation of Gray-coded QPSK or 4-QAM modulation, and Fig. 1c shows an exemplary signal constellation for Gray-coded 16-QAM.

While QPSK or 4-QAM (Fig.1b) is achieved by modulating two 2-level pulse amplitude modulated (PAM) signals onto two respective orthogonal carriers (I/Q), providing $M = 2^2 = 4$ possible symbol representations or levels, 16-QAM (Fig.1c) is achieved by modulating two 4-level PAM signals onto the two respective orthogonal carriers, providing $M = 4^2 = 16$ possible symbol representations. In the same manner 64-QAM is achieved by modulating two 8-level PAM signals onto the I and Q carriers, providing $M = 8^2 = 64$ possible symbol representations. Accordingly, a M-QAM symbol includes phase information based on the respective I or Q orthogonal carrier and amplitude information, whereas QPSK detection, by comparison, includes only phase information.

In Figs. 1a-c a black area or dot represents one complex symbol with its phase and amplitude information. The amplitude information corresponds to the radial distance of the dot from the origin of the coordinate system and the phase information corresponds to the angle with respect to the positive I-axis. Due to the fact that four symbols can be represented in the QPSK (Fig.1b) system, each QPSK symbol corresponds to a two-bit word comprising two bits $b_0$ and $b_1$. Since 16 symbols may be represented in the 16-QAM system (Fig.1c), each 16-QAM symbol in Fig. 1c corresponds to a 4-bit word comprising four bits $b_0$, $b_1$, $b_2$, $b_3$. The binary representation of the complex symbols are indicated below the dots in Figs. 1a-c, respectively.

In the following description, to begin with, it is assumed that a modulated arbitrary square (i.e. $M = 2^{2v}$) Gray-coded M-QAM symbol $b$ is to be transmitted over an additive white Gaussian noise (AWGN) channel according to

$$\hat{b} = \mu b + n \, , \qquad\qquad (4)$$

such that $\hat{b}$ denotes the received signal sample, $n$ denotes the additive white Gaussian noise with spectral noise density $N_0$, and $\mu$ denotes the amplitude or equivalently, the scaling factor of the transmitted symbol $b$ in complex baseband representation, respectively. As described before, in a square M-QAM, $\log_2(M)$ bits of a serial information stream are mapped onto a two-dimensional signal constellation using Gray coding, wherein $M_{PAM} = \sqrt{M}$ shall denote the number of PAM signal constellations in the inphase and quadrature component, respectively. Due to the Gray-code, I- and Q-component may be treated independently. The constellation points of the $\sqrt{M}$-PAM may be expressed as

$$-\left(\sqrt{M}-1\right) + 2\left(k-1\right), \quad k = 1, 2, 3, ..., \sqrt{M} \, , \qquad\qquad (5)$$

identified by index $k$, resulting in the $\sqrt{M}$-PAM constellation points

$$\left\{-\left(\sqrt{M}-1\right)\right\}, \left\{-\left(\sqrt{M}-1\right)+2\right\}, \left\{-\left(\sqrt{M}-1\right)+4\right\}, ..., \left\{+\left(\sqrt{M}-1\right)\right\} \, . \qquad (6)$$

A binary-reflected Gray code for $v$ bits can be generated recursively by reflecting the bits (i.e. listing them in reverse order and concatenating the reverse list onto the original list), prefixing the original bits with a binary 0 and then prefixing the reflected bits with a binary 1. The base case, for $n = 1$ bit, is the most basic Gray code, $G = \{0, 1\}$. The base case can also be thought of as a single zero-bit Gray code ($n = 0$, $G = \{$ " " $\}$), which is made into the one-bit code by the recursive process. The code may also be constructed iteratively. These characteristics suggest a simple and fast method of translating a binary value into the corresponding Gray code. Each bit is inverted if the next higher bit of the input value is set to one. Hence, a Gray code with $v$ bits iteratively results from the Gray code with $(v-1)$-bits by mirroring of the $(v-1)$-bit Gray code and adding $2^{(v-1)}$ zeros at the most significant bit (MSB) position for the non-mirrored half and by adding $2^{(v-1)}$ ones to the MSB of the mirrored half, like it is illustrated in Fig. 1d.

The MSB-position shall be denoted by $b_0$ in the following. The second MSB-position shall be denoted by $b_1$. The least significant bit (LSB) position, hence, is $b_{v-1}$. For $\sqrt{M}$-PAM constellations the following applies:

1. There are $\sqrt{M}$ symbols per I/Q component numbered with the index k, k=1, 2, ..., $\sqrt{M}$

2. $b_{\nu-1}$=1 at $\sqrt{M}/2$ symbol positions 2, 3, 6, 7, 10, 11, 14, 15, 18, 19, 22, 23, 26, 27, 30, 31, ...

3. $b_{\nu-1}$=0 at the $\sqrt{M}/2$ symbol positions 1,4, 5, 8, 9,12,13,16,17,20,21,24,25,28, 29, 32, ...

4. $b_{\nu-2}$=1 at the $\sqrt{M}/2$ symbol positions 3, 4, 5, 6, , 11, 12, 13, 14, , 19, 20, 21, 22, , 27, 28, 29, 30, , ...

5. $b_{\nu-2}$=0 at the $\sqrt{M}/2$ symbol positions 1, 2, , 7, 8, 9, 10, , 15, 16, 17, 18, 23, 24, 25, 26, 31, 32, ...

6. $b_{\nu-3}$=1 at the $\sqrt{M}/2$ symbol positions 5, 6, 7, 8, 9, 10, 11, 12, , 21, 22, 23, 24, 25, 26, 27, 28, , ...

7. $b_{\nu-3}$=0 at the $\sqrt{M}/2$ symbol positions 1, 2, 3, 4, , 13, 14, 15, 16, 17, 18, 19, 20, , 29, 30, 31, 32, ...

8. $b_{\nu-4}$=1 at the $\sqrt{M}/2$ symbol positions 9, 10, 11, 12, 13, 14, 15, 16, 17, 18, 19, 20, 21, 22, 23, 24, ...

9. $b_{\nu-4}$=0 at the $\sqrt{M}/2$ symbol positions 1, 2, 3, 4, 5, 6, 8, , 25, 26, 27, 28, 29, 30, 31, 32... etc.

10. $b_0$ = 1 at the $\sqrt{M}/2$ symbol positions $\sqrt{M}/2+1$, $\sqrt{M}/2+2$, ... $\sqrt{M}$ .

11. $b_0$ = 0 at the $\sqrt{M}/2$ symbol positions 1, 2, ... $\sqrt{M}/2$ .

From this we can derive a general indexing of the PAM-symbols. Let

$$\boldsymbol{i}_{(k)}^{1} = \left( i_{(k),1}^{1}, i_{(k),2}^{1}, i_{(k),3}^{1}, \ldots, i_{(k),\frac{\sqrt{M}}{2}}^{1} \right), \quad k = 0,1,\ldots,(\nu-1) \tag{7}$$

be a vector of $\sqrt{M}/2$ elements $i_{(k),1}^{1}$, $i_{(k),2}^{1}$, $i_{(k),3}^{1}$, ...., $i_{(k),\frac{\sqrt{M}}{2}}^{1}$ including those symbol positions where bit $b_k$, $k =$ 0,1,...,($\nu$-1), equals one. Accordingly, let

$$\boldsymbol{i}_{(k)}^{0} = \left( i_{(k),1}^{0}, i_{(k),2}^{0}, i_{(k),3}^{0}, \ldots, i_{(k),\frac{\sqrt{M}}{2}}^{0} \right), \quad k = 0,1,\ldots,(\nu-1), \tag{8}$$

be the vector with $\sqrt{M}/2$ elements $i_{(k),1}^{0}$, $i_{(k),2}^{0}$, $i_{(k),3}^{0}$, ..., $i_{(k),\frac{\sqrt{M}}{2}}^{0}$ including those symbol positions on which the bit $b_k$, $k$ = 0,1,...,($\nu$-1), equals zero. From the above-said the following symbol position vectors may be derived:

$$\boldsymbol{i}_{(0)}^{0} = \left( \frac{\sqrt{M}}{2}+1, \frac{\sqrt{M}}{2}+2, \ldots, \sqrt{M} \right), \tag{9}$$

$$i_{(0)}^1 = \left(1,2,3,4,\ldots,\frac{\sqrt{M}}{2}\right), \tag{10}$$

$$i_{(v-4)}^0 = \left(9,10,11,12,13,14,15,16,17,18,19,20,21,22,23,24,\ \ldots\right), \tag{11}$$

$$i_{(v-4)}^1 = \left(1,2,3,4,5,6,7,8,25,26,27,28,29,30,31,32,\ \ldots\right), \tag{12}$$

$$i_{(v-3)}^0 = \left(1,2,3,4,13,14,15,16,17,18,19,20,29,30,31,32,\ \ldots\right), \tag{13}$$

$$i_{(v-3)}^1 = \left(5,6,7,8,9,10,11,12,21,22,23,24,25,26,27,28,\ \ldots\right), \tag{14}$$

$$i_{(v-2)}^0 = \left(1,2,7,8,9,10,15,16,17,18,23,24,25,26,31,32,\ \ldots\right), \tag{15}$$

$$i_{(v-2)}^1 = \left(3,4,5,6,11,12,13,14,19,20,21,22,27,28,29,30,\ \ldots\right), \tag{16}$$

$$i_{(v-1)}^0 = \left(1,4,5,8,9,12,13,16,17,20,21,24,25,28,29,32,\ \ldots\right), \tag{17}$$

$$i_{(v-1)}^1 = \left(2,3,6,7,10,11,14,15,18,19,22,23,26,27,30,31,\ \ldots\right). \tag{18}$$

The log-likelihood ratio $\Lambda(b_k)$ for bit $b_k$, $k$= 0, 1, 2, ..., $(v-1)$ may generally be computed based on

$$\text{LLR} = \Lambda\left(b_k\right) = \ln\frac{\Pr\left(b_k = 1 \big| \hat{b}\right)}{\Pr\left(b_k = 0 \big| \hat{b}\right)}, \quad k = 0,1,2,\ldots,\left(v-1\right), \tag{19}$$

wherein the numerator of the quotient means the conditional probability of a received signal sample $\hat{b}$ given the transmission of a first binary value (e.g. $b_k$ = 1) at the $k$-th bit position of transmit symbol, and wherein the denominator of the quotient denotes the conditional probability of the received signal sample $\hat{b}$ given the transmission of a second binary value (e.g. $b_k$ = 0) at the $k$-th bit position of transmit symbol. Eq. (19) yields

$$\Lambda\left(b_k\right) = \ln \frac{\displaystyle\sum_{b_k \in S_1}\left(\Pr\left(b_k = 1\right) p\left(\hat{b}\big|b_k = 1\right)\Big/\Pr\left(\hat{b}\right)\right)}{\displaystyle\sum_{b_k \in S_0}\left(\Pr\left(b_k = 0\right) p\left(\hat{b}\big|b_k = 0\right)\Big/\Pr\left(\hat{b}\right)\right)} \,, \tag{20}$$

$$= \ln \frac{\displaystyle\sum_{b_k \in S_1}\Pr\left(b_k = 1\right) p\left(\hat{b}\big|b_k = 1\right)}{\displaystyle\sum_{b_k \in S_0}\Pr\left(b_k = 0\right) p\left(\hat{b}\big|b_k = 0\right)}, \quad k = 0,1,2,\ldots,(v-1)$$

with

$$S_0 = \left\{b\big|b_k = 0\right\}, \qquad S_1 = \left\{b\big|b_k = 1\right\}, \qquad k = 0,1,2,\ldots,(v-1) \,. \tag{21}$$

Having identical a-priori probabilities $\Pr(b_k = 0)$ und $\Pr(b_k = 1)$ for each bit position $k$, Eq. (21) may be rewitten as

$$\Lambda\left(b_k\right) = \ln \frac{\displaystyle\sum_{b_k \in S_1} p\left(\hat{b}\big|b_k = 1\right)}{\displaystyle\sum_{b_k \in S_0} p\left(\hat{b}\big|b_k = 0\right)}, \quad k = 0,1,2,\ldots,(v-1) \,. \tag{22}$$

leaving only the conditional probability density functions $p(\hat{b} \,|b_k = 1)$, $p(\hat{b} \,|b_k = 0)$. Using the AWGN transmission model according to Eq. (4), the conditional probability density functions and, hence, Eq. (22) may be expressed as

$$\Lambda\left(b_k\right) = \ln \frac{\displaystyle\sum_{b_i \in S_1} \exp\left(-\frac{\left(\hat{b} - \mu\left(b_i\big|_{b_k=1}\right)\right)^2}{N_0}\right)}{\displaystyle\sum_{b_i \in S_0} \exp\left(-\frac{\left(\hat{b} - \mu\left(b_i\big|_{b_k=0}\right)\right)^2}{N_0}\right)}, \quad k = 0,1,\ldots,(v-1) \,, \tag{23}$$

wherein the numerator of the quotient corresponds to a first sum of conditional probability density functions representing the probability of a received signal sample $\hat{b}$ given the transmission of a first binary value (e.g. $b_k = 1$) at the $k$-th bit position of transmit symbol $b_i$, and wherein the denominator of the quotient corresponds to a second sum of conditional probability density functions representing the probability of the received signal sample, given the transmission of a second binary value (e.g. $b_k = 0$) at the $k$-th bit position of transmit symbol $b_i$. Using Eqs. (9) to (18), Eq. (23) may be rewritten to

$$\Lambda\left(b_k\right) = \ln \frac{\sum_{\lambda=1}^{\sqrt{M}/2} \exp\left(-\frac{\left(\hat{b}-\mu b_{i_{(k)\lambda}^{,1}}\right)^2}{N_0}\right)}{\sum_{\lambda=1}^{\sqrt{M}/2} \exp\left(-\frac{\left(\hat{b}-\mu b_{i_{(k)\lambda}^{,0}}\right)^2}{N_0}\right)}, \quad k = 0,1,\dots,(\nu-1) . \tag{24}$$

Regarding Eqs. (2) and (24), for a quadrature component of a square $M$-QAM modulated signal, we have the relations: $f(M) = \sqrt{M}/2$, $f(\hat{b}, b_{i_{(k)\lambda}^{,1}}) = -\left(\hat{b}-\mu b_{i_{(k)\lambda}^{,1}}\right)^2 / N_0$ and $f(\hat{b}, b_{i_{(k)\lambda}^{,0}})$ Conventionally, Eq. (24) is approximated by using the following assumption:

$$\ln \sum_{\lambda=1}^{\sqrt{M}/2} \exp\left(-\frac{\left(\hat{b}-\mu b_{i_{(k)\lambda}^{,0}}\right)^2}{N_0}\right) \approx \max\left\{-\frac{\left(\hat{b}-\mu b_{i_{(k)\lambda}^{,0}}\right)^2}{N_0}\right\} = \min\left\{\frac{\left(\hat{b}-\mu b_{i_{(k)\lambda}^{,0}}\right)^2}{N_0}\right\} . \tag{25}$$

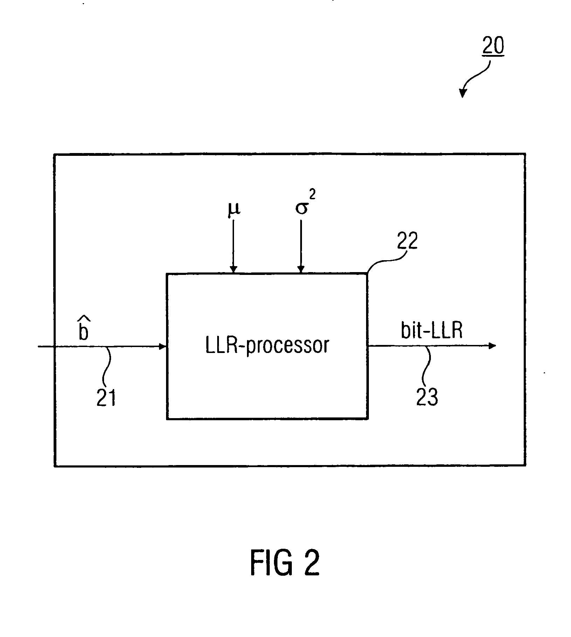

This approximation, however, only yields rather inaccurate results, in particular for low signal-to-noise ratios $E_b/N_0$, wherein $E_b$ denotes the received signal energy per bit and $N_0$ denotes the spectral noise density. To improve the quality of the bitwise LLRs, especially for low signal-to-noise ratios, embodiments of the present invention provide an apparatus for determining probability information related to a received signal sample $\hat{b}$ corresponding to a plurality of bits $b_k$ mapped to a transmit symbol $b$. A schematic block diagram of an inventive apparatus 20 is depicted in Fig. 2.

The apparatus 20 comprises an input 21 for the received signal sample $\hat{b}$. The apparatus 20 further comprises a processor 22 for determining, for each bit position $k$ of the plurality of bits corresponding to the received signal sample $\hat{b}$, a log-likelihood ratio $\Lambda(b_k)$ based on a recursive evaluation or application of the so-called Jacobian logarithm or an approximation thereof. The apparatus 20 also comprises an output 23 outputting the determined bitwise log-likelihood ratios as the probability information.

According to embodiments, the apparatus 20 is used for signal detection within digital communication systems, wherein the transmit symbol $b$ may be chosen from a complex valued symbol alphabet of a higher-order digital modulation scheme chosen from the group of $M$-PSK, $M$-QAM, $M$-FSK, $M$-ASK, wherein $M \geq 4$ denotes a size of the symbol alphabet. In particular, the apparatus 20 may be used for signal detection within digital communication systems, wherein the transmit symbol $b$ may be chosen for a complex valued $M$-ary symbol alphabet, in which different transmit symbols are equally probable, and wherein the plurality of bits are mapped to the complex valued transmit symbol $b$ based on the Gray-code, such that the log-likelihood ratio $\Lambda(b_k)$ of a $k$-th bit position or the bitwise likelihood ratio corresponds to an inphase or quadrature component of the received signal sample $\hat{b}$ and can be determined independently from the log-likelihood ratio of a bit position corresponding to a quadrature/inphase component of the received signal sample $\hat{b}$. Complex valued symbol alphabets fulfilling these constraints are, e.g., symbol alphabets chosen from the group of $M$-PSK or $M$-QAM modulation schemes, wherein $M$ denotes the size of the complex valued symbol alphabet and typically corresponds to $M=2^{2\nu}$, $\nu \in \text{IN}$.

As may be seen from Eq. (24), which is a special case of Eq. (2) for square $M$-QAM, the processor 22 is configured to determine the log-likelihood ratio $\Lambda(b_k)$ of a current $k$-th bit position based on a logarithm, particularly a natural logarithm ln, of a quotient of sums, wherein the numerator of the quotient corresponds to a first sum of conditional probabilities denoting the probability of the received signal sample $\hat{b}$ given the transmission of a first binary value (e.g. $b_k = 1$) at the current bit position $k$, $k = 0,1,\dots,(\nu-1)$, and wherein the denominator of the quotient corresponds to a second sum of conditional probabilities denoting the probability of the received signal sample $\hat{b}$, given the transmission of a second binary value (for example 0) at the current bit position $k$, when the processor 22 is configured to evaluate both sums based on a recursive application of the Jacobian logarithm or an approximation thereof.

The Jacobian logarithm $J(.,.)$ may be expressed according to

$$J(B,C) = \ln\{\exp(B) + \exp(C)\} = \max\{B,C\} + \ln\{1 + \exp\{-|B-C|\}\} \qquad (26)$$

Hence, $\exp(B) + \exp(C) = \exp(J(B,C))$.

Considering three summands in the ln-expression of Eq. (24), the respective Jacobian logarithm may be expressed according to

$$\ln\{\exp(A) + \exp(B) + \exp(C)\} = \ln\{\exp(A) + \exp(J(B,C))\}$$
$$= \max\{A, J(B,C)\} + \ln\{1 + \exp\{-|A - J(B,C)|\}\} \qquad (27)$$

If

$$A_\lambda = -\left(\hat{b} - \mu b_{i_0(k),\lambda}\right)^2 \Big/ N_0, \quad \lambda = 1, 2, \ldots, \frac{\sqrt{M}}{2}, \qquad (28)$$

the denominator, i.e. the second sum, may be determined by a $\left(\sqrt{M}/2 - 1\right)$-fold recursive application of the Jacobian-logarithm, i.e.,

$$\ln\left\{\sum_{\lambda=1}^{\sqrt{M}/2} \exp(A_\lambda)\right\} = \ln\left\{\exp(A_1) + \sum_{\lambda=2}^{\sqrt{M}/2} \exp(A_\lambda)\right\}$$
$$= \ln\left\{\exp(A_1) + \exp\left(A_{2\ldots\sqrt{M}/2}\right)\right\}$$
$$= J\left(A_1, A_{2\ldots\sqrt{M}/2}\right)$$
$$= J\left(A_1, J\left(A_2, A_{3\ldots\sqrt{M}/2}\right)\right) \qquad (29)$$
$$= J\left(A_1, J\left(A_2, J\left(A_3, J\left(A_4, J\left(A_5, J\left(A_6, A_{7\ldots\sqrt{M}/2}\right)\right)\right)\right)\right)\right)$$
$$= J\left(A_1, J\left(A_2, J\left(A_3, J\left(A_4, J\left(A_5, J\left(A_6, \ldots J\left(A_{(\sqrt{M}/2-1)}, A_{\sqrt{M}/2}\right)\right)\right)\right)\right)\right)$$

Likewise, the first sum, i.e., the numerator can be determined according to

$$\ln\left\{\sum_{\lambda=1}^{\sqrt{M}/2}\exp(B_\lambda)\right\} = J\left(B_1,J\left(B_2,J\left(B_3,J\left(B_4,J\left(B_5,J\left(B_6,...J\left(B_{(\sqrt{M}/2-1)},B_{\sqrt{M}/2}\right)\right)\right)\right)\right)\right)\right) \quad (30)$$

with

$$B_\lambda = -\left(\hat{b}-\mu b_{i_{(k)\lambda}}\right)^2 \bigg/ N_0, \quad \lambda = 1,2,...,\frac{\sqrt{M}}{2}. \quad (31)$$

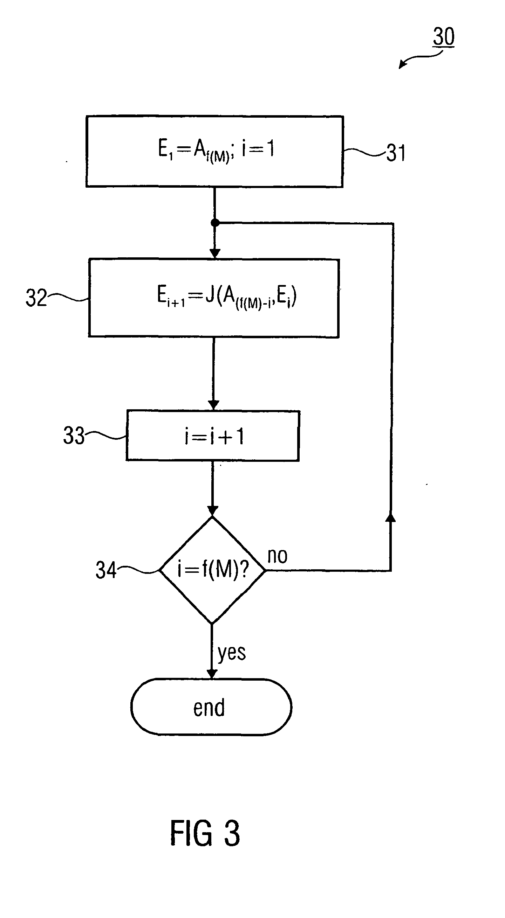

The recursion, or recursive process, for determining the numerator or denominator of Eq. (24) is depicted in the schematic flowchart according to Fig. 3.

The recursion 30 is started by setting an initial value $E_1$ to $A_{f(M)}$ or $B_{f(M)}$, wherein for the I-/Q-components of a square M-QAM modulated signal $f(M) = \sqrt{M}/2$. Also, an iteration counter variable $i$ is initialized to one, i.e. $i = 1$, in step 31. Subsequently, in step 32 a first intermediate result $E_{i+1}$ is determined by applying the Jacobian logarithm according to $J(A_{(f(M)-i)}, E_i)$. After increasing the iteration counter $i$, step 33, and checking whether the end of the recursion 30 has been reached, step 34, the latest intermediate result $E_i$, is used to obtain a subsequent intermediate result $E_{i+1}$, step 32.

Finally, using the results of the recursions according to Eqs. (29) and (30), the log-likelihood ratio for bit position $k$ may recursively be computed according to

$$\Lambda(b_k) = J\left(B_1,J\left(B_2,...J\left(B_{(f(M)-1)},B_{f(M)}\right)\right)\right) - J\left(A_1,J\left(A_2,...J\left(A_{(f(M)-1)},A_{f(M)}\right)\right)\right), \quad (32)$$
$$k = 0,1,...,(\nu-1).$$

For Gray-coded 16-QAM according to Fig. 1c, inphase and quadrature component are separable. Considering only one of the quadrature components, e.g. the I-component, there are two bits per quadrature component which are exemplarily coded according to

| I - branch PAM values | -3 | -1 | +1 | +3 |
|---|---|---|---|---|
| Binary Gray-Code | 00 | 01 | 11 | 10 |

Given the example depicted in Fig. 1c, the log-likelihood ratio of bit $b_0$ may be determined according to

$$\text{LLR} = \Lambda\left(b_0\right) = \ln \frac{p\left(\hat{b}|+1\right) + p\left(\hat{b}|+3\right)}{p\left(\hat{b}|-1\right) + p\left(\hat{b}|-3\right)} = \ln \frac{\exp\left(-\left(\hat{b}-\mu\right)^2 \big/ 2\sigma^2\right) + \exp\left(-\left(\hat{b}-3\mu\right)^2 \big/ 2\sigma^2\right)}{\exp\left(-\left(\hat{b}+\mu\right)^2 \big/ 2\sigma^2\right) + \exp\left(-\left(\hat{b}+3\mu\right)^2 \big/ 2\sigma^2\right)}$$

$$= \frac{2\mu}{\sigma^2}\hat{b} + \ln \frac{1 + \exp\left(-\left(\hat{b}-3\mu\right)^2 \big/ 2\sigma^2 + \left(\hat{b}-\mu\right)^2 \big/ 2\sigma^2\right)}{1 + \exp\left(-\left(\hat{b}+3\mu\right)^2 \big/ 2\sigma^2 + \left(\hat{b}+\mu\right)^2 \big/ 2\sigma^2\right)}$$

$$= \frac{2\mu}{\sigma^2}\hat{b} + \ln \frac{1 + \exp\left(\left(2\mu\hat{b}-4\mu^2\right)\big/\sigma^2\right)}{1 + \exp\left(-\left(2\mu\hat{b}+4\mu^2\right)\big/\sigma^2\right)} = \frac{2\mu}{\sigma^2}\hat{b} + \ln \frac{1 + \exp\left(2\mu\big/\sigma^2\left(\hat{b}-2\mu\right)\right)}{1 + \exp\left(-2\mu\big/\sigma^2\left(\hat{b}+2\mu\right)\right)}. \tag{33}$$

With

$$\hat{b}' = \frac{\hat{b}}{\mu} = b + \frac{n}{\mu}, \tag{34}$$

$$N_0 = 2\sigma^2, \qquad \text{and} \tag{35}$$

$$E_b = \mu^2 \tag{36}$$

Eq. (33) may be, using the inventive recursion, rewritten according to

$$\Lambda\left(b_0\right) = 4\frac{E_b}{N_0}\hat{b}' + \ln \frac{1 + \exp\left(+4\frac{E_b}{N_0}\left(\hat{b}'-2\right)\right)}{1 + \exp\left(-4\frac{E_b}{N_0}\left(\hat{b}'+2\right)\right)}$$

$$= 4\frac{E_b}{N_0}\left[\hat{b}' + \max\left\{0,\left(\hat{b}'-2\right)\right\} - \min\left\{0,\left(\hat{b}'+2\right)\right\}\right] \tag{37}$$

$$+ \ln\left(1 + \exp\left\{-4\frac{E_b}{N_0}\left|\hat{b}'-2\right|\right\}\right) - \ln\left(1 + \exp\left\{-4\frac{E_b}{N_0}\left|\hat{b}'+2\right|\right\}\right).$$

The log-likelihood ratio for bit position $k=1$ may be expressed as

$$\text{LLR} = \Lambda\left(b_1\right) = \ln\frac{p\left(\hat{b}\big|+1\right)+p\left(\hat{b}\big|-1\right)}{p\left(\hat{b}\big|+3\right)+p\left(\hat{b}\big|-3\right)} = \ln\frac{\exp\left(-\left(\hat{b}-\mu\right)^2\big/2\sigma^2\right)+\exp\left(-\left(\hat{b}+\mu\right)^2\big/2\sigma^2\right)}{\exp\left(-\left(\hat{b}-3\mu\right)^2\big/2\sigma^2\right)+\exp\left(-\left(\hat{b}+3\mu\right)^2\big/2\sigma^2\right)}$$

$$= \ln\frac{\exp\left(-\left(\hat{b}-\mu\right)^2\big/2\sigma^2\right)}{\exp\left(-\left(\hat{b}-3\mu\right)^2\big/2\sigma^2\right)}+\ln\frac{1+\exp\left(-\left(\hat{b}+\mu\right)^2\big/2\sigma^2+\left(\hat{b}-\mu\right)^2\big/2\sigma^2\right)}{1+\exp\left(-\left(\hat{b}+3\mu\right)^2\big/2\sigma^2+\left(\hat{b}-3\mu\right)^2\big/2\sigma^2\right)}$$

$$= \frac{2\mu}{\sigma^2}\left(2\mu-\hat{b}\right)+\ln\frac{1+\exp\left(-2\mu\hat{b}\big/\sigma^2\right)}{1+\exp\left(-6\mu\hat{b}\big/\sigma^2\right)}$$

$$= 4\frac{E_b}{N_0}\left(2-\hat{b}'\right)+\ln\frac{1+\exp\left(-4\dfrac{E_b}{N_0}\hat{b}'\right)}{1+\exp\left(-12\dfrac{E_b}{N_0}\hat{b}'\right)}$$

$$= 4\frac{E_b}{N_0}\left(2-\hat{b}'\right)+4\frac{E_b}{N_0}\hat{b}'+\ln\frac{\exp\left(+2\dfrac{E_b}{N_0}\hat{b}'\right)+\exp\left(-2\dfrac{E_b}{N_0}\hat{b}'\right)}{\exp\left(+6\dfrac{E_b}{N_0}\hat{b}'\right)+\exp\left(-6\dfrac{E_b}{N_0}\hat{b}'\right)}$$

$$= 4\frac{E_b}{N_0}\hat{b}'+\left[8\frac{E_b}{N_0}-4\frac{E_b}{N_0}\hat{b}'+\ln\frac{\cosh\left(2\dfrac{E_b}{N_0}\hat{b}'\right)}{\cosh\left(6\dfrac{E_b}{N_0}\hat{b}'\right)}\right]$$

$$(38)$$

which, using the inventive recursive application of the Jacobian logarithm, may be rewritten according to

$$\Lambda\left(b_1\right) = 4\frac{E_b}{N_0}\left(2-\hat{b}'\right)+\ln\frac{1+\exp\left(-4\dfrac{E_b}{N_0}\hat{b}'\right)}{1+\exp\left(-12\dfrac{E_b}{N_0}\hat{b}'\right)}$$

$$= 4\frac{E_b}{N_0}\left[2-\hat{b}'+\min\left\{0,\hat{b}'\right\}-3\min\left\{0,\hat{b}'\right\}\right] \qquad (39)$$

$$+\ln\left\{1+\exp\left\{-4\frac{E_b}{N_0}\left|\hat{b}'\right|\right\}\right\}-\ln\left\{1+\exp\left\{-12\frac{E_b}{N_0}\left|\hat{b}'\right|\right\}\right\}$$

For high signal-to-noise ratios $E_b|N_0$, the conventional approximation

$$\Lambda\left(b_0\right) \approx 4\frac{E_b}{N_0}\left[\hat{b}' + \max\left\{0,\left(\hat{b}'-2\right)\right\} - \min\left\{0,\left(\hat{b}'+2\right)\right\}\right],$$

$$\Lambda\left(b_1\right) \approx 4\frac{E_b}{N_0}\left[2 - \hat{b}' + \min\left\{0,\hat{b}'\right\} - 3\min\left\{0,\hat{b}'\right\}\right]. \tag{40}$$

may be applied. According to embodiments of the present invention, the processor 22, hence, is configured to apply the recursive application of the Jacobian-logarithm for determining the probability information in case of a low signal-to-noise ratio (SNR) of the received signal. For the present invention the SNR is considered to be low if it is lower than an SNR threshold value $\gamma_{th}$ which is associated with a particular uncoded bit error ratio threshold $P_{e,th}$. A typical value of the uncoded bit error ratio threshold $P_{e,th}$ may be regarded as $10^{-2}$. I.e., according to an embodiment, the processor 22 is configured to apply the recursive application of the Jacobian-logarithm for determining the probability information in case a signal-to-noise ratio is lower than a signal-to-noise ratio threshold value $\gamma_{th}$ which is associated with an uncoded bit error ratio threshold of $10^{-3} \leq P_{e,th} \leq 10^{-1}$, particularly $P_{e,th} = 10^{-2}$. This relation is schematically illustrated in Fig. 6. Uncoded bit error ratio in this context means a bit error ratio or rate of uncoded transmitted bits, i.e. the bit error rate (BER) at the receiver prior to channel decoding. As will be seen, the apparatus 20 or the processor 22 comprised therein is, according to embodiments, adapted to estimate the SNR. From this SNR estimation, together with an underlying communications channel model, the related uncoded bit error ratio may also be determined. Hence, according to embodiments, it is possible to switch on/off the recursive application of the Jacobian-logarithm in dependence of the estimated SNR and/or BER and the threshold values $\gamma_{th}$ and/or $P_{e,th}$.

For Gray-coded 64-QAM there are eight possible transmit symbols per I/Q-branch, which may be Gray-coded with the following binary values.

| I - branch werte | -7 | -5 | -3 | -1 | +1 | +3 | +5 | +7 |
|---|---|---|---|---|---|---|---|---|
| Binäre Gray-Code | 000 | 001 | 011 | 010 | 110 | 111 | 101 | 100 |

Hence, for Gray-coded 64-QAM there are three bits per I/Q-branch. The log-likelihood ratio for bit $b_0$ may be determined according to

$$\Lambda\left(b_0\right) = 4\frac{E_b}{N_0}\hat{b}' + \ln\frac{1 + \exp\left(+4\frac{E_b}{N_0}\left(\hat{b}'-4\right)\right) + \exp\left(+8\frac{E_b}{N_0}\left(\hat{b}'-3\right)\right) + \exp\left(+12\frac{E_b}{N_0}\left(\hat{b}'-4\right)\right)}{1 + \exp\left(-4\frac{E_b}{N_0}\left(\hat{b}'+2\right)\right) + \exp\left(-8\frac{E_b}{N_0}\left(\hat{b}'+3\right)\right) + \exp\left(-12\frac{E_b}{N_0}\left(\hat{b}'+4\right)\right)} \tag{41}$$

The log-likelihood ratio for bit $b_1$ may be computed according to

$$\text{LLR} = \Lambda\left(b_1\right) = \ln \frac{p\left(\hat{b}\big|+1\right)+p\left(\hat{b}\big|+3\right)+p\left(\hat{b}\big|-3\right)+p\left(\hat{b}\big|-1\right)}{p\left(\hat{b}\big|+5\right)+p\left(\hat{b}\big|+7\right)+p\left(\hat{b}\big|-7\right)+p\left(\hat{b}\big|-5\right)}$$

$$= \ln \frac{\exp\left(-\left(\hat{b}-\mu\right)^2/2\sigma^2\right)+\exp\left(-\left(\hat{b}-3\mu\right)^2/2\sigma^2\right)+\exp\left(-\left(\hat{b}+3\mu\right)^2/2\sigma^2\right)+\exp\left(-\left(\hat{b}+1\mu\right)^2/2\sigma^2\right)}{\exp\left(-\left(\hat{b}-5\mu\right)^2/2\sigma^2\right)+\exp\left(-\left(\hat{b}-7\mu\right)^2/2\sigma^2\right)+\exp\left(-\left(\hat{b}+7\mu\right)^2/2\sigma^2\right)+\exp\left(-\left(\hat{b}+5\mu\right)^2/2\sigma^2\right)}$$

$$= \ln \frac{\exp\left(-\left(\hat{b}-\mu\right)^2/2\sigma^2\right)}{\exp\left(-\left(\hat{b}-5\mu\right)^2/2\sigma^2\right)}$$

$$+ \ln \frac{1+\exp\left(-\dfrac{\left(\hat{b}-3\mu\right)^2}{2\sigma^2}+\dfrac{\left(\hat{b}-\mu\right)^2}{2\sigma^2}\right)+\exp\left(-\dfrac{\left(\hat{b}+3\mu\right)^2}{2\sigma^2}+\dfrac{\left(\hat{b}-\mu\right)^2}{2\sigma^2}\right)+\exp\left(-\dfrac{\left(\hat{b}+\mu\right)^2}{2\sigma^2}+\dfrac{\left(\hat{b}-\mu\right)^2}{2\sigma^2}\right)}{1+\exp\left(-\dfrac{\left(\hat{b}-7\mu\right)^2}{2\sigma^2}+\dfrac{\left(\hat{b}-5\mu\right)^2}{2\sigma^2}\right)+\exp\left(-\dfrac{\left(\hat{b}+7\mu\right)^2}{2\sigma^2}+\dfrac{\left(\hat{b}-5\mu\right)^2}{2\sigma^2}\right)+\exp\left(-\dfrac{\left(\hat{b}+5\mu\right)^2}{2\sigma^2}+\dfrac{\left(\hat{b}-5\mu\right)^2}{2\sigma^2}\right)}$$

$$= \frac{4\mu}{\sigma^2}\left(3\mu-\hat{b}\right)+\ln\frac{1+\exp\left(\dfrac{2\left(\mu\hat{b}-2\mu^2\right)}{\sigma^2}\right)+\exp\left(-\dfrac{4\left(\mu\hat{b}+\mu^2\right)}{\sigma^2}\right)+\exp\left(-\dfrac{2\hat{b}\mu}{\sigma^2}\right)}{1+\exp\left(\dfrac{2\left(\mu\hat{b}-6\mu^2\right)}{\sigma^2}\right)+\exp\left(-\dfrac{12\left(\mu\hat{b}+\mu^2\right)}{\sigma^2}\right)+\exp\left(-\dfrac{10\hat{b}\mu}{\sigma^2}\right)}$$

$$= \frac{2\mu}{\sigma^2}2\left(3\mu-\hat{b}\right)+\ln\frac{1+\exp\left(\dfrac{2\mu}{\sigma^2}\left(\hat{b}-2\mu\right)\right)+\exp\left(-\dfrac{2\mu}{\sigma^2}2\left(\hat{b}+\mu\right)\right)+\exp\left(-\dfrac{2\mu}{\sigma^2}\hat{b}\right)}{1+\exp\left(\dfrac{2\mu}{\sigma^2}\left(\hat{b}-6\mu\right)\right)+\exp\left(-\dfrac{2\mu}{\sigma^2}6\left(\hat{b}+\mu\right)\right)+\exp\left(-\dfrac{2\mu}{\sigma^2}5\hat{b}\right)}$$

$$(42)$$

The log-likelihood ratio for bit $b_2$ may be determined according to

$$\text{LLR} = \Lambda(b_2) = \ln \frac{p(\hat{b}|-5) + p(\hat{b}|-3) + p(\hat{b}|+3) + p(\hat{b}|+5)}{p(\hat{b}|-7) + p(\hat{b}|-1) + p(\hat{b}|+1) + p(\hat{b}|+7)}$$

$$= \ln \frac{\exp\left(-(\hat{b}+5\mu)^2/2\sigma^2\right) + \exp\left(-(\hat{b}+3\mu)^2/2\sigma^2\right) + \exp\left(-(\hat{b}-3\mu)^2/2\sigma^2\right) + \exp\left(-(\hat{b}-5\mu)^2/2\sigma^2\right)}{\exp\left(-(\hat{b}+7\mu)^2/2\sigma^2\right) + \exp\left(-(\hat{b}+\mu)^2/2\sigma^2\right) + \exp\left(-(\hat{b}-\mu)^2/2\sigma^2\right) + \exp\left(-(\hat{b}-7\mu)^2/2\sigma^2\right)}$$

$$= \ln \frac{\exp\left(-(\hat{b}-3\mu)^2/2\sigma^2\right)}{\exp\left(-(\hat{b}-\mu)^2/2\sigma^2\right)}$$

$$+ \ln \frac{1 + \exp\left(-\frac{(\hat{b}+5\mu)^2}{2\sigma^2} + \frac{(\hat{b}-3\mu)^2}{2\sigma^2}\right) + \exp\left(-\frac{(\hat{b}+3\mu)^2}{2\sigma^2} + \frac{(\hat{b}-3\mu)^2}{2\sigma^2}\right) + \exp\left(-\frac{(\hat{b}-5\mu)^2}{2\sigma^2} + \frac{(\hat{b}-3\mu)^2}{2\sigma^2}\right)}{1 + \exp\left(-\frac{(\hat{b}+7\mu)^2}{2\sigma^2} + \frac{(\hat{b}-\mu)^2}{2\sigma^2}\right) + \exp\left(-\frac{(\hat{b}+\mu)^2}{2\sigma^2} + \frac{(\hat{b}-\mu)^2}{2\sigma^2}\right) + \exp\left(-\frac{(\hat{b}-7\mu)^2}{2\sigma^2} + \frac{(\hat{b}-\mu)^2}{2\sigma^2}\right)}$$

$$= \frac{2\mu}{\sigma^2}(\hat{b}-2\mu) + \ln \frac{1 + \exp\left(-\frac{8(\mu\hat{b}+\mu^2)}{\sigma^2}\right) + \exp\left(-\frac{6\mu\hat{b}}{\sigma^2}\right) + \exp\left(\frac{2\mu}{\sigma^2}(\hat{b}-4\mu)\right)}{1 + \exp\left(-\frac{8\mu}{\sigma^2}(\hat{b}+3\mu)\right) + \exp\left(-\frac{2\mu\hat{b}}{\sigma^2}\right) + \exp\left(\frac{6\mu}{\sigma^2}(\hat{b}-4\mu)\right)}$$

$$= \frac{2\mu}{\sigma^2}(\hat{b}-2\mu) + \ln \frac{1 + \exp\left(-\frac{2\mu}{\sigma^2}4(\hat{b}+\mu)\right) + \exp\left(\frac{2\mu}{\sigma^2}(\hat{b}-4\mu)\right) + \exp\left(-\frac{2\mu}{\sigma^2}3\hat{b}\right)}{1 + \exp\left(-\frac{2\mu}{\sigma^2}4(\hat{b}+3\mu)\right) + \exp\left(\frac{2\mu}{\sigma^2}3(\hat{b}-4\mu)\right) + \exp\left(-\frac{2\mu}{\sigma^2}\hat{b}\right)}$$

$$\tag{43}$$

Using the inventive recursive application of the Jacobian logarithm, the respective log-likelihood ratios of Eqs. (41), (42), (43) may be expressed according to

$$\Lambda(b_0) = 4\frac{E_b}{N_0}\hat{b}' + J\left(0, J\left(4\frac{E_b}{N_0}(\hat{b}'-4), J\left(8\frac{E_b}{N_0}(\hat{b}'-3), 12\frac{E_b}{N_0}(\hat{b}'-4)\right)\right)\right)$$
$$- J\left(0, J\left(-4\frac{E_b}{N_0}(\hat{b}'+2), J\left(-8\frac{E_b}{N_0}(\hat{b}'+3), -12\frac{E_b}{N_0}(\hat{b}'+4)\right)\right)\right), \tag{44}$$

$$\Lambda(b_1) = 8\frac{E_b}{N_0}(3-\hat{b}') + J\left(0, J\left(4\frac{E_b}{N_0}(\hat{b}'-2), J\left(-8\frac{E_b}{N_0}(\hat{b}'+1), -4\frac{E_b}{N_0}\hat{b}'\right)\right)\right)$$
$$- J\left(0, J\left(4\frac{E_b}{N_0}(\hat{b}'-6), J\left(-24\frac{E_b}{N_0}(\hat{b}'+1), -20\frac{E_b}{N_0}\hat{b}'\right)\right)\right), \tag{45}$$

and

$$\Lambda(b_2) = 4\frac{E_b}{N_0}(\hat{b}'-2) + J\left(0, J\left(-16\frac{E_b}{N_0}(\hat{b}'+1), J\left(4\frac{E_b}{N_0}(\hat{b}'-4), -12\frac{E_b}{N_0}\hat{b}'\right)\right)\right)$$
$$-J\left(0, J\left(-16\frac{E_b}{N_0}(\hat{b}'+3), J\left(12\frac{E_b}{N_0}(\hat{b}'-4), -4\frac{E_b}{N_0}\hat{b}'\right)\right)\right) \quad (46)$$

For a large signal-to-noise ratio $E_b/N_0$ the well-known approximation according to

$$\Lambda(b_0) \approx 4\frac{E_b}{N_0}\left[\hat{b}' + \max\left(0,(\hat{b}'-4), 2(\hat{b}'-3), 3(\hat{b}'-4)\right) - \min\left(0,(\hat{b}'+2), 2(\hat{b}'+3), 3(\hat{b}'+4)\right)\right],$$

$$\Lambda(b_1) \approx 4\frac{E_b}{N_0}\left[2(3-\hat{b}') + \max\left(0,(\hat{b}'-2), -2(\hat{b}'+1), -\hat{b}'\right) - \max\left(0,(\hat{b}'-6), -6(\hat{b}'+1), -5\hat{b}'\right)\right], \quad (47)$$

$$\Lambda(b_2) \approx 4\frac{E_b}{N_0}\left[(\hat{b}'-2) + \max\left(0,-4(\hat{b}'+1), (\hat{b}'-4), -3\hat{b}'\right) - \max\left(0,-4(\hat{b}'+3), 3(\hat{b}'-4), -\hat{b}'\right)\right].$$

may be used.

Embodiments of the present invention may not only be employed for square QAM modulation schemes, i.e. $M = 2^{2\nu}$. Instead, also bitwise LLRs for rectangular QAM, like, e.g. 32-QAM modulation schemes, may be computed using the inventive recursion.

Fig. le exemplarily shows a 32-Cross-QAM constellation according to 3GPP (3rd Generation Partnership Project) TR 45.912. There is no perfect Gray-Coding/Mapping for 32-QAM according to Fig. le. I and Q component are dependent on each other and may therefore, in contrast to square QAM, not be treated separately from each other. The constellation points for 32-QAM result according to

$$\begin{cases} -5 + 2(k-1) + j(-5+2(l-1)), & k = 1,2,3,...,6; \quad l = 2,3,...,5 \\ -5 + 2(k-1) + j(-5+2(l-1)), & k = 2,3,...,5; \quad l = 1,6 \end{cases} \quad (48)$$

and are identified by the indices $k$ and $l$.

With the transmission model according to Eq. (4), the noise probability density function in the 32-QAM case may be expressed according to

$$p_n = \frac{1}{2\pi\sqrt{\sigma_I^2 \sigma_Q^2 (1-\rho^2)}} \exp\left(-\frac{1}{2(1-\rho^2)}\left(\frac{(n_I-\mu_I)^2}{\sigma_I^2} + \frac{(n_Q-\mu_Q)^2}{\sigma_Q^2} - \frac{2\rho(n_I-\mu_I)(n_Q-\mu_Q)}{\sigma_I \sigma_Q}\right)\right). \quad (49)$$

The noise is zero-mean in I and Q, uncorrelated and has equal power, hence, $\rho = 0$, $\mu_I = \mu_Q = 0$, $\sigma_I = \sigma_Q = \sigma$. Eq. (49) may be rewritten to

$$p_n = \frac{1}{2\pi\sigma^2}\exp\left(-\frac{|n_I + jn_Q|^2}{2\sigma^2}\right) = \frac{1}{2\pi\sigma^2}\exp\left(-\frac{|n|^2}{2\sigma^2}\right)$$

$$= \frac{1}{\sqrt{2\pi\sigma^2}}\exp\left(-\frac{n_I^2}{2\sigma^2}\right)\cdot\frac{1}{\sqrt{2\pi\sigma^2}}\exp\left(-\frac{n_Q^2}{2\sigma^2}\right) \tag{50}$$

and

$$p_{n_I} = \frac{1}{\sqrt{2\pi\sigma^2}}\exp\left(-\frac{n_I^2}{2\sigma^2}\right), \quad p_{n_Q} = \frac{1}{\sqrt{2\pi\sigma^2}}\exp\left(-\frac{n_Q^2}{2\sigma^2}\right). \tag{51}$$

With

$$\hat{b}' = \frac{\hat{b}}{\mu} = b + \frac{n}{\mu}, \tag{52}$$

and $N_0 = 2\sigma^2$, $E_b = \mu^2$, the noise probability density function yields

$$p_n = \frac{1}{\pi N_0}\exp\left(-\frac{E_b}{N_0}|\hat{b}' - b|^2\right). \tag{53}$$

According to Eq. (51)

$$p_{n_I} = \frac{1}{\sqrt{\pi N_0}}\exp\left(-\frac{E_b}{N_0}\text{Re}\{\hat{b}' - b\}^2\right), \quad p_{n_Q} = \frac{1}{\sqrt{\pi N_0}}\exp\left(-\frac{E_b}{N_0}\text{Im}\{\hat{b}' - b\}^2\right). \tag{54}$$

With $\text{Re}\{\hat{b}'\} = \hat{b}'_I$ and $\text{Im}\{\hat{b}'\} = \hat{b}'_Q$ Eq. (54) yields

$$p_{n_I} = \frac{1}{\sqrt{\pi N_0}}\exp\left(-\frac{E_b}{N_0}(\hat{b}'_I - \text{Re}\{b\})^2\right), \quad p_{n_Q} = \frac{1}{\sqrt{\pi N_0}}\exp\left(-\frac{E_b}{N_0}(\hat{b}'_Q - \text{Im}\{b\})^2\right). \tag{55}$$

In the following, the LLR computation for bits $b_0$ and $b_3$ shall be explained. The respective decision regions are illustrated in Fig. 1f. The LLR computation for bits $b_0$ and $b_3$ may be simplified starting from a PAM-constellation with the following a-priori probabilities:

| PAM value x | -5 | -3 | -1 | 1 | 3 | 5 |
|---|---|---|---|---|---|---|
| Bit | 0 | 0 | 0 | 1 | 1 | 1 |
| $\Pr(b_I = x)$ | $\dfrac{2}{16}$ | $\dfrac{3}{16}$ | $\dfrac{3}{16}$ | $\dfrac{3}{16}$ | $\dfrac{3}{16}$ | $\dfrac{2}{16}$ |

$$\Lambda(b_0) = \ln \frac{\sum_{b_0 \in S_1} \Pr(b_0 = 1) p_I(\hat{b}|b_0 = 1)}{\sum_{b_0 \in S_0} \Pr(b_0 = 0) p_I(\hat{b}|b_0 = 0)}$$

$$= \ln \frac{2\exp\left(-\frac{E_b}{N_0}(\hat{b}_I' - 5)^2\right) + 3\exp\left(-\frac{E_b}{N_0}(\hat{b}_I' - 3)^2\right) + 3\exp\left(-\frac{E_b}{N_0}(\hat{b}_I' - 1)^2\right)}{2\exp\left(-\frac{E_b}{N_0}(\hat{b}_I' + 5)^2\right) + 3\exp\left(-\frac{E_b}{N_0}(\hat{b}_I' + 3)^2\right) + 3\exp\left(-\frac{E_b}{N_0}(\hat{b}_I' + 1)^2\right)}$$

$$= \ln \frac{\exp\left(\ln 2 - \frac{E_b}{N_0}(\hat{b}_I' - 5)^2\right) + \exp\left(\ln 3 - \frac{E_b}{N_0}(\hat{b}_I' - 3)^2\right) + \exp\left(\ln 3 - \frac{E_b}{N_0}(\hat{b}_I' - 1)^2\right)}{\exp\left(\ln 2 - \frac{E_b}{N_0}(\hat{b}_I' + 5)^2\right) + \exp\left(\ln 3 - \frac{E_b}{N_0}(\hat{b}_I' + 3)^2\right) + \exp\left(\ln 3 - \frac{E_b}{N_0}(\hat{b}_I' + 1)^2\right)}$$

$$(56)$$

Eq. (56) may also be recursively solved according to Eqs. (2), (27), wherein the Jacobian logarithm may be approximated as has been explained already before. The same holds for

$$\Lambda(b_3) = \ln \frac{\sum_{b_3 \in S_1} \Pr(b_3 = 1) p_Q(\hat{b} | b_3 = 1)}{\sum_{b_3 \in S_0} \Pr(b_3 = 0) p_Q(\hat{b} | b_3 = 0)}$$

$$= \ln \frac{2\exp\left(-\frac{E_b}{N_0}(\hat{b}_Q' - 5)^2\right) + 3\exp\left(-\frac{E_b}{N_0}(\hat{b}_Q' - 3)^2\right) + 3\exp\left(-\frac{E_b}{N_0}(\hat{b}_Q' - 1)^2\right)}{2\exp\left(-\frac{E_b}{N_0}(\hat{b}_Q' + 5)^2\right) + 3\exp\left(-\frac{E_b}{N_0}(\hat{b}_Q' + 3)^2\right) + 3\exp\left(-\frac{E_b}{N_0}(\hat{b}_Q' + 1)^2\right)}$$

$$= \ln \frac{\exp\left(\ln 2 - \frac{E_b}{N_0}(\hat{b}_Q' - 5)^2\right) + \exp\left(\ln 3 - \frac{E_b}{N_0}(\hat{b}_Q' - 3)^2\right) + \exp\left(\ln 3 - \frac{E_b}{N_0}(\hat{b}_Q' - 1)^2\right)}{\exp\left(\ln 2 - \frac{E_b}{N_0}(\hat{b}_Q' + 5)^2\right) + \exp\left(\ln 3 - \frac{E_b}{N_0}(\hat{b}_Q' + 3)^2\right) + \exp\left(\ln 3 - \frac{E_b}{N_0}(\hat{b}_Q' + 1)^2\right)}$$

$$\left(= 4\frac{E_b}{N_0}\hat{b}_Q' + \ln \frac{3 + 2\exp\left(8\frac{E_b}{N_0}(\hat{b}_Q' - 3)\right) + 3\exp\left(4\frac{E_b}{N_0}(\hat{b}_Q' - 2)\right)}{3 + 2\exp\left(-8\frac{E_b}{N_0}(\hat{b}_Q' + 3)\right) + 3\exp\left(-4\frac{E_b}{N_0}(\hat{b}_Q' + 2)\right)}\right).$$

$$(57)$$

The decision region for bit $b_1$ is illustrated in Fig. 1g. With

$$f_e(x) = \exp\left(-\frac{E_b}{N_0}(x)^2\right) \text{ and } f_{e1}(x) = \exp\left(-\frac{E_b}{N_0}x\right), \tag{58}$$

the LLR for bit $b_1$ may be computed according to

$$\Lambda(b_1) = \ln \frac{\sum_{b_1 \in S_1} \Pr(b_1 = 1) p(\hat{b}|b_1 = 1)}{\sum_{b_1 \in S_0} \Pr(b_1 = 0) p(\hat{b}|b_1 = 0)}$$

$$= \ln \frac{\left(\sum_{i=1}^{4} f_e\left(\hat{b}_1' - (2i-5)\right)\right)\left(\sum_{i=1}^{4} f_e\left(\hat{b}_Q' - (2i-5)\right)\right)}{\left(\sum_{i=1}^{2} f_e\left(\hat{b}_1' - 5(2i-3)\right)\right)\left(\sum_{i=1}^{4} f_e\left(\hat{b}_Q' - (2i-5)\right)\right) + \left(\sum_{i=1}^{4} f_e\left(\hat{b}_1' - (2i-5)\right)\right)\left(\sum_{i=1}^{2} f_e\left(\hat{b}_Q' - 5(2i-3)\right)\right)}$$

$$= \ln \frac{\left(f_{e1}\left(8(\hat{b}_1'+1)\right)+f_{e1}\left(4\hat{b}_1'\right)+f_{e1}\left(-4(\hat{b}_1'-2)\right)+1\right)\left(f_{e1}\left(8(\hat{b}_Q'+1)\right)+f_{e1}\left(4\hat{b}_Q'\right)+f_{e1}\left(-4(\hat{b}_Q'-2)\right)+1\right)}{\begin{bmatrix}\left(f_{e1}\left(12(\hat{b}_1'+2)\right)+f_{e1}\left(-8(\hat{b}_1'-3)\right)\right)\left(f_{e1}\left(8(\hat{b}_Q'+1)\right)+f_{e1}\left(4\hat{b}_Q'\right)+f_{e1}\left(-4(\hat{b}_Q'-2)\right)+1\right) \\ +\left(f_{e1}\left(8(\hat{b}_1'+1)\right)+f_{e1}\left(4\hat{b}_1'\right)+f_{e1}\left(-4(\hat{b}_1'-2)\right)+1\right)\left(f_{e1}\left(12(\hat{b}_Q'+2)\right)+f_{e1}\left(-8(\hat{b}_Q'-3)\right)\right)\end{bmatrix}}$$

$$= 4\frac{E_b}{N_0}\left(\hat{b}_1' + \hat{b}_Q'\right)$$

$$+ \ln \frac{\left(f_{e1}\left(8(\hat{b}_1'+1)\right)+f_{e1}\left(4\hat{b}_1'\right)+f_{e1}\left(-4(\hat{b}_1'-2)\right)+1\right)\left(f_{e1}\left(8(\hat{b}_Q'+1)\right)+f_{e1}\left(4\hat{b}_Q'\right)+f_{e1}\left(-4(\hat{b}_Q'-2)\right)+1\right)}{\begin{bmatrix}\left(f_{e1}\left(8(\hat{b}_1'+3)\right)+f_{e1}\left(-12(\hat{b}_1'-2)\right)\right)\left(f_{e1}\left(4(\hat{b}_Q'+2)\right)+1+f_{e1}\left(-4\hat{b}_Q'\right)+f_{e1}\left(-8(\hat{b}_Q'-1)\right)\right) \\ +\left(f_{e1}\left(4(\hat{b}_1'+2)\right)+1+f_{e1}\left(-4\hat{b}_1'\right)+f_{e1}\left(-8(\hat{b}_1'-1)\right)\right)\left(f_{e1}\left(8(\hat{b}_Q'+3)\right)+f_{e1}\left(-12(\hat{b}_Q'-2)\right)\right)\end{bmatrix}}$$

(59)

The decision region for bit $b_4$ is illustrated in Fig. 1h. With Eq. (58) the LLR for bit $b_4$ may be computed according to

$$\Lambda(b_4) = \ln \frac{\sum_{b_4 \in S_1} \Pr(b_4 = 1) p(\hat{b}|b_4 = 1)}{\sum_{b_4 \in S_0} \Pr(b_4 = 0) p(\hat{b}|b_4 = 0)}$$

$$= \ln \frac{\left(\sum_{i=1}^{6} f_e\left(\hat{b}_I' - (2i-7)\right)\right)\left(\sum_{i=1}^{2} f_e\left(\hat{b}_Q' - (2i-3)\right)\right) + \left(\sum_{i=1}^{2} f_e\left(\hat{b}_I' - (2i-3)\right)\right)\left(\sum_{i=1}^{2} f_e\left(\hat{b}_Q' - 5(2i-3)\right)\right)}{\left(\sum_{i=1}^{6} f_e\left(\hat{b}_I' - (2i-7)\right)\right)\left(\sum_{i=1}^{2} f_e\left(\hat{b}_Q' - 3(2i-3)\right)\right) + \left(\sum_{i=1}^{2} f_e\left(\hat{b}_I' - 3(2i-3)\right)\right)\left(\sum_{i=1}^{2} f_e\left(\hat{b}_Q' - 5(2i-3)\right)\right)}$$

$$= \ln \frac{\left[\begin{array}{l} \left(f_{e1}\left(12(\hat{b}_I' + 2)\right) + f_{e1}\left(8(\hat{b}_I' + 1)\right) + f_{e1}\left(4\hat{b}_I'\right) + 1 + f_{e1}\left(-4(\hat{b}_I' - 2)\right) + f_{e1}\left(-8(\hat{b}_I' - 3)\right)\right) \\ \cdot \left(f_{e1}\left(4\hat{b}_Q'\right) + 1\right) + \left(f_{e1}\left(4\hat{b}_I'\right) + 1\right)\left(f_{e1}\left(12(\hat{b}_Q' + 2)\right) + f_{e1}\left(-8(\hat{b}_Q' - 3)\right)\right) \end{array}\right]}{\left\{\begin{array}{l} \left[\left(f_{e1}\left(12(\hat{b}_I' + 2)\right) + f_{e1}\left(8(\hat{b}_I' + 1)\right) + f_{e1}\left(4\hat{b}_I'\right) + 1 + f_{e1}\left(-4(\hat{b}_I' - 2)\right) + f_{e1}\left(-8(\hat{b}_I' - 3)\right)\right)\right] \\ \cdot \left(f_{e1}\left(8(\hat{b}_Q' + 1)\right) + f_{e1}\left(-4(\hat{b}_Q' - 2)\right)\right) \\ + \left(f_{e1}\left(8(\hat{b}_I' + 1)\right) + f_{e1}\left(-4(\hat{b}_I' - 2)\right)\right)\left(f_{e1}\left(12(\hat{b}_Q' + 2)\right) + f_{e1}\left(-8(\hat{b}_Q' - 3)\right)\right) \end{array}\right\}}$$

$$= 4\frac{E_b}{N_0}\left(\hat{b}_I' + \hat{b}_Q'\right)$$

$$+ \ln \frac{\left[\begin{array}{l} \left(f_{e1}\left(12(\hat{b}_I' + 2)\right) + f_{e1}\left(8(\hat{b}_I' + 1)\right) + f_{e1}\left(4\hat{b}_I'\right) + 1 + f_{e1}\left(-4(\hat{b}_I' - 2)\right) + f_{e1}\left(-8(\hat{b}_I' - 3)\right)\right) \\ \cdot \left(f_{e1}\left(4\hat{b}_Q'\right) + 1\right) + \left(f_{e1}\left(4\hat{b}_I'\right) + 1\right)\left(f_{e1}\left(12(\hat{b}_Q' + 2)\right) + f_{e1}\left(-8(\hat{b}_Q' - 3)\right)\right) \end{array}\right]}{\left\{\begin{array}{l} \left[\left(f_{e1}\left(8(\hat{b}_I' + 3)\right) + f_{e1}\left(4(\hat{b}_I' + 2)\right) + 1 + f_{e1}\left(-4\hat{b}_I'\right) + f_{e1}\left(-8(\hat{b}_I' - 1)\right) + f_{e1}\left(-12(\hat{b}_I' - 2)\right)\right)\right] \\ \cdot \left(f_{e1}\left(4(\hat{b}_Q' + 2)\right) + f_{e1}\left(-8(\hat{b}_Q' - 1)\right)\right) \\ + \left(f_{e1}\left(4(\hat{b}_I' + 2)\right) + f_{e1}\left(-8(\hat{b}_I' - 1)\right)\right)\left(f_{e1}\left(8(\hat{b}_Q' + 3)\right) + f_{e1}\left(-12(\hat{b}_Q' - 2)\right)\right) \end{array}\right\}}$$

(60)

The decision region for bit $b_2$ of the 32-QAM is illustrated in Fig. 1j. With Eq. (58), the LLR for bit $b_2$ may be computed according to

$$\Lambda(b_3) = \ln \frac{\sum_{b_3 \in S_1} \Pr(b_3 = 1) p(\hat{b}|b_3 = 1)}{\sum_{b_3 \in S_0} \Pr(b_3 = 0) p(\hat{b}|b_3 = 0)}$$

$$= \ln \frac{\left(\sum_{i=1}^{2} f_e\left(\hat{b}_I' - (2i-7)\right) + \sum_{i=1}^{2} f_e\left(\hat{b}_I' + (2i-7)\right)\right)\left(\sum_{i=1}^{4} f_e\left(\hat{b}_Q' - (2i-5)\right)\right)}{\left(\sum_{i=1}^{2} f_e\left(\hat{b}_I' - (2i-3)\right)\right)\left(\sum_{i=1}^{6} f_e\left(\hat{b}_Q' - (2i-7)\right)\right) + \left(\sum_{i=1}^{2} f_e\left(\hat{b}_I' - 3(2i-3)\right)\right)\left(\sum_{i=1}^{2} f_e\left(\hat{b}_Q' - 5(2i-3)\right)\right)}$$

$$= \ln \frac{\left\{ \begin{array}{l} \left(f_{el}\left(12(\hat{b}_I' + 2)\right) + f_{el}\left(8(\hat{b}_I' + 1)\right) + f_{el}\left(-4(\hat{b}_I' - 2)\right) + f_{el}\left(-8(\hat{b}_I' - 3)\right)\right) \\ \cdot \left(f_{el}\left(8(\hat{b}_Q' + 1)\right) + f_{el}\left(4\hat{b}_Q'\right) + 1 + f_{el}\left(-4(\hat{b}_Q' - 2)\right)\right) \end{array} \right\}}{\left\{ \begin{array}{l} \left(f_{el}\left(4\hat{b}_I'\right) + 1\right) \\ \cdot \left(f_{el}\left(12(\hat{b}_Q' + 2)\right) + f_{el}\left(8(\hat{b}_Q' + 1)\right) + f_{el}\left(4\hat{b}_Q'\right) + 1 + f_{el}\left(-4(\hat{b}_Q' - 2)\right) + f_{el}\left(-8(\hat{b}_Q' - 3)\right)\right) \\ + \left(f_{el}\left(8(\hat{b}_I' + 1)\right) + f_{el}\left(-4(\hat{b}_I' - 2)\right)\right)\left(f_{el}\left(12(\hat{b}_Q' + 2)\right) + f_{el}\left(-8(\hat{b}_Q' - 3)\right)\right) \end{array} \right\}}$$

$$= 4\frac{E_b}{N_0}\left(\hat{b}_I' + \hat{b}_Q'\right)$$

$$+ \ln \frac{\left\{ \begin{array}{l} \left(f_{el}\left(12(\hat{b}_I' + 2)\right) + f_{el}\left(8(\hat{b}_I' + 1)\right) + f_{el}\left(-4(\hat{b}_I' - 2)\right) + f_{el}\left(-8(\hat{b}_I' - 3)\right)\right) \\ \cdot \left(f_{el}\left(8(\hat{b}_Q' + 1)\right) + f_{el}\left(4\hat{b}_Q'\right) + 1 + f_{el}\left(-4(\hat{b}_Q' - 2)\right)\right) \end{array} \right\}}{\left\{ \begin{array}{l} 1 + \left(f_{el}\left(-4\hat{b}_I'\right)\right) \\ \cdot \left(f_{el}\left(8(\hat{b}_Q' + 3)\right) + f_{el}\left(4(\hat{b}_Q' + 2)\right) + 1 + f_{el}\left(-4\hat{b}_Q'\right) + f_{el}\left(-8(\hat{b}_Q' - 1)\right) + f_{el}\left(-12(\hat{b}_Q' - 2)\right)\right) \\ + \left(f_{el}\left(4(\hat{b}_I' + 2)\right) + f_{el}\left(-8(\hat{b}_I' - 1)\right)\right)\left(f_{el}\left(8(\hat{b}_Q' + 3)\right) + f_{el}\left(-12(\hat{b}_Q' - 2)\right)\right) \end{array} \right\}}$$

$$(61)$$

Also, Eqs. (59), (60) and (61) may be converted to a natural logarithm of a quotient of a first sum of first exponential functions in the numerator, and a second sum of second exponential functions in the denominator, respectively, according to Eq. (2). Hence, they may also be determined with the inventive recursion.

Embodiments of the present invention may not only be employed for QAM modulation schemes. Instead, also bitwise LLRs for $M$-PSK, like, e.g. 8-PSK modulation schemes, may be computed using the inventive recursion.

Fig. 1k exemplarily shows a 8-PSK constellation according to 3GPP (3rd Generation Partnership Project) TS 25.223. The constellation points for 8-PSK result according to

$$e^{j\left(\phi_0 + \frac{\pi}{4}i\right)} \quad i = 0,1,2,...,7 \ . \tag{62}$$

According to Fig. 1m, wherein the decision region for bit $b_0$ is shown, the LLR of bit $b_0$ may be computed according to

$$\Lambda(b_0) = \ln \frac{\sum_{b_0 \in S_1} \Pr(b_0 = 1) p_1(\hat{b} | b_0 = 1)}{\sum_{b_0 \in S_0} \Pr(b_0 = 0) p_1(\hat{b} | b_0 = 0)}$$

$$= \ln \frac{\sum_{i=0}^{3} f_e\left(\left|\hat{b}' - e^{j\left(\phi_0 - \frac{\pi}{2} + \frac{\pi}{4}i\right)}\right|\right)}{\sum_{i=0}^{3} f_e\left(\left|\hat{b}' - e^{j\left(\phi_0 + \frac{\pi}{2} + \frac{\pi}{4}i\right)}\right|\right)} \tag{63}$$

$$= \ln \frac{\sum_{i=0}^{3} f_e\left(\hat{b}'_I - \cos\left(\phi_0 - \frac{\pi}{2} + \frac{\pi}{4}i\right)\right) f_e\left(\hat{b}'_Q - \sin\left(\phi_0 - \frac{\pi}{2} + \frac{\pi}{4}i\right)\right)}{\sum_{i=0}^{3} f_e\left(\hat{b}'_I - \cos\left(\phi_0 + \frac{\pi}{2} + \frac{\pi}{4}i\right)\right) f_e\left(\hat{b}'_Q - \sin\left(\phi_0 + \frac{\pi}{2} + \frac{\pi}{4}i\right)\right)}.$$

As will be appreciated the person skilled in the art, Eq. (63) may be determined with the inventive recursion.

According to Fig. In, wherein the decision region for bit $b_1$ is shown, the LLR of bit $b_1$ may be computed according to

$$\Lambda(b_1) = \ln \frac{\sum_{b_1 \in S_1} \Pr(b_1 = 1) p(\hat{b} | b_1 = 1)}{\sum_{b_1 \in S_0} \Pr(b_1 = 0) p(\hat{b} | b_1 = 0)}$$

$$= \ln \frac{\sum_{i=0}^{3} f_e\left(\left|\hat{b}' - e^{j\left(\phi_0 + \frac{\pi}{4}i\right)}\right|\right)}{\sum_{i=0}^{3} f_e\left(\left|\hat{b}' - e^{j\left(\phi_0 - \pi + \frac{\pi}{4}i\right)}\right|\right)} \tag{64}$$

$$= \ln \frac{\sum_{i=0}^{3} f_e\left(\hat{b}'_I - \cos\left(\phi_0 + \frac{\pi}{4}i\right)\right) f_e\left(\hat{b}'_Q - \sin\left(\phi_0 + \frac{\pi}{4}i\right)\right)}{\sum_{i=0}^{3} f_e\left(\hat{b}'_I - \cos\left(\phi_0 - \pi + \frac{\pi}{4}i\right)\right) f_e\left(\hat{b}'_Q - \sin\left(\phi_0 - \pi + \frac{\pi}{4}i\right)\right)}.$$

Eq. (64) may also be determined with the inventive recursion, as will be appreciated the person skilled in the art.

According to Fig. Ip, wherein the decision region for bit $b_2$ is shown, the LLR of bit $b_2$ may be computed according to

$$\Lambda\left(b_2\right) = \ln \frac{\sum_{b_2 \in S_1} \Pr\left(b_2 = 1\right) p\left(\hat{b}\middle| b_2 = 1\right)}{\sum_{b_2 \in S_0} \Pr\left(b_2 = 0\right) p\left(\hat{b}\middle| b_2 = 0\right)}$$

$$= \ln \frac{\sum_{i=0}^{1} f_c\left(\left|\hat{b}' - e^{j\left(\phi_0 - \frac{\pi}{4} + \frac{\pi}{4}i\right)}\right|\right) + \sum_{i=0}^{1} f_c\left(\left|\hat{b}' - e^{j\left(\phi_0 + \frac{3\pi}{4} + \frac{\pi}{4}i\right)}\right|\right)}{\sum_{i=0}^{1} f_c\left(\left|\hat{b}' - e^{j\left(\phi_0 + \frac{\pi}{4} + \frac{\pi}{4}i\right)}\right|\right) + \sum_{i=0}^{1} f_c\left(\left|\hat{b}' - e^{j\left(\phi_0 + \frac{5\pi}{4} + \frac{\pi}{4}i\right)}\right|\right)}$$

$$= \ln \frac{\left\{\begin{array}{l}\sum_{i=0}^{1} f_c\left(\hat{b}_I' - \cos\left(\phi_0 - \frac{\pi}{4} + \frac{\pi}{4}i\right)\right) f_c\left(\hat{b}_Q' - \sin\left(\phi_0 - \frac{\pi}{4} + \frac{\pi}{4}i\right)\right) \\ + \sum_{i=0}^{1} f_c\left(\hat{b}_I' - \cos\left(\phi_0 + \frac{3\pi}{4} + \frac{\pi}{4}i\right)\right) f_c\left(\hat{b}_Q' - \sin\left(\phi_0 + \frac{3\pi}{4} + \frac{\pi}{4}i\right)\right)\end{array}\right\}}{\left\{\begin{array}{l}\sum_{i=0}^{1} f_c\left(\hat{b}_I' - \cos\left(\phi_0 + \frac{\pi}{4} + \frac{\pi}{4}i\right)\right) f_c\left(\hat{b}_Q' - \sin\left(\phi_0 + \frac{\pi}{4} + \frac{\pi}{4}i\right)\right) \\ + \sum_{i=0}^{1} f_c\left(\hat{b}_I' - \cos\left(\phi_0 + \frac{5\pi}{4} + \frac{\pi}{4}i\right)\right) f_c\left(\hat{b}_Q' - \sin\left(\phi_0 + \frac{5\pi}{4} + \frac{\pi}{4}i\right)\right)\end{array}\right\}}$$

$$(65)$$

Eq. (65) may of course also be determined with the inventive recursion.

The higher-order digital modulation schemes described so far are only examples for the application of the present invention. Many other higher-order digital modulation schemes exist which are applicable for the inventive bitwise log-likelihood ratio computation by recursively applying the Jacobian logarithm $J(.,.)$ or an approximation thereof.

The Jacobian logarithm $J(.,.)$ according to Eq. (26) comprises the expression

$$f_c\left(|B - C|\right) = \ln\left\{1 + \exp\left\{-|B - C|\right\}\right\}, \qquad (66)$$

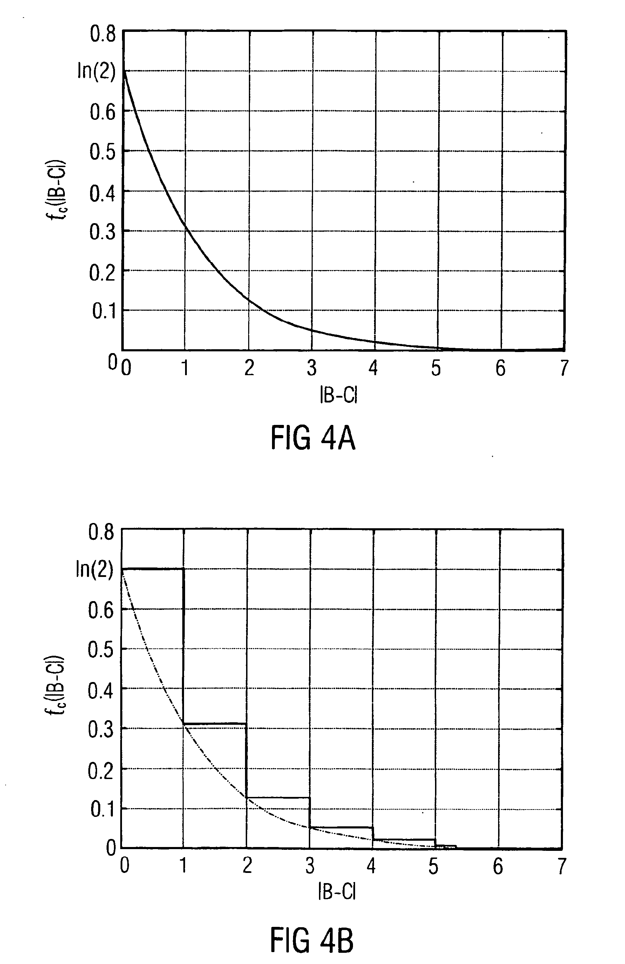

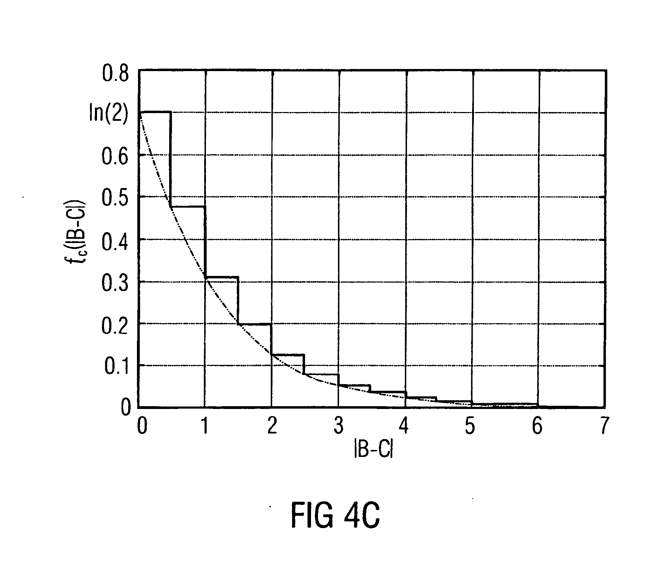

which may, at least for some signal processing applications, be too expensive to compute. Hence, according to some embodiments, the processor 22 is configured to approximate the Jacobian logarithm $J(B,C) = \ln\{\exp(B) + \exp(C)\} = \max\{B,C\} + \ln\{1 + \exp\{-|B-C|\}\}$ by merely determining the result of the expression $\max\{B,C\}$. Applying this approximation of the Jacobian logarithm recursively, according to the inventive concept, the obtained results will be superior compared to the conventional approximation based on Eq. (22) without the need for adding complex circuitry. It is interesting that the term $f_c(|B-C|)$ is always non-negative and has its maximum at $\ln(2)$ in the case of $B = C$. The correction term $f_c(|B-C|)$ versus $|B-C|$ is depicted in Fig. 4a. Due to the monotonously falling course of the correction term $f_c(|B-C|)$ in dependence of $|B-C|$, embodiments of the present invention use a lookup-table-based realization of the correction term $f_c(|B-C|)$ with only few quantization intervals, without introducing notable errors in the result. Hence, according to some embodiments, the processor 22 is configured to approximate the Jacobian logarithm according to Eq. (26) by, additionally to the max-operation, approximating the results of the correction term $f_c(|B-C|)$ by a lookup-operation in a lookup-table (LUT) which may be stored, e.g., in a digital memory of the apparatus 20. Since the correction term $f_c(|B-C|)$ only depends on $|B-C|$, this LUT is one-dimensional. Figs. 4b and 4c show two examples of a quantization of the stored values of eight intervals and 16 intervals, respectively. Approximating the correction term $f_c(|B-C|)$ by using values stored in a LUT, close-to-optimum bitwise LLRs $\Lambda(b_k)$ may be obtained.

As can be seen from the already presented equations, the processor 22 needs to have knowledge about the signal amplitude $\mu$ and the noise power in addition to the received signal samples $\hat{b}$. In many communication systems, the amplitude or, equivalently, the scaling factor $\mu$ and the noise power $2\sigma^2$ are not know a-priori on the receiver side and therefore have to be estimated. The accuracy of these estimates has direct impact on the computed LLRs and, hence, the resulting link level performance in terms of a bit-error rate (BER) or frame error rate (FER) and/or data throughput. If no information on the amplitude $\mu$ of the transmitted symbols $b$ is signaled, this amplitude has to be blindly estimated by the receiver based only on the received data symbols $\hat{b}$ and known statistics of the communications channel and the transmitted symbols $b$. In a real world transmission system, the received symbols $\hat{b}$ are additionally distorted by noise and/or interference with unknown statistical parameters. For this reason some sort of interference cancellation technique typically also needs to be applied.

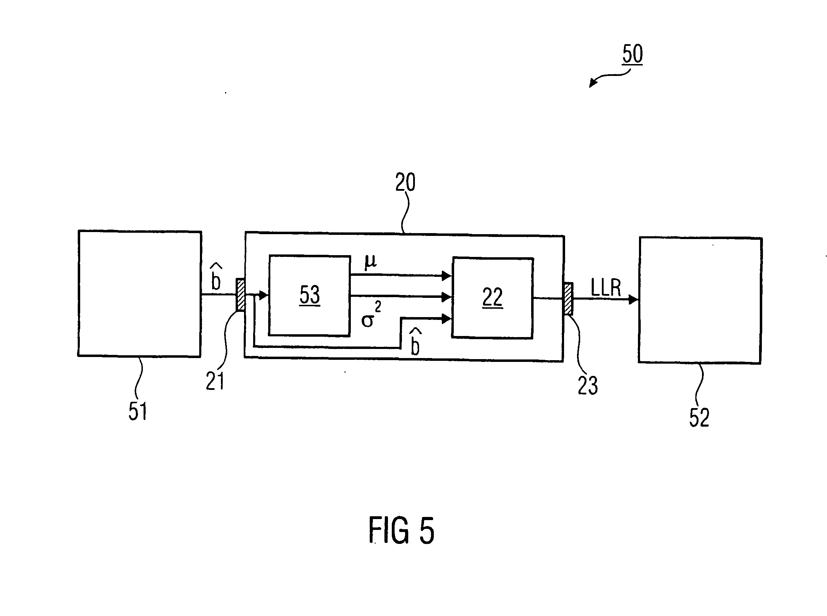

Fig. 5 shows a block diagram of a receiver structure 50, in which embodiments of an inventive apparatus 20 for determining probability information may be embedded.

For eliminating or reducing interference, an interference cancellation means 51, such as, e.g., a channel equalizer or multi-user detector, may be foreseen upstream to the apparatus 20 for determining the probability information $\Lambda$ $(b_k)$ needed for iterative channel decoding process performed by a downstream decoding device 52. The apparatus 20 further comprises an estimator 53 for estimating the average received signal amplitude $\mu$ and the spectral noise density $N_0$ needed for the subsequent LLR computation performed by the processor 22. For providing the estimates of $\mu$ and $N_0$ to the processor 22, the estimator 53 is coupled to the input 21 for the received signal sample $\hat{b}$ and to the processor 22.

The interference canceller 51 provides equalized output signals $\hat{b}$, which, after interference cancellation, may be expressed according to Eq. (4), wherein $b$ is the transmitted symbol, $\mu$ is the scaling factor to be estimated and $n$ is the additive noise, which can be regarded as being white after the interference cancellation or equalization process. The received signal samples $\hat{b}$ are then provided to the apparatus 20, wherein the estimator 53 has to estimate the scaling factor $\mu$ and the noise power of the noise $n$, in order to determine the signal-to-noise ratio

$$\frac{E_{\mathrm{b}}}{N_0} \approx \frac{\mu^2}{2\sigma^2} \ . \tag{67}$$

Since the useful transmitted symbols $b$ are unknown to the receiver 50, a so-called method of moments is used for blind parameter estimation, according to embodiments of the present invention. Hence, according to embodiments, the estimator 53 is configured to estimate the average received signal amplitude $\mu$ and the noise power $\sigma^2$ based on second and fourth-order moments of the received signal $\hat{b}$ and the transmit signal $b$, respectively.

As has been explained before, for square $M$-QAM, the transmit signal $b$ may be divided into two independent Gray-coded pulse amplitude modulation signals, inphase and quadrature components, wherein the two PAM signals have identical signal characteristics, except for the rotation of the axis. Hence, a one-dimensional $\sqrt{M}$-PAM signal with equidistant symbols is considered in the following. The I-component of the M-QAM signal has the following a-priori probabilities:

$$\Pr\left(d_1 = x_i\right) = p_i, \quad i = 1, 2, ..., M_{PAM}. \tag{68}$$

wherein $\left\{x_i\right\}_{i=1}^{M_{PAM}}$ is the set of PAM constellation points in the I-component. The probability density of a PAM/ASK transmit symbol may be denoted as

$$p_b\left(b\right) = \sum_{i=1}^{M} p_i \delta\left(b - x_i\right)$$

$$p_b\left(b\right) = \sum_{i=0}^{M_{PAM}-1} \frac{1}{M_{PAM}} \delta\left(b - \left(2i - M_{PAM} + 1\right)\right) \tag{69}$$

Due to the AWGN transmission model and the AWGN probability density function

$$p_n\left(b|\hat{b}\right) = \frac{1}{\sqrt{2\pi\sigma^2}}\exp\left(-\frac{n^2}{2\sigma^2}\right) = \frac{1}{\sqrt{2\pi\sigma^2}}\exp\left(-\frac{\left(\hat{b}-\mu b\right)^2}{2\sigma^2}\right),$$ (70)

and with

$$c = \frac{1}{\sqrt{2\pi\sigma^2}}, \; \alpha = \frac{1}{2\sigma^2}$$ (71)

the probability density function of the received signal $\hat{b}$ may be expressed as

$$\begin{aligned} p_{\hat{b}}\left(\hat{b}\right) &= \int_b \mathrm{d}b \; p_n\left(b,\hat{b}\right) \\ &= \int_b \mathrm{d}b \; p_n\left(b|\hat{b}\right)p_b\left(b\right) = c\sum_{i=1}^{M} p_i \; \exp\left(-\alpha\left(\hat{b}-\mu x_i\right)^2\right). \end{aligned}$$ (72)

The distribution of a random variable may be described by the moments of its probability density function. The uneven moments of the received signal $\hat{b}$, that is the moments of first order, third order, etc., may be expressed according to

$$\begin{aligned} m_{(2k-1)} &= \int_{-\infty}^{+\infty} p_{\hat{b}}\left(\hat{b}\right)\hat{b}^{(2k-1)}\mathrm{d}\hat{b} \\ &= c\int_{-\infty}^{+\infty} \underbrace{\sum_{i=1}^{M} p_i \; \exp\left(\alpha\left(\hat{b}-\mu x_i\right)^2\right)}_{\text{even function}} \underbrace{\hat{b}^{(2k-1)}}_{\text{odd function}} \mathrm{d}\hat{b} \\ &= 0; \\ &\forall \, k \in \mathbb{N} \end{aligned}$$ (73)

The second- and fourth- order moment of the received signal $\hat{b}$ may be computed according to

$$\begin{aligned} m_2 &= \int_{-\infty}^{+\infty} p_{\hat{b}}\left(\hat{b}\right)\hat{b}^2\mathrm{d}\hat{b} \\ &= c\int_{-\infty}^{+\infty}\left\{\sum_{i=1}^{M} p_i \; \exp\left(\alpha\left(\hat{b}-\mu x_i\right)^2\right)\right\}\hat{b}^2\mathrm{d}\hat{b} \end{aligned}$$ (74)

$$m_4 = \int_{-\infty}^{+\infty} p_{\hat{b}}\left(\hat{b}\right)\hat{b}^4 \mathrm{d}\hat{b}$$

$$= c \int_{-\infty}^{+\infty} \left\{ \sum_{i=1}^{M} p_i \exp\left(\alpha\left(\hat{b} - \mu x_i\right)^2\right) \right\} \hat{b}^4 \mathrm{d}\hat{b} \qquad (75)$$

With

$$\int_0^{+\infty} \exp\left(-\alpha x^2\right)\mathrm{d}x = \frac{\sqrt{\pi}}{2\sqrt{\alpha}} = \frac{\sqrt{2\pi\sigma^2}}{2} \; , \qquad (76)$$

$$\int_0^{+\infty} \exp\left(-\alpha x^2\right)x^2\mathrm{d}x = \frac{\sqrt{\pi}}{2^2\alpha\sqrt{\alpha}} = \frac{\sqrt{2\pi\sigma^2}}{2}\sigma^2 \text{ and} \qquad (77)$$

$$\int_0^{+\infty} \exp\left(-\alpha x^2\right)x^4\mathrm{d}x = \frac{3\sqrt{\pi}}{2^3\alpha^2\sqrt{\alpha}} = \frac{\sqrt{2\pi\sigma^2}}{2}3\sigma^4 \qquad (78)$$

the second-order moment (Eq. (74)) may be rewritten according to

$$m_2 = \int_{-\infty}^{+\infty} p_{\hat{b}}\left(\hat{b}\right)\hat{b}^2 \mathrm{d}\hat{b}$$

$$= c \int_{-\infty}^{+\infty} \left\{ \sum_{i=1}^{M} p_i \exp\left(-\alpha\left(\hat{b} - \mu x_i\right)^2\right) \right\} \hat{b}^2 \mathrm{d}\hat{b}$$

$$= c \int_{-\infty}^{+\infty} \left\{ \sum_{i=1}^{M} p_i \exp\left(-\alpha x^2\right) \right\}\left(x - \mu x_i\right)^2 \mathrm{d}x \quad . \qquad (79)$$

$$= \sum_{i=1}^{M} p_i \left(\sigma^2 + x_i^2 \mu^2\right)$$

$$= \sigma^2 + \sum_{i=1}^{M} p_i x_i^2 \mu^2$$

Using Eqs. (76) to (78), the fourth-order moment (Eq. (75)) may be rewritten according to

$$m_4 = \int_{-\infty}^{+\infty} p_{\hat{b}}\left(\hat{b}\right)\hat{b}^4 \mathrm{d}\hat{b}$$

$$= c \int_{-\infty}^{+\infty}\left\{\sum_{i=1}^{M} p_i \, \exp\left(-\alpha\left(\hat{b}-\mu x_i\right)^2\right)\right\}\hat{b}^4 \mathrm{d}\hat{b}$$

$$= c \int_{-\infty}^{+\infty}\left\{\sum_{i=1}^{M} p_i \, \exp\left(-\alpha x^2\right)\right\}\left(x-\mu x_i\right)^4 \mathrm{d}x \quad . \tag{80}$$

$$= \sum_{i=1}^{M}\left(3\sigma^4 + 6\sigma^2 x_i^{\,2}\mu^2 + x_i^{\,4}\mu^4\right)p_i$$

$$= 3\sigma^4 + 6\sum_{i=1}^{M} p_i \, x_i^2 \sigma^2 \mu^2 + \sum_{i=1}^{M} p_i \, x_i^4 \mu^4$$

To summarize, the first-, second-, third- and fourth-order moments of the received signal $\hat{b}$ for square $M$-QAM may be expressed as

$$m_1 = 0, \, m_3 = 0 \,\, , \tag{81}$$

$$m_2 = \sigma^2 + \sum_{i=1}^{M} p_i \, x_i^2 \mu^2$$

$$\Rightarrow \sigma^2 = \left( m_2 - \sum_{i=1}^{M} p_i \, x_i^2 \mu^2 \right) \quad , \text{ and} \tag{82}$$

$$m_4 = 3\sigma^4 + 6\sum_{i=1}^{M} p_i \, x_i^2 \sigma^2 \mu^2 + \sum_{i=1}^{M} p_i \, x_i^4 \mu^4 \quad . \tag{83}$$

With Eq. (82), Eq. (83) may be rewritten according to

$$m_4 = 3\left( m_2 - \sum_{i=1}^{M} p_i \, x_i^2 \mu^2 \right)^2 + 6\sum_{i=1}^{M} p_i \, x_i^2 \left( m_2 - \sum_{i=1}^{M} p_i \, x_i^2 \mu^2 \right)\mu^2 + \sum_{i=1}^{M} p_i \, x_i^4 \mu^4$$

$$= 3m_2^2 - 6\sum_{i=1}^{M} p_i \, x_i^2 m_2 \mu^2 + 3\left( \sum_{i=1}^{M} p_i \, x_i^2 \right)^2 \mu^4 + 6\sum_{i=1}^{M} p_i \, x_i^2 m_2 \mu^2 - 6\left( \sum_{i=1}^{M} p_i \, x_i^2 \right)^2 \mu^4 + \sum_{i=1}^{M} p_i \, x_i^4 \mu^4$$

$$= 3m_2^2 + \left( \sum_{i=1}^{M} p_i \, x_i^4 - 3\left( \sum_{i=1}^{M} p_i \, x_i^2 \right)^2 \right)\mu^4$$

$$\tag{84}$$

and the average received signal amplitude $\mu$ and the noise power $\sigma^2$ may be estimated by the estimator 53 according to

$$\Rightarrow \mu = \sqrt[4]{\frac{3m_2^2 - m_4}{\left(3\left(\sum_{i=1}^{M} p_i x_i^2\right)^2 - \sum_{i=1}^{M} p_i x_i^4\right)}}$$

$$\Rightarrow \sigma^2 = m_2 - \sum_{i=1}^{M} p_i x_i^2 \sqrt[2]{\frac{3m_2^2 - m_4}{\left(3\left(\sum_{i=1}^{M} p_i x_i^2\right)^2 - \sum_{i=1}^{M} p_i x_i^4\right)}}$$

(85)

With

$$E\left\{\hat{b}^2\right\} = m_2 = \int_{-\infty}^{+\infty} d\hat{b}\, \hat{b}^2 p_{\hat{b}}\left(\hat{b}\right) ,$$ (86)

$$E\left\{\hat{b}^4\right\} = m_4 = \int_{-\infty}^{+\infty} d\hat{b}\, \hat{b}^4 p_{\hat{b}}\left(\hat{b}\right) ,$$ (87)

$$E\left\{b^2\right\} = \int_b db \sum_{i=1}^{M} p_i b^2 \delta\left(b - x_i\right) = \sum_{i=1}^{M} p_i \int_b db\, b^2 \delta\left(b - x_i\right) = \sum_{i=1}^{M} p_i x_i^2 \text{ , and } \quad (88)$$

$$E\left\{b^4\right\} = \int_b db \sum_{i=1}^{M} p_i b^4 \delta\left(b - x_i\right) = \sum_{i=1}^{M} p_i \int_b db\, b^4 \delta\left(b - x_i\right) = \sum_{i=1}^{M} p_i x_i^4 \quad (89)$$

we obtain for square $M$-QAM:

$$\Rightarrow \mu = \sqrt[4]{\frac{3\left(E\left\{\hat{b}^2\right\}\right)^2 - E\left\{\hat{b}^4\right\}}{3\left(E\left\{b^2\right\}\right)^2 - E\left\{b^4\right\}}}$$

(90)

$$\Rightarrow \sigma^2 = E\left\{\hat{b}^2\right\} - E\left\{b^2\right\} \sqrt[2]{\frac{3\left(E\left\{\hat{b}^2\right\}\right)^2 - E\left\{\hat{b}^4\right\}}{3\left(E\left\{b^2\right\}\right)^2 - E\left\{b^4\right\}}}$$

As the statistics of the transmit signal $b$ are typically known in communication systems, the expectations involving the transmit signal $b$ may also be computed theoretically as expressed by Eq. (85). For the I/Q components of $M$-QAM, i.e. the respective $\sqrt{M}$ -PAM signals, Eq. (85) yields

$$\Rightarrow \mu = \sqrt[4]{\frac{3m_2^2 - m_4}{\frac{2}{15}\left(M_{\text{PAM}}^4 - 1\right)}}; \Rightarrow \sigma^2 = m_2 - \frac{\left(M_{\text{PAM}}^2 - 1\right)}{3}\sqrt[2]{\frac{3m_2^2 - m_4}{\frac{2}{15}\left(M_{\text{PAM}}^4 - 1\right)}} \ , \qquad (91)$$

with $M_{PAM} = \sqrt{M}$ .

Also, for rectangular QAM constellations, like, e.g. 32-QAM, the average received signal amplitude $\mu$ and the noise power $\sigma^2$ may be estimated by the estimator 53 based on second-and fourth-order moments.

For 32-QAM the I-component has the a-priori probabilities:

| x | -5 | -3 | -1 | 1 | 3 | 5 |
|---|---|---|---|---|---|---|
| $Pr(d_I = x)$ | $\dfrac{2}{16}$ | $\dfrac{3}{16}$ | $\dfrac{3}{16}$ | $\dfrac{3}{16}$ | $\dfrac{3}{16}$ | $\dfrac{2}{16}$ |

The probability density for a 32-QAM transmit symbol $b$ in the I-component may be determined according to

$$p_b(b) = \left(\frac{M_{b,I} - 2}{M_{\text{QAM}}}\right)\delta\left(b + \left(M_{b,I} - 1\right)\right) + \sum_{i=1}^{M_{b,I}-2}\left(\frac{M_{b,I}}{M_{\text{QAM}}}\right)\delta\left(b - \left(2i - M_{b,I} + 1\right)\right) + \left(\frac{M_{b,I} - 2}{M_{\text{QAM}}}\right)\delta\left(b - \left(M_{b,I} - 1\right)\right)$$

$$= \left(\frac{1}{8}\right)\delta(b+5) + \sum_{i=1}^{M_{b,I}-2}\left(\frac{3}{16}\right)\delta\left(b - \left(2i - M_{b,I} + 1\right)\right) + \left(\frac{1}{8}\right)\delta(b-5)$$

$$= \left(\frac{1}{8}\right)\delta(b+5) + \left(\frac{3}{16}\right)\delta(b+3) + \left(\frac{3}{16}\right)\delta(b+1) + \left(\frac{3}{16}\right)\delta(b-1) + \left(\frac{3}{16}\right)\delta(b-3) + \left(\frac{1}{8}\right)\delta(b-5)$$

$$(92)$$

with

$$M_{b,I} = \left\lceil \sqrt{M_{\text{QAM}}} \right\rceil = \left\lceil \sqrt{32} \right\rceil = 6 \ . \qquad (93)$$

The probability density for received symbol $\hat{b}$ in I is determined according to

$$p_{\hat{b}}(\hat{b}) = p_b(b) * p_n$$

$$= \left(\frac{M_{b,I} - 2}{M_{QAM}}\right)\frac{1}{\sqrt{2\pi\sigma^2}}\exp\left(-\frac{\left(\hat{b} + \mu\left(M_{b,I} - 1\right)\right)^2}{2\sigma^2}\right) + \sum_{i=1}^{M_{b,I}-2}\left(\frac{M_{b,I}}{M_{QAM}}\right)\frac{1}{\sqrt{2\pi\sigma^2}}\exp\left(-\frac{\left(\hat{b} + \mu\left(2i - M_{b,I} + 1\right)\right)^2}{2\sigma^2}\right)$$

$$+ \left(\frac{M_{b,I} - 2}{M_{QAM}}\right)\frac{1}{\sqrt{2\pi\sigma^2}}\exp\left(-\frac{\left(\hat{b} - \mu\left(M_{b,I} - 1\right)\right)^2}{2\sigma^2}\right)$$

$$= \left(\frac{1}{8}\right)\frac{1}{\sqrt{2\pi\sigma^2}}\exp\left(-\frac{\left(\hat{b} + 5\mu\right)^2}{2\sigma^2}\right) + \sum_{i=1}^{M_{b,I}-2}\left(\frac{3}{16}\right)\frac{1}{\sqrt{2\pi\sigma^2}}\exp\left(-\frac{\left(\hat{b} + \mu\left(2i - M_{b,I} + 1\right)\right)^2}{2\sigma^2}\right)$$

$$+ \left(\frac{1}{8}\right)\frac{1}{\sqrt{2\pi\sigma^2}}\exp\left(-\frac{\left(\hat{b} - 5\mu\right)^2}{2\sigma^2}\right)$$

$$= \left(\frac{1}{8}\right)\frac{1}{\sqrt{2\pi\sigma^2}}\exp\left(-\frac{\left(\hat{b} + 5\mu\right)^2}{2\sigma^2}\right) + \left(\frac{3}{16}\right)\frac{1}{\sqrt{2\pi\sigma^2}}\exp\left(-\frac{\left(\hat{b} + 3\mu\right)^2}{2\sigma^2}\right) + \left(\frac{3}{16}\right)\frac{1}{\sqrt{2\pi\sigma^2}}\exp\left(-\frac{\left(\hat{b} + 1\mu\right)^2}{2\sigma^2}\right)$$

$$+ \left(\frac{3}{16}\right)\frac{1}{\sqrt{2\pi\sigma^2}}\exp\left(-\frac{\left(\hat{b} - 1\mu\right)^2}{2\sigma^2}\right) + \left(\frac{3}{16}\right)\frac{1}{\sqrt{2\pi\sigma^2}}\exp\left(-\frac{\left(\hat{b} - 3\mu\right)^2}{2\sigma^2}\right) + \left(\frac{1}{8}\right)\frac{1}{\sqrt{2\pi\sigma^2}}\exp\left(-\frac{\left(\hat{b} - 5\mu\right)^2}{2\sigma^2}\right)$$

$$(94)$$

with $p_n$ according to Eq. (70).

With

$$c = \frac{1}{\sqrt{2\pi\sigma^2}}, \alpha = \frac{1}{2\sigma^2}, \beta(i) = \left(2i - M_{b,I} + 1\right) , \qquad (95)$$

Eq. (94) may be rewritten as

$$p_{\hat{b}}\left(\hat{b}\right) = p_b\left(b\right) * p_n$$

$$= c\left(\frac{M_{b,I}-2}{M_{QAM}}\right)\exp\left(-\alpha\left(\hat{b}-\mu\beta(0)\right)^2\right) + \sum_{i=1}^{M_{b,I}-2} c\left(\frac{M_{b,I}}{M_{QAM}}\right)\exp\left(-\alpha\left(\hat{b}-\mu\beta(i)\right)^2\right)$$

$$+ c\left(\frac{M_{b,I}-2}{M_{QAM}}\right)\exp\left(-\alpha\left(\hat{b}-\mu\beta\left(M_{b,I}-1\right)\right)^2\right)$$

$$= \left(\frac{1}{8}\right)c\exp\left(-\alpha\left(\hat{b}-\mu\beta(0)\right)^2\right) + \sum_{i=1}^{M_{b,I}-2} \left(\frac{3}{16}\right)c\exp\left(-\alpha\left(\hat{b}-\mu\beta(i)\right)^2\right)$$

$$+ \left(\frac{1}{8}\right)c\exp\left(-\alpha\left(\hat{b}-\mu\beta\left(M_{b,I}-1\right)\right)^2\right)$$

$$= \left(\frac{1}{8}\right)c\exp\left(-\alpha\left(\hat{b}-\mu\beta(0)\right)^2\right) + \left(\frac{3}{16}\right)c\exp\left(-\alpha\left(\hat{b}-\mu\beta(1)\right)^2\right) + \left(\frac{3}{16}\right)c\exp\left(-\alpha\left(\hat{b}-\mu\beta(2)\right)^2\right)$$

$$+ \left(\frac{3}{16}\right)c\exp\left(-\alpha\left(\hat{b}-\mu\beta(3)\right)^2\right) + \left(\frac{3}{16}\right)c\exp\left(-\alpha\left(\hat{b}-\mu\beta(4)\right)^2\right) + \left(\frac{1}{8}\right)c\exp\left(-\alpha\left(\hat{b}-\mu\beta(5)\right)^2\right)$$

$$(96)$$

Also, in the case of 32-QAM, the odd moments disappear according to

$$m_{(2k-1)} = \int_{-\infty}^{+\infty} p_{\hat{b}}\left(\hat{b}\right)\hat{b}^{(2k-1)}d\hat{b}$$

$$= c\int_{-\infty}^{+\infty}\underbrace{\left\{\begin{array}{l}\left(\dfrac{M_{b,I}-2}{M_{QAM}}\right)\exp\left(-\alpha\left(\hat{b}-\mu\beta(0)\right)^2\right) + \displaystyle\sum_{i=1}^{M_{b,I}-2}\left(\dfrac{M_{b,I}}{M_{QAM}}\right)\exp\left(-\alpha\left(\hat{b}-\mu\beta(i)\right)^2\right) \\ + \left(\dfrac{M_{b,I}-2}{M_{QAM}}\right)\exp\left(-\alpha\left(\hat{b}-\mu\beta\left(M_{b,I}-1\right)\right)^2\right)\end{array}\right\}}_{\text{even function}}\underbrace{\hat{b}^{(2k-1)}}_{\text{odd function}}d\hat{b}$$

$$= 0;$$

$$\forall k \in \mathbb{N}$$

$$(97)$$

The 2nd- and 4th-order moments may be determined according to

$$m_2 = \int_{-\infty}^{+\infty} p_{\hat{b}}\left(\hat{b}\right)\hat{b}^2 d\hat{b}$$

$$= c\int_{-\infty}^{+\infty}\left\{\begin{array}{l}\left(\dfrac{M_{b,I}-2}{M_{QAM}}\right)\exp\left(-\alpha\left(\hat{b}-\mu\beta(0)\right)^2\right) \\ + \displaystyle\sum_{i=1}^{M_{b,I}-2}\left(\dfrac{M_{b,I}}{M_{QAM}}\right)\exp\left(-\alpha\left(\hat{b}-\mu\beta(i)\right)^2\right) \\ + \left(\dfrac{M_{b,I}-2}{M_{QAM}}\right)\exp\left(-\alpha\left(\hat{b}-\mu\beta\left(M_{b,I}-1\right)\right)^2\right)\end{array}\right\}\hat{b}^2 d\hat{b} \quad , \text{and} \quad (98)$$

$$m_4 = \int_{-\infty}^{+\infty} p_{\hat{b}}\left(\hat{b}\right)\hat{b}^4 d\hat{b}$$

$$= c \int_{-\infty}^{+\infty} \left\{ \begin{array}{l} \left(\dfrac{M_{b,I}-2}{M_{QAM}}\right)\exp\left(-\alpha\left(\hat{b}-\mu\beta(0)\right)^2\right) \\[2mm] + \displaystyle\sum_{i=1}^{M_{b,I}-2}\left(\dfrac{M_{b,I}}{M_{QAM}}\right)\exp\left(-\alpha\left(\hat{b}-\mu\beta(i)\right)^2\right) \\[2mm] + \left(\dfrac{M_{b,I}-2}{M_{QAM}}\right)\exp\left(-\alpha\left(\hat{b}-\mu\beta(M_{b,I}-1)\right)^2\right) \end{array} \right\}\hat{b}^4 d\hat{b} \qquad (99)$$

Taking into account the following equations

$$\int_0^{+\infty}\exp\left(-\alpha x^2\right)dx = \frac{\sqrt{\pi}}{2\sqrt{\alpha}} = \frac{\sqrt{2\pi\sigma^2}}{2} \ , \qquad (100)$$

$$\int_0^{+\infty}\exp\left(-\alpha x^2\right)x^2 dx = \frac{\sqrt{\pi}}{2^2\alpha\sqrt{\alpha}} = \frac{\sqrt{2\pi\sigma^2}}{2}\sigma^2 \ , \qquad (101)$$

$$\int_0^{+\infty}\exp\left(-\alpha x^2\right)x^4 dx = \frac{3\sqrt{\pi}}{2^3\alpha^2\sqrt{\alpha}} = \frac{\sqrt{2\pi\sigma^2}}{2}3\sigma^4 \ , \qquad (102)$$

$$\sum_{i=1}^{M_{b,I}-2}\beta(i) = \left(M_{b,I}-2\right)\left(M_{b,I}-2-M_{b,I}+2\right) = 0 \ , \qquad (103)$$

$$\begin{aligned} \sum_{i=1}^{M_{b,I}-2}\beta(i)^2 &= \sum_{i=1}^{M_{b,I}-2}\left(2i-M_{b,I}+1\right)^2 \\ &= \sum_{i=1}^{M_{b,I}-2}\left(4i^2-4i\left(M_{b,I}-1\right)+\left(M_{b,I}-1\right)^2\right) \\ &= \left(M_{b,I}-2\right)\left(\frac{4}{3}\left(M_{b,I}-2\right)^2-\left(M_{b,I}-2\right)^2-\frac{1}{3}\right) \\ &= \frac{1}{3}\left(M_{b,I}-1\right)\left(M_{b,I}-2\right)\left(M_{b,I}-3\right) \end{aligned} \qquad \text{and} \qquad (104)$$

$$\sum_{i=1}^{M_{b,I}-2} \beta(i)^4 = \sum_{i=1}^{M_{b,I}-2} \left(2i - M_{b,I} + 1\right)^4$$

$$= \sum_{i=1}^{M_{b,I}-2} \left( \begin{array}{c} 16i^4 - 32i^3\left(M_{b,I}-1\right) + 24i^2\left(M_{b,I}-1\right)^2 \\ -8i\left(M_{b,I}-1\right)^3 + \left(M_{b,I}-1\right)^4 \end{array} \right)$$

$$= \left(M_{b,I}-2\right) \left( \begin{array}{c} \dfrac{8}{15}\left(M_{b,I}-1\right)\left(2M_{b,I}-3\right)\left(3\left(M_{b,I}-2\right)^2 + 3\left(M_{b,I}-2\right)-1\right) - 8\left(M_{b,I}-2\right)\left(M_{b,I}-1\right)^3 \\ + 4\left(2M_{b,I}-3\right)\left(M_{b,I}-1\right)^3 - 4\left(M_{b,I}-1\right)^4 + \left(M_{b,I}-1\right)^4 \end{array} \right)$$

$$= \left( \dfrac{3}{15}M_{b,I}^5 - \dfrac{30}{15}M_{b,I}^4 + \dfrac{110}{15}M_{b,I}^3 - \dfrac{180}{15}M_{b,I}^2 + \dfrac{127}{15}M - \dfrac{30}{15} \right)$$

$$(105)$$

Eq. (98) may be rewritten according to

$$m_2\left(M_{b,PAM}\right) = \int_{-\infty}^{+\infty} p_{\hat{b}}\left(\hat{b}\right)\hat{b}^2 d\hat{b}$$

$$= c\left(\dfrac{M_{b,I}-2}{M_{QAM}}\right)\sqrt{2\pi\sigma^2}\left(\sigma^2 + \beta(0)^2\mu^2\right) + c\left(\dfrac{M_{b,I}-2}{M_{QAM}}\right)\sqrt{2\pi\sigma^2}\left(\sigma^2 + \beta\left(M_{b,I}-1\right)^2\mu^2\right)$$

$$+ c\sqrt{2\pi\sigma^2}\sigma^2\left(\dfrac{M_{b,I}}{M_{QAM}}\right)\left(M_{b,I}-2\right) + c\sqrt{2\pi\sigma^2}\mu^2\left(\dfrac{M_{b,I}}{M_{QAM}}\right)\dfrac{1}{3}\left(M_{b,I}-1\right)\left(M_{b,I}-2\right)\left(M_{b,I}-3\right)$$

$$= \left(\dfrac{M_{b,I}-2}{M_{QAM}}\right)\left(2\sigma^2 + \left(\beta(0)^2 + \beta\left(M_{b,I}-1\right)^2\right)\mu^2\right)$$

$$+ \left(\dfrac{M_{b,I}}{M_{QAM}}\right)\left(\sigma^2\left(M_{b,I}-2\right) + \mu^2\dfrac{1}{3}\left(M_{b,I}-1\right)\left(M_{b,I}-2\right)\left(M_{b,I}-3\right)\right)$$

$$= \left(\dfrac{M_{b,I}-2}{M_{QAM}}\right)\left(2\sigma^2 + 2\left(M_{b,I}-1\right)^2\mu^2\right)$$

$$+ \left(\dfrac{M_{b,I}}{M_{QAM}}\right)\left(\sigma^2\left(M_{b,I}-2\right) + \mu^2\dfrac{1}{3}\left(M_{b,I}-1\right)\left(M_{b,I}-2\right)\left(M_{b,I}-3\right)\right)$$

$$= \left(\dfrac{M_{b,I}^2-4}{M_{QAM}}\right)\sigma^2 + \dfrac{1}{3}\dfrac{\left(M_{b,I}-1\right)\left(M_{b,I}-2\right)\left(M_{b,I}^2+3M_{b,I}-6\right)}{M_{QAM}}\mu^2$$

$$(106)$$

Taking into account Eqs. (100) - (105), Eq. (99) may be rewritten as

$$m_4\left(M_{b,PAM}\right) = \int_{-\infty}^{+\infty} p_{\hat{b}}\left(\hat{b}\right)\hat{b}^4 d\hat{b}$$

$$= c\left(\frac{M_{b,I}-2}{M_{QAM}}\right)\left(2\frac{\sqrt{2\pi\sigma^2}}{2}3\sigma^4 + 12\frac{\sqrt{2\pi\sigma^2}}{2}\sigma^2\beta(0)^2\mu^2 + 2\frac{\sqrt{2\pi\sigma^2}}{2}\beta(0)^4\mu^4\right)$$

$$+ c\left(\frac{M_{b,I}-2}{M_{QAM}}\right)\left(2\frac{\sqrt{2\pi\sigma^2}}{2}3\sigma^4 + 12\frac{\sqrt{2\pi\sigma^2}}{2}\sigma^2\beta(M_{b,I}-1)^2\mu^2 + 2\frac{\sqrt{2\pi\sigma^2}}{2}\beta(M_{b,I}-1)^4\mu^4\right)$$

$$+ c\left(\frac{M_{b,I}}{M_{QAM}}\right)\left(2\frac{\sqrt{2\pi\sigma^2}}{2}3\sigma^4(M_{b,I}-2) + 2\frac{\sqrt{2\pi\sigma^2}}{2}6\sigma^2\mu^2\sum_{i=1}^{M_{b,I}-2}\beta(i)^2 + 2\frac{\sqrt{2\pi\sigma^2}}{2}\mu^4\sum_{i=1}^{M_{b,I}-2}\beta(i)^4\right)$$

$$= \left(\frac{M_{b,I}-2}{M_{QAM}}\right)\left(3\sigma^4 + 6\sigma^2\beta(0)^2\mu^2 + \beta(0)^4\mu^4\right)$$

$$+ \left(\frac{M_{b,I}-2}{M_{QAM}}\right)\left(3\sigma^4 + 6\sigma^2\beta(M_{b,I}-1)^2\mu^2 + \beta(M_{b,I}-1)^4\mu^4\right)$$

$$+ \left(\frac{M_{b,I}}{M_{QAM}}\right)\left(3\sigma^4(M_{b,I}-2) + 6\sigma^2\mu^2\sum_{i=1}^{M_{b,I}-2}\beta(i)^2 + \mu^4\sum_{i=1}^{M_{b,I}-2}\beta(i)^4\right)$$

$$= \left(\frac{M_{b,I}-2}{M_{QAM}}\right)\left(6\sigma^4 + 12\sigma^2(M_{b,I}-1)^2\mu^2 + 2(M_{b,I}-1)^4\mu^4\right)$$

$$+ \left(\frac{M_{b,I}}{M_{QAM}}\right)\left(\begin{array}{c}3\sigma^4(M_{b,I}-2) + 2\sigma^2\mu^2(M_{b,I}-1)(M_{b,I}-2)(M_{b,I}-3)\\ + \mu^4\left(\frac{3}{15}M_{b,I}^5 - \frac{30}{15}M_{b,I}^4 + \frac{110}{15}M_{b,I}^3 - \frac{180}{15}M_{b,I}^2 + \frac{127}{15}M - \frac{30}{15}\right)\end{array}\right)$$

$$= 3\left(\frac{M_{b,I}^2-4}{M_{QAM}}\right)\sigma^4 + 2\left(\frac{M_{b,I}^2+3M_{b,I}-6}{M_{QAM}}\right)(M_{b,I}-1)(M_{b,I}-2)\sigma^2\mu^2$$

$$+ \frac{1}{M_{QAM}}\left(\frac{3}{15}M_{b,I}^6 - \frac{70}{15}M_{b,I}^4 + \frac{240}{15}M_{b,I}^3 - \frac{353}{15}M_{b,I}^2 + \frac{240}{15}M - \frac{60}{15}\right)\mu^4$$

$$\tag{107}$$

In summary, this yields for 32-QAM:

$$m_1 = 0, m_3 = 0, \tag{108}$$

$$m_2 = \left(\frac{M_{b,I}^2-4}{M_{QAM}}\right)\sigma^2 + \frac{1}{3}\frac{(M_{b,I}-1)(M_{b,I}-2)(M_{b,I}^2+3M_{b,I}-6)}{M_{QAM}}\mu^2$$

$$\Rightarrow \sigma^2 = \left(m_2 - \frac{1}{3}\frac{(M_{b,I}-1)(M_{b,I}-2)(M_{b,I}^2+3M_{b,I}-6)}{M_{QAM}}\mu^2\right)\Big/\left(\frac{M_{b,I}^2-4}{M_{QAM}}\right) \tag{109}$$

With $M_{b,I} = 6$, $M_{QAM} = 32$ Eq. (109) yields

$$\sigma^2 = \left(m_2 - 10\mu^2\right), \qquad\qquad (110)$$

$$m_4 = 3\left(\frac{M_{b,I}^2 - 4}{M_{QAM}}\right)\sigma^4 + 2\left(\frac{M_{b,I}^2 + 3M_{b,I} - 6}{M_{QAM}}\right)\left(M_{b,I} - 1\right)\left(M_{b,I} - 2\right)\sigma^2\mu^2$$
$$+ \frac{1}{M_{QAM}}\left(\frac{3}{15}M_{b,I}^6 - \frac{70}{15}M_{b,I}^4 + \frac{240}{15}M_{b,I}^3 - \frac{353}{15}M_{b,I}^2 + \frac{240}{15}M - \frac{60}{15}\right)\mu^4 \qquad (111)$$

With $M_{b,I} = 6$, $M_{QAM} = 32$, Eq. (111) yields

$$m_4 = 3\sigma^4 + 60\sigma^2\mu^2 + \frac{2992}{16}\mu^4 \qquad\qquad (112)$$

With Eq. (110), Eq. (112) yields

$$m_4 = 3\left(m_2 - 10\mu^2\right)^2 + 60\left(m_2 - 10\mu^2\right)\mu^2 + \frac{2992}{16}\mu^4$$
$$= 3m_2^2 - 60m_2\mu^2 + 300\mu^4 + 60m_2\mu^2 - 600\mu^4 + \frac{2992}{16}\mu^4 . \qquad (113)$$
$$= 3m_2^2 - 113\mu^4$$

Hence, for 32-QAM we obtain

$$\Rightarrow \mu = \sqrt[4]{\frac{3m_2^2 - m_4}{113}}$$
$$\Rightarrow \sigma = \sqrt{m_2 - 10\sqrt[2]{\frac{3m_2^2 - m_4}{113}}} . \qquad\qquad (114)$$

For 8-PSK according to Fig. 1k, a-priori probabilities of the I-component are:

| x | Pr (x) |
|---|--------|
| $\cos(\phi_0)$ | $\dfrac{1}{8}$ |
| $\cos\left(\phi_0 + \dfrac{\pi}{4}\right)$ | $\dfrac{1}{8}$ |
| $\cos\left(\phi_0 + \dfrac{\pi}{2}\right)$ | $\dfrac{1}{8}$ |
| $\cos\left(\phi_0 + \dfrac{3\pi}{4}\right)$ | $\dfrac{1}{8}$ |
| $\cos\left(\phi_0 + \pi\right)$ | $\dfrac{1}{8}$ |
| $\cos\left(\phi_0 + \dfrac{5\pi}{4}\right)$ | $\dfrac{1}{8}$ |
| $\cos\left(\phi_0 + \dfrac{3\pi}{2}\right)$ | $\dfrac{1}{8}$ |
| $\cos\left(\phi_0 + \dfrac{7\pi}{4}\right)$ | $\dfrac{1}{8}$ |

with $\phi_0$ denoting the angle of the symbol having the greatest positive value in I and non-negative value in Q of the PSK constellation. Considering only the I-component, this leads to the following probability distribution for the ASK symbol $b$:

$$p_b(b) = \frac{1}{8} \sum_{i=0}^{7} \delta\left(b - \cos\left(\phi_0 + \frac{\pi}{4}i\right)\right) \quad . \qquad (115)$$

This leads to the following probability distribution for the I-component of the received symbol $\hat{b}$ :

$$p_{\hat{b}}\left(\hat{b}\right) = p_b(b) * p_n$$

$$= \frac{1}{8\sqrt{2\pi\sigma^2}} \sum_{i=0}^{7} \exp\left(-\frac{\left(\hat{b} - \mu\cos\left(\phi_0 + \frac{\pi}{4}i\right)\right)^2}{2\sigma^2}\right) \qquad (116)$$

with $p_n$ according to Eq. (70).
With

$$c = \frac{1}{\sqrt{2\pi\sigma^2}}, \alpha = \frac{1}{2\sigma^2} \qquad (117)$$

Eq. (116) yields

$$p_{\hat{b},\mathrm{I}}\left(\hat{b}\right) = p_b(b) * p_n$$

$$= \frac{c}{8} \sum_{i=0}^{7} \exp\left(-\alpha\left(\hat{b} - \mu\cos\left(\phi_0 + \frac{\pi}{4}i\right)\right)^2\right) \quad . \qquad (118)$$

The Q-component of 8-PSK has the following values and corresponding a-priori probabilities:

| x | $\sin(\phi_0)$ | $\sin\left(\phi_0 + \frac{\pi}{4}\right)$ | $\sin\left(\phi_0 + \frac{\pi}{2}\right)$ | $\sin\left(\phi_0 + \frac{3\pi}{4}\right)$ | $\sin\left(\phi_0 + \pi\right)$ | $\sin\left(\phi_0 + \frac{5\pi}{4}\right)$ | $\sin\left(\phi_0 + \frac{3\pi}{2}\right)$ | $\sin\left(\phi_0 + \frac{7\pi}{4}\right)$ |
|---|---|---|---|---|---|---|---|---|
| $\Pr(x)$ | $\frac{1}{8}$ | $\frac{1}{8}$ | $\frac{1}{8}$ | $\frac{1}{8}$ | $\frac{1}{8}$ | $\frac{1}{8}$ | $\frac{1}{8}$ | $\frac{1}{8}$ |

with $\phi_0$ denoting the angle of the symbol having the greatest positive value in I and non-negative value in Q of the PSK constellation. Considering only the Q-component, this leads to the following probability distribution for the ASK symbol $b$:

$$p_b(b) = \frac{1}{8}\sum_{i=0}^{7}\delta\left(b - \sin\left(\phi_0 + \frac{\pi}{4}i\right)\right) \qquad (119)$$

This leads to the following probability distribution for the Q-component of the received symbol $\hat{b}$ :

$$p_{\hat{b},Q}(\hat{b}) = p_b(b) * p_n$$
$$= \frac{c}{8}\sum_{i=0}^{7}\exp\left(-\alpha\left(\hat{b} - \mu\sin\left(\phi_0 + \frac{\pi}{4}i\right)\right)^2\right) \cdot \qquad (120)$$

Similarly to the above described calculations, the 1st, 2nd, 3rd and 4th order moments may be computed and summarized as follows:

$$m_{1,I} = m_{1,Q} = 0, \; m_{3,I} = m_{3,Q} = 0 \qquad (121)$$

$$m_2 = m_{2,I} = m_{2,Q} = \sigma^2 + \frac{1}{2}\mu^2$$
$$\Rightarrow \sigma^2 = \left(m_2 - \frac{1}{2}\mu^2\right) \qquad (122)$$

$$m_4 = m_{4,I} = m_{4,Q} = 3\sigma^4 + 3\sigma^2\mu^2 + \frac{3}{8}\mu^4 \qquad (123)$$

With Eq. (122) Eq. (123) yields

$$m_4 = 3\left(m_2 - \frac{1}{2}\mu^2\right)^2 + 3\left(m_2 - \frac{1}{2}\mu^2\right)\mu^2 + \frac{3}{8}\mu^4$$
$$= 3m_2^2 - 3m_2\mu^2 + \frac{3}{4}\mu^4 + 3m_2\mu^2 - \frac{3}{2}\mu^4 + \frac{3}{8}\mu^4 \qquad (124)$$
$$= 3m_2^2 - \frac{3}{8}\mu^4$$

leading us to

$$\Rightarrow \mu = \sqrt[4]{\frac{8}{3}\left(3m_2^2 - m_4\right)}$$

$$\Rightarrow \sigma = \sqrt{m_2 - 10\sqrt[4]{\frac{8}{3}\left(3m_2^2 - m_4\right)}} \tag{125}$$

for 8-PSK according to Fig. 1k.

To summarize, embodiments of the present invention provide a simple and general bit log-likelihood ratio (LLR) determination for higher-order digitally modulated signals. For computing the bitwise LLR's, embodiments of the present invention make use of a recursive application of the Jacobian logarithm. According to some embodiments the Jacobian logarithm may be computed exactly. According to other embodiments of the present invention, the Jacobian logarithm may be approximated only by a max-operation or by a max-operation together with a simple table lookup.

The parameters $\mu$ and $\sigma^2$ needed for determining the bitwise LLRs are blindly estimated based on second- and fourth- order moments of the received signal $\hat{b}$ and/or the transmitted signal $b$.

Embodiments of the present invention provide attractive techniques to achieve improved high data rate transmissions over communication links without increasing bandwidth. Embodiments of the present invention allow a very exact determination of soft-information, i.e., LLR's, needed for subsequent iterative decoding schemes.

Depending on the circumstances, the inventive methods may be implemented in hardware or software. The implementation may be done on a digital storage medium, particularly a disc, CD or DVD with electronically readable control signals, which may cooperate with a programmable computer system such that the method for determining probability information is executed. In general, the invention thus also consists in a computer program product with a program code stored on a machine-readable carrier for performing the inventive method when the computer program product runs on a computer. In other words, the invention may thus be realized as a computer program with a program code for performing the method for determining probability information when the computer program runs on a computer or digital signal processor.

## Claims

1. An apparatus (20) for determining probability information related to a received signal sample ($\hat{b}$) corresponding to a plurality of bits ($b_k$) mapped to a transmit symbol ($b$), the apparatus comprising:

   an input (21) for the received signal sample ($\hat{b}$);
   a processor (22) for determining, as the probability information, for each bit position ($k$) of the plurality of bits ($b_k$) corresponding to the received signal sample ($\hat{b}$), a log-likelihood ratio ($\Lambda(b_k)$) of a bit based on a recursive application of the Jacobian logarithm ($J(.,.)$) or an approximation thereof; and
   an output (23) for the determined log-likelihood ratios ($\Lambda(b_k)$) as the probability information;
   wherein the processor (22) is configured to determine the log-likelihood ratio ($\Lambda(b_k)$) of a bit at a current bit position ($k$) based on a logarithm of a quotient of sums, the numerator of the quotient corresponding to a first sum of conditional probabilities denoting the probability of the received signal sample ($\hat{b}$) given the transmission of a first binary value at the current bit position ($k$), and the denominator of the quotient corresponding to a second sum of conditional probabilities denoting the probability of the received signal sample ($\hat{b}$), given the transmission of a second binary value at the current bit position ($k$), wherein the processor (22) is configured to evaluate both the sums based on a recursive application of the Jacobian-logarithm ($J(.,.)$);
   wherein the processor (22) is configured to determine, for each bit of the plurality of bits ($b_k$) corresponding to the received signal sample ($\hat{b}$), the log-likelihood ratio based on the logarithm of the quotient, the numerator of the quotient comprising the first sum

$$\sum_{\lambda=1}^{f(M)} \exp\left( f\left( \hat{b}, b_{i_{(k)\lambda}} \right) \right), \quad k = 0, 1, \ldots, (\nu - 1)$$

wherein v bits are mapped to a quadrature component of an *M*-ary complex valued symbol alphabet, $f(M)$ denotes a function of the size M of the symbol alphabet, $f\left(\hat{b}, b_{i_{(k)\lambda}}\right)$ denotes a function of the received signal sample $\hat{b}$ a hypothetic complex valued transmit symbol $b_{i_{(k)\lambda}}$ comprising the first binary value at the *k*-th bit position, and
the denominator of the quotient comprising the second sum

$$\sum_{\lambda=1}^{f(M)} \exp\left(f\left(\hat{b}, b_{0_{(k)\lambda}}\right)\right), \quad k = 0, 1, ..., (v-1)$$

wherein $b_{0_{(k)\lambda}}$ denotes a hypothetic transmit symbol comprising the second binary value at the *k*-th bit position;
wherein the processor (22) is configured to determine an expression

$$\sum_{\lambda=1}^{f(M)} \exp\left(f\left(\hat{b}, b_{0_{(k)\lambda}}\right)\right),$$

with

$$A_\lambda = f\left(\hat{b}, b_{0_{(k)\lambda}}\right), \quad \lambda = 1, 2, ..., f(M),$$

based on a ($f(M)$-1)-fold recursive application of the Jacobian-logarithm according to

$$\ln\left\{\sum_{\lambda=1}^{f(M)} \exp(A_\lambda)\right\} = \ln\left\{\exp(A_1) + \sum_{\lambda=2}^{f(M)} \exp(A_\lambda)\right\}$$

$$= \ln\left\{\exp(A_1) + \exp\left(A_{2...f(M)}\right)\right\}$$

$$= J\left(A_1, A_{2...f(M)}\right)$$

$$= J\left(A_1, J\left(A_2, A_{3...f(M)}\right)\right)$$

$$= J\left(A_1, J\left(A_2, J\left(A_3, J\left(A_4, J\left(A_5, J\left(A_6, A_{7...f(M)}\right)\right)\right)\right)\right)\right)$$

$$= J\left(A_1, J\left(A_2, J\left(A_3, J\left(A_4, J\left(A_5, J\left(A_6, ...J\left(A_{(f(M)-1)}, A_{f(M)}\right)\right)\right)\right)\right)\right)\right)$$

wherein

$$J(B, C) = \ln\left\{\exp(B) + \exp(C)\right\} = \max\left\{B, C\right\} + \ln\left\{1 + \exp\left\{-|B - C|\right\}\right\};$$

wherein the apparatus (20) further comprises an estimator (53) for estimating an average received signal amplitude ($\mu$) and a noise power ($\sigma^2$), wherein the estimator (53) is coupled to the input (21) for the received signal sample and to the processor (22) for providing the estimates ($\mu$; $\sigma^2$) to the processor (22);

wherein the processor (22) is configured to apply the recursive application of the Jacobian-logarithm for determining the probability information in case a signal-to-noise ratio is lower than an signal-to-noise ratio threshold value ($\gamma_{th}$) which is associated with an uncoded bit error ratio threshold ($P_{e,th}$) of $10^{-3}$ to $10^{-1}$ and

to switch on/off the recursive application of the Jacobian logarithm in dependence on the signal-to-noise ratio.

2. The apparatus according to claim 1, wherein the transmit symbol ($b$) is chosen from a complex valued symbol alphabet of a higher-order digital modulation scheme chosen from the group of $M$-PSK, $M$-QAM, $M$-FSK, $M$-ASK, wherein $M \geq 4$ and denotes a size of the symbol alphabet.

3. The apparatus according to claim 1 or 2, wherein the transmit symbol ($b$) is chosen from a complex valued symbol alphabet, in which different transmit symbols are equally probable, and wherein the plurality of bits ($b_k$) is mapped to the complex valued transmit symbol based on the Gray-Code, such that the log-likelihood ratio ($\Lambda(b_k)$) of a bit position corresponding to an inphase component of the received signal sample ($\hat{b}$) can be determined independently from the log-likelihood ratio of a bit position corresponding to a quadrature component of the received signal sample ($\hat{b}$).

4. The apparatus according to one of the preceding claims, wherein the processor (22) is configured to determine the log-likelihood ratio ($\Lambda(b_k)$) of the $k$-th bit ($b_k$) based on

$$\Lambda\left(b_k\right) = \ln \frac{\sum_{\lambda=1}^{f(M)} \exp\left(f\left(\hat{b}, b_{i_{(k)\lambda}}\right)\right)}{\sum_{\lambda=1}^{f(M)} \exp\left(f\left(\hat{b}, b_{0_{(k)\lambda}}\right)\right)}, \quad k = 0, 1, ..., (v-1)$$

wherein $v$ bits are mapped to a quadrature component of an $M$-ary complex valued symbol alphabet, $f(M)$ denotes a function of the size M of the symbol alphabet, $f\left(\hat{b}, b_{i_{(k)\lambda}}\right)$ denotes a function of the received signal sample $\hat{b}$

and a hypothetic complex valued transmit symbol $b_{i_{(k)\lambda}}$ comprising the first binary value at the $k$-th bit position,

and $b_{0_{(k)\lambda}}$ denotes a hypothetic transmit symbol comprising the second binary value at the $k$-th bit position.

5. The apparatus according to one of claims 1 to 4, wherein the processor (22) is configured to approximate the term

$$J\left(B, C\right) = \max\left\{B, C\right\} + \ln\left\{1 + \exp\left\{-\left|B - C\right|\right\}\right\}$$

by determining a result of the term max $\{B,C\}$.

6. The apparatus according to claim 5, wherein the processor (22) is configured to approximate the term

$$J\left(B, C\right) = \max\left\{B, C\right\} + \ln\left\{1 + \exp\left\{-\left|B - C\right|\right\}\right\}$$

by approximating a result of the term ln{1+exp{-|B-C|}} by a lookup-operation in a lookup-table stored in a digital memory in addition to determining the result of the term max {*B,C*}.

7. The apparatus according to one of claims 1 to 6, wherein the estimator (53) is configured to estimate the average received signal amplitude ($\mu$) and the noise power ($\sigma^2$) based on second and fourth order moments of the received signal ($\hat{b}$) and the transmit signal (*b*), respectively.

8. The apparatus according to claim 7, wherein the estimator (53) is configured to estimate the average received signal amplitude ($\mu$) based on

$$\Rightarrow \mu = \sqrt[4]{\frac{3m_2^2 - m_4}{\left(3\left(\sum_{i=1}^{M} p_i x_i^2\right)^2 - \sum_{i=1}^{M} p_i x_i^4\right)}}$$

and the noise power ($\sigma^2$) based on

$$\Rightarrow \sigma^2 = m_2 - \sum_{i=1}^{M} p_i x_i^2 \sqrt[2]{\frac{3m_2^2 - m_4}{\left(3\left(\sum_{i=1}^{M} p_i x_i^2\right)^2 - \sum_{i=1}^{M} p_i x_i^4\right)}}$$

wherein $m_2$ denotes the second order moment and $m_4$ denotes the fourth order moment of the received signal samples ($\hat{b}$), and wherein $\sum_{i=1}^{M} p_i x_i^2$ denotes the second order moment and $\sum_{i=1}^{M} p_i x_i^4$ denotes the fourth order moment of a quadrature component of the transmit symbol, $x_i$ denoting one of $M$ transmit symbols with possibility $p_i$.

9. A method (30) for determining probability information related to a received signal sample ($\hat{b}$) corresponding to a plurality of bits ($b_k$) mapped to a transmit symbol (*b*), the method comprising:

   determining, for each bit position (*k*) of the plurality of bits ($b_k$) corresponding to the received signal sample ($\hat{b}$), a log-likelihood ratio ($\Lambda(b_k)$) based on a recursive application of the Jacobian logarithm or an approximation thereof;
   wherein the log-likelihood ratio ($\Lambda(b_k)$) of a bit at a current bit position (*k*) is determined based on a logarithm of a quotient of sums, the numerator of the quotient corresponding to a first sum of conditional probabilities denoting the probability of the received signal sample ($\hat{b}$) given the transmission of a first binary value at the current bit position (*k*), and the denominator of the quotient corresponding to a second sum of conditional probabilities denoting the probability of the received signal sample ($\hat{b}$), given the transmission of a second binary value at the current bit position (*k*), wherein both the sums are evaluated based on a recursive application of the Jacobian-logarithm (*J*(.,.));
   wherein the method comprises determining, for each bit of the plurality of bits ($b_k$) corresponding to the received signal sample ($\hat{b}$), the log-likelihood ratio based on the logarithm of the quotient, the numerator of the quotient comprising the first sum

$$\sum_{\lambda=1}^{f(M)} \exp\left(f\left(\hat{b}, b_{i_{(k)\mu}}\right)\right), \quad k = 0, 1, ..., (v-1)$$

wherein $v$ bits are mapped to a quadrature component of an $M$-ary complex valued symbol alphabet, $f(M)$ denotes a function of the size M of the symbol alphabet, $f\left(\hat{b}, b_{i_{(k)\lambda}}\right)$ denotes a function of the received signal sample $\hat{b}$ a hypothetic complex valued transmit symbol $b_{i_{(k)\lambda}}$ comprising the first binary value at the $k$-th bit position, and
the denominator of the quotient comprising the second sum

$$\sum_{\lambda=1}^{f(M)} \exp\left(f\left(\hat{b}, b_{i_{(k)\lambda}^{0}}\right)\right), \quad k=0,1,...,(v-1)$$

wherein $b_{i_{(k)\lambda}^{0}}$ denotes a hypothetic transmit symbol comprising the second binary value at the $k$-th bit position;

wherein the the method comprises determining an expression

$$\sum_{\lambda=1}^{f(M)} \exp\left(f\left(\hat{b}, b_{i_{(k)\lambda}^{0}}\right)\right),$$

with

$$A_{\lambda} = f\left(\hat{b}, b_{i_{(k)\lambda}^{0}}\right), \quad \lambda=1,2,...,f(M),$$

based on a ($f(M)$-1)-fold recursive application of the Jacobian-logarithm according to

$$\ln\left\{\sum_{\lambda=1}^{f(M)} \exp\left(A_{\lambda}\right)\right\} = \ln\left\{\exp\left(A_{1}\right) + \sum_{\lambda=2}^{f(M)} \exp\left(A_{\lambda}\right)\right\}$$
$$= \ln\left\{\exp\left(A_{1}\right) + \exp\left(A_{2...f(M)}\right)\right\}$$
$$= J\left(A_{1}, A_{2...f(M)}\right)$$
$$= J\left(A_{1}, J\left(A_{2}, A_{3...f(M)}\right)\right)$$
$$= J\left(A_{1}, J\left(A_{2}, J\left(A_{3}, J\left(A_{4}, J\left(A_{5}, J\left(A_{6}, A_{7...f(M)}\right)\right)\right)\right)\right)\right)$$
$$= J\left(A_{1}, J\left(A_{2}, J\left(A_{3}, J\left(A_{4}, J\left(A_{5}, J\left(A_{6}, ...J\left(A_{(f(M)-1)}, A_{f(M)}\right)\right)\right)\right)\right)\right)\right)$$

wherein

$$J(B,C) = \ln\left\{\exp(B) + \exp(C)\right\} = \max\left\{B,C\right\} + \ln\left\{1 + \exp\left\{-|B-C|\right\}\right\};$$

wherein method comprises estimating an average received signal amplitude ($\mu$) and a noise power ($\sigma^2$);
wherein the method comprises applying the recursive application of the Jacobian-logarithm for determining the probability information in case a signal-to-noise ratio is lower than an signal-to-noise ratio threshold value ($\gamma_{th}$) which is associated with an uncoded bit error ratio threshold ($P_{e,th}$) of $10^{-3}$ to $10^{-1}$ and
switching on/off the recursive application of the Jacobian logarithm in dependence on the signal-to-noise ratio. A computer program for performing the steps of the method according to claim 9, when the computer program is running on a digital signal processor.

**Patentansprüche**

1. Eine Vorrichtung (20) zum Ermitteln von Wahrscheinlichkeitsinformationen, die auf einen empfangenen Signalabtastwert ($\hat{b}$) bezogen sind, der einer Mehrzahl von Bits ($b_k$) entspricht, die auf ein Sendesymbol (b) abgebildet sind, wobei die Vorrichtung folgende Merkmale aufweist:

einen Eingang (21) für den empfangenen Signalabtastwert ($\hat{b}$);
einen Prozessor (22) zum Ermitteln, als Wahrscheinlichkeitsinformationen, für jede Bitposition (k) der Mehrzahl von Bits ($b_k$), die dem empfangenen Signalabtastwert ($\hat{b}$) entsprechen, eines logarithmierten Wahrscheinlichkeitsverhältnisses ($\Lambda(b_k)$) eines Bits auf der Basis einer rekursiven Anwendung des Jacobi-Logarithmus ($J(.,.)$) oder einer Annäherung desselben; und
einen Ausgang (23) für die ermittelten logarithmierten Wahrscheinlichkeitsverhältnisse ($\Lambda(b_k)$) als Wahrscheinlichkeitsinformationen;
wobei der Prozessor (22) dazu konfiguriert ist, das logarithmierte Wahrscheinlichkeitsverhältnis ($\Lambda(b_k)$) eines Bits an einer aktuellen Bitposition (k) auf der Basis eines Logarithmus eines Summenquotienten zu ermitteln, wobei der Zähler des Quotienten einer ersten Summe bedingter Wahrscheinlichkeiten entspricht, die die Wahrscheinlichkeit des empfangenen Signalabtastwerts ($\hat{b}$) bei gegebener Übertragung eines ersten binären Werts an der aktuellen Bitposition (k) bezeichnen, und der Nenner des Quotienten einer zweiten Summe bedingter Wahrscheinlichkeiten entspricht, die die Wahrscheinlichkeit des empfangenen Signalabtastwerts ($\hat{b}$) bei gegebener Übertragung eines zweiten binären Werts an der aktuellen Bitposition (k) bezeichnen, wobei der Prozessor (22) dazu konfiguriert ist, beide Summen auf der Basis einer rekursiven Anwendung des Jacobi-Logarithmus ($J(.,.)$) auszuwerten;
wobei der Prozessor (22) dazu konfiguriert ist, für jedes Bit der Mehrzahl von Bits ($b_k$), die dem empfangenen Signalabtastwert ($\hat{b}$) entsprechen, das logarithmierte Wahrscheinlichkeitsverhältnis auf der Basis des Logarithmus des Quotienten zu ermitteln, wobei der Zähler des Quotienten die erste Summe

$$\sum_{\lambda=1}^{f(M)} \exp\left( f\left( \hat{b}, b_{i_{(k)\lambda}^1} \right) \right), \quad k = 0, 1, ..., (\nu - 1)$$

aufweist, wobei ν Bits auf eine Quadraturkomponente eines M-ären komplexwertigen Symbolalphabets abgebildet sind, f(M) eine Funktion der Größe M des Symbolalphabets bezeichnet, $f\left( \hat{b}, b_{i_{(k)\lambda}^1} \right)$ eine Funktion des empfangenen Signalabtastwerts $\hat{b}$ und eines hypothetischen komplexwertigen Sendesymbols $b_{i_{(k)\lambda}^1}$, das den ersten binären Wert an der k.ten Bitposition aufweist, bezeichnet, und der Zähler des Quotienten die zweite Summe

$$\sum_{\lambda=1}^{f(M)} \exp\left( f\left( \hat{b}, b_{i_{(k)\lambda}^0} \right) \right), \quad k = 0, 1, ..., (\nu - 1)$$

aufweist, wobei $b_{i_{(k)\lambda}^0}$ ein hypothetisches Sendesymbol bezeichnet, das den zweiten binären Wert an der k.ten Position aufweist;
wobei der Prozessor (22) dazu konfiguriert ist, einen Ausdruck

$$\sum_{\lambda=1}^{f(M)} \exp\left( f\left( \hat{b}, b_{i^0_{(k)\lambda}} \right) \right),$$

mit

$$A_\lambda = f\left( \hat{b}, b_{i^0_{(k)\lambda}} \right), \quad \lambda = 1, 2, \ldots, f(M),$$

auf der Basis einer ($f$($M$)-1)-fachen rekursiven Anwendung des Jacobi-Logarithmus gemäß

$$\ln\left\{ \sum_{\lambda=1}^{f(M)} \exp\left( A_\lambda \right) \right\} = \ln\left\{ \exp\left( A_1 \right) + \sum_{\lambda=2}^{f(M)} \exp\left( A_\lambda \right) \right\}$$

$$= \ln\left\{ \exp\left( A_1 \right) + \exp\left( A_{2\ldots f(M)} \right) \right\}$$

$$= J\left( A_1, A_{2\ldots f(M)} \right)$$

$$= J\left( A_1, J\left( A_2, A_{3\ldots f(M)} \right) \right)$$

$$= J\left( A_1, J\left( A_2, J\left( A_3, J\left( A_4, J\left( A_5, J\left( A_6, A_{7\ldots f(M)} \right) \right) \right) \right) \right) \right)$$

$$= J\left( A_1, J\left( A_2, J\left( A_3, J\left( A_4, J\left( A_5, J\left( A_6, \ldots J\left( A_{(f(M)-1)}, A_{f(M)} \right) \right) \right) \right) \right) \right) \right)$$

zu ermitteln, wobei

$$J(B,C) = \ln\left\{ \exp(B) + \exp(C) \right\} = \max\{B,C\} + \ln\left\{ 1 + \exp\left\{ -\left| B - C \right| \right\} \right\};$$

wobei die Vorrichtung (20) ferner eine Schätzeinrichtung (53) zum Schätzen einer durchschnittlichen empfangenen Signalamplitude ($\mu$) und einer Rauschleistung ($\sigma^2$) aufweist, wobei die Schätzeinrichtung (53) mit dem Eingang (21) für den empfangenen Signalabtastwert und mit dem Prozessor (22) zum Liefern der Schätzungen ($\mu$; $\sigma^2$) an den Prozessor (22) gekoppelt ist;
wobei der Prozessor (22) dazu konfiguriert ist, die rekursive Anwendung des Jacobi-Logarithmus zum Ermitteln der Wahrscheinlichkeitsinformationen anzuwenden, falls ein Signal/Rausch-Verhältnis niedriger ist als ein Signal/Rausch-Verhältnis-Schwellwert ($\gamma_{th}$), der einer Schwelle eines uncodierten Bitfehlerverhältnisses ($P_{e,th}$) von $10^{-3}$ bis $10^{-1}$ zugeordnet ist, und
die rekursive Anwendung des Jacobi-Logarithmus in Abhängigkeit von dem Signal/Rausch-Verhältnis ein-/auszuschalten.

2. Die Vorrichtung gemäß Anspruch 1, bei der das Sendesymbol (b) aus einem komplexwertigen Symbolalphabet eines digitalen Modulationsschemas höherer Ordnung ausgewählt ist, das aus der Gruppe $M$-PSK, M-QAM, M-FSK, M-ASK ausgewählt ist, wobei $M \geq 4$ ist und eine Größe des Symbolalphabets bezeichnet.

**3.** Die Vorrichtung gemäß Anspruch 1 oder 2, bei der das Sendesymbol (b) aus einem komplexwertigen Symbolalphabet ausgewählt ist, bei dem verschiedene Sendesymbole gleichermaßen wahrscheinlich sind, und bei der die Mehrzahl von Bits ($b_k$) auf der Basis des Gray-Codes auf das komplexwertige Sendesymbol abgebildet ist, derart, dass das logarithmierte Wahrscheinlichkeitsverhältnis ($\Lambda(b_k)$) einer Bitposition, die einer Gleichphasenkomponente des empfangenen Signalabtastwerts ($\hat{b}$) entspricht, unabhängig von dem logarithmierten Wahrscheinlichkeitsverhältnis der Bitposition, die einer Quadraturkomponente des empfangenen Signalabtastwerts ($\hat{b}$) entspricht, ermittelt werden kann.

**4.** Die Vorrichtung gemäß einem der vorhergehenden Ansprüche, bei der der Prozessor (22) dazu konfiguriert ist, das logarithmierte Wahrscheinlichkeitsverhältnis ($\Lambda(b_k)$) des k.ten Bits ($b_k$) auf der Basis von

$$\Lambda\left(b_k\right) = \ln \frac{\sum_{\lambda=1}^{f(M)} \exp\left(f\left(\hat{b}, b_{i_{(k)\lambda}}^1\right)\right)}{\sum_{\lambda=1}^{f(M)} \exp\left(f\left(\hat{b}, b_{i_{(k)\lambda}}^0\right)\right)}, \quad k = 0, 1, \ldots, (\nu-1)$$

zu ermitteln, wobei v Bits auf eine Quadraturkomponente eines M-ären komplexwertigen Symbolalphabets abgebildet sind, f(M) eine Funktion der Größe M des Symbolalphabets bezeichnet, $f\left(\hat{b}, b_{i_{(k)\lambda}}^1\right)$ eine Funktion des empfangenen Signalabtastwerts $\hat{b}$ und eines hypothetischen komplexwertigen Sendesymbols $b_{i_{(k)\lambda}}^1$, das den ersten binären Wert an der k.ten Bitposition aufweist, bezeichnet, und $b_{i_{(k)\lambda}}^0$ ein hypothetisches Sendesymbol bezeichnet, das den zweiten binären Wert an der k.ten Bitposition aufweist.

**5.** Die Vorrichtung gemäß einem der Ansprüche 1 bis 4, bei der der Prozessor (22) dazu konfiguriert ist, den Term

$$J\left(B, C\right) = \max\left\{B, C\right\} + \ln\left\{1 + \exp\left\{-|B-C|\right\}\right\}$$

durch Ermitteln eines Ergebnisses des Terms max {B,C} anzunähern.

**6.** Die Vorrichtung gemäß Anspruch 5, bei der der Prozessor (22) dazu konfiguriert ist, den Term

$$J\left(B, C\right) = \max\left\{B, C\right\} + \ln\left\{1 + \exp\left\{-|B-C|\right\}\right\}$$

durch Annähern eines Ergebnisses des Terms ln {1+exp{-|B-C|}} anhand einer Nachschlagoperation in einer in einem digitalen Speicher gespeicherten Nachschlagtabelle zusätzlich zu einem Ermitteln des Ergebnisses des Begriffs max {B,C} anzunähern.

**7.** Die Vorrichtung gemäß einem der Ansprüche 1 bis 6, bei der die Schätzeinrichtung (53) dazu konfiguriert ist, die durchschnittliche empfangene Signalamplitude ($\mu$) und die Rauschleistung ($\sigma^2$) auf der Basis von Momenten der zweiten und vierten Ordnung des empfangenen Signals ($\hat{b}$) beziehungsweise des Sendesignals (b) zu schätzen.

**8.** Die Vorrichtung gemäß Anspruch 7, bei der die Schätzeinrichtung (53) dazu konfiguriert ist, die durchschnittliche empfangene Signalamplitude ($\mu$) auf der Basis von

$$\Rightarrow \mu = \sqrt[4]{\frac{3m_2^2 - m_4}{\left(3\left(\sum_{i=1}^{M} p_i \, x_i^2\right)^2 - \sum_{i=1}^{M} p_i \, x_i^4\right)}}$$

und die Rauschleistung ($\sigma^2$) auf der Basis von

$$\Rightarrow \sigma^2 = m_2 - \sum_{i=1}^{M} p_i \, x_i^2 \sqrt[2]{\frac{3m_2^2 - m_4}{\left(3\left(\sum_{i=1}^{M} p_i \, x_i^2\right)^2 - \sum_{i=1}^{M} p_i \, x_i^4\right)}}$$

zu schätzen, wobei $m_2$ das Moment zweiter Ordnung und $m_4$ das Moment vierter Ordnung der empfangenen Signalabtastwerte ($\hat{b}$) bezeichnet und wobei $\sum_{i=1}^{M} p_i \, x_i^2$ das Moment zweiter Ordnung und $\sum_{i=1}^{M} p_i \, x_i^4$ das Moment vierter Ordnung einer Quadraturkomponente des Sendesymbols bezeichnet, wobei $x_i$ eines von M Sendesymbolen mit einer Möglichkeit $p_i$ bezeichnet.

9. Ein Verfahren (30) zum Ermitteln von Wahrscheinlichkeitsinformationen, die auf einen empfangenen Signalabtastwert ($\hat{b}$) bezogen sind, der einer Mehrzahl von Bits ($b_k$) entspricht, die auf ein Sendesymbol (b) abgebildet sind, wobei das Verfahren folgende Schritte aufweist:

Ermitteln, für jede Bitposition (k) der Mehrzahl von Bits ($b_k$), die dem empfangenen Signalabtastwert ($\hat{b}$) entsprechen, eines logarithmierten Wahrscheinlichkeitsverhältnisses ($\Lambda(b_k)$) auf der Basis einer rekursiven Anwendung des Jacobi-Logarithmus oder einer Annäherung desselben;
wobei das logarithmierte Wahrscheinlichkeitsverhältnis ($\Lambda(b_k)$) eines Bits an einer aktuellen Bitposition (k) auf der Basis eines Logarithmus eines Summenquotienten ermittelt wird, wobei der Zähler des Quotienten einer ersten Summe bedingter Wahrscheinlichkeiten entspricht, die die Wahrscheinlichkeit des empfangenen Signalabtastwerts ($\hat{b}$) bei gegebener Übertragung eines ersten binären Werts an der aktuellen Bitposition (k) bezeichnen, und der Nenner des Quotienten einer zweiten Summe bedingter Wahrscheinlichkeiten entspricht, die die Wahrscheinlichkeit des empfangenen Signalabtastwerts (b) bei gegebener Übertragung eines zweiten binären Werts an der aktuellen Bitposition (k) bezeichnen, wobei beide Summen auf der Basis einer rekursiven Anwendung des Jacobi-Logarithmus (J(.,.)) ausgewertet werden;
wobei das Verfahren ein Ermitteln, für jedes Bit der Mehrzahl von Bits ($b_k$), die dem empfangenen Signalabtastwert ($\hat{b}$) entsprechen, des logarithmierten Wahrscheinlichkeitsverhältnisses auf der Basis des Logarithmus des Quotienten aufweist, wobei der Zähler des Quotienten die erste Summe

$$\sum_{\lambda=1}^{f(M)} \exp\left( f\left(\hat{b}, b_{i_{(k)\lambda}}\right)\right), \quad k = 0, 1, \ldots, (\nu - 1)$$

aufweist, wobei $\nu$ Bits auf eine Quadraturkomponente eines M-ären komplexwertigen Symbolalphabets abgebildet sind, f(M) eine Funktion der Größe M des Symbolalphabets bezeichnet, $f\left(\hat{b}, b_{i_{(k)\lambda}}\right)$ eine Funktion des empfangenen Signalabtastwerts $\hat{b}$ und eines hypothetischen komplexwertigen Sendesymbols $b_{i_{(k)\lambda}}$, das

den ersten binären Wert an der k.ten Bitposition aufweist, bezeichnet, und der Zähler des Quotienten die zweite Summe

$$\sum_{\lambda=1}^{f(M)} \exp\left( f\left( \hat{b}, b_{i^0_{(k)\lambda}} \right) \right), \quad k = 0, 1, \ldots, (\nu - 1)$$

aufweist, wobei $b_{i^0_{(k)\lambda}}$ ein hypothetisches Sendesymbol bezeichnet, das den zweiten binären Wert an der k.ten Position aufweist;
wobei das Verfahren ein Ermitteln eines Ausdrucks

$$\sum_{\lambda=1}^{f(M)} \exp\left( f\left( \hat{b}, b_{i^0_{(k)\lambda}} \right) \right),$$

mit

$$A_\lambda = f\left( \hat{b}, b_{i^0_{(k)\lambda}} \right), \quad \lambda = 1, 2, \ldots, f(M),$$

auf der Basis einer ($f(M)$-1)-fachen rekursiven Anwendung des Jacobi-Logarithmus gemäß

$$
\begin{aligned}
\ln\left\{ \sum_{\lambda=1}^{f(M)} \exp\left( A_\lambda \right) \right\} &= \ln\left\{ \exp\left( A_1 \right) + \sum_{\lambda=2}^{f(M)} \exp\left( A_\lambda \right) \right\} \\
&= \ln\left\{ \exp\left( A_1 \right) + \exp\left( A_{2\ldots f(M)} \right) \right\} \\
&= J\left( A_1, A_{2\ldots f(M)} \right) \\
&= J\left( A_1, J\left( A_2, A_{3\ldots f(M)} \right) \right) \\
&= J\left( A_1, J\left( A_2, J\left( A_3, J\left( A_4, J\left( A_5, J\left( A_6, A_{7\ldots f(M)} \right) \right) \right) \right) \right) \right) \\
&= J\left( A_1, J\left( A_2, J\left( A_3, J\left( A_4, J\left( A_5, J\left( A_6, \ldots J\left( A_{(f(M)-1)}, A_{f(M)} \right) \right) \right) \right) \right) \right) \right)
\end{aligned}
$$

aufweist, wobei

$$J(B, C) = \ln\left\{ \exp(B) + \exp(C) \right\} = \max\left\{ B, C \right\} + \ln\left\{ 1 + \exp\left\{ -|B - C| \right\} \right\};$$

wobei Verfahren ein Schätzen einer durchschnittlichen empfangenen Signalamplitude ($\mu$) und einer Rauschleistung ($\sigma^2$) aufweist;

wobei das Verfahren ein Anwenden der rekursiven Anwendung des Jacobi-Logarithmus zum Ermitteln der Wahrscheinlichkeitsinformationen, falls ein Signal/Rausch-Verhältnis niedriger ist als ein Signal/Rausch-Verhältnis-Schwellwert ($\gamma_{th}$), der einer Schwelle eines uncodierten Bitfehlerverhältnisses ($P_{e,th}$) von $10^{-3}$ bis $10^{-1}$ zugeordnet ist, und ein Ein-/Ausschalten der rekursiven Anwendung des Jacobi-Logarithmus in Abhängigkeit von dem Signal/Rausch-Verhältnis aufweist.

**10.** Ein Computerprogramm zum Durchführen der Schritte des Verfahrens gemäß Anspruch 9, wenn das Computerprogramm auf einem digitalen Signalprozessor abläuft.

**Revendications**

**1.** Appareil (20) pour déterminer les informations de probabilité relatives à un échantillon de signal reçu ($\hat{b}$) correspondant à une pluralité de bits ($b_k$) mappés à un symbole de transmission $(b)$, l'appareil comprenant:

une entrée (21) pour l'échantillon de signal reçu ($\hat{b}$);
un processeur (22) destiné à déterminer, comme informations de probabilité, pour chaque position de bit ($k$) de la pluralité de bits ($b_k$) correspondant à l'échantillon de signal reçu ($\hat{b}$), un logarithme de rapport de vraisemblance ($\Lambda(b_k)$) d'un bit sur base d'une application récursive du logarithme jacobien ($J(.,.)$) ou d'une approximation de ce dernier; et
une sortie (23) pour les logarithmes de rapport de vraisemblance déterminé ($\Lambda(b_k)$) comme informations de probabilité;
dans lequel le processeur (22) est configuré pour déterminer le logarithme de rapport de vraisemblance ($\Lambda(b_k)$) d'un bit à une position de bit actuelle ($k$) sur base d'un logarithme d'un quotient de sommes, le numérateur du quotient correspondant à une première somme de probabilités conditionnelles désignant la probabilité de l'échantillon de signal reçu ($\hat{b}$), vu la transmission d'une première valeur binaire à la position de bit actuelle ($k$), et le dominateur du quotient correspondant à une deuxième somme de probabilités conditionnelles désignant la probabilité de l'échantillon de signal reçu ($\hat{b}$), vu la transmission d'une deuxième valeur binaire à la position de bit actuelle ($k$), où le processeur (22) est configuré pour évaluer les deux sommes sur base d'une application récursive du logarithme jacobien ($J(.,.)$);
dans lequel le processeur (22) est configuré pour déterminer, pour chaque bit de la pluralité de bits ($b_k$) correspondant à l'échantillon de signal reçu ($\hat{b}$), le logarithme de rapport de vraisemblance sur base du logarithme du quotient, le numérateur du quotient comprenant la première somme

$$\sum_{\lambda=1}^{f(M)} \exp\left(f\left(\hat{b}, b_{i_{(k)\lambda}}\right)\right) \quad k = 0,1,...,(v-1)$$

où $v$ bits sont mappés à une composante en quadrature d'un $M$-aire alphabet de symboles à valeurs complexes, $f(M)$ désigne une fonction de la grandeur $M$ de l'alphabet de symboles,

$f\left(\hat{b}, b_{i_{(k)\lambda}}\right)$ désigne une fonction de l'échantillon de signal reçu $\hat{b}$ et d'un symbole de transmission à valeurs complexes hypothétique $b_{i_{(k)\lambda}}$ comprenant la première valeur binaire à la $k$-ième position de bit, et le dominateur du quotient comprenant la deuxième somme

$$\sum_{\lambda=1}^{f(M)} \exp\left(f\left(\hat{b}, b_{i_{(k)\lambda}^0}\right)\right) \quad k = 0,1,...,(v-1)$$

où $b_{i_{(k)\lambda}^0}$ désigne un symbole de transmission hypothétique comprenant la deuxième valeur binaire à la k-

ième position de bit;
dans lequel le processeur (22) est configuré pour déterminer une expression

$$\sum_{\lambda=1}^{f(M)} \exp\left(f\left(\hat{b}, b_{i_{(k)\lambda}^0}\right)\right)$$

avec

$$A_\lambda = f\left(\hat{b}, b_{i_{(k)\lambda}^0}\right) \lambda = 1, 2, \ldots, f(M)$$

sur base d'une application récursive de ($f(M)$-1) fois le logarithme jacobien selon

$$\ln\left\{\sum_{\lambda=1}^{f(M)} \exp(A_\lambda)\right\} = \ln\left\{\exp(A_1) + \sum_{\lambda=2}^{f(M)} \exp(A_\lambda)\right\}$$
$$= \ln\left\{\exp(A_1) + \exp(A_{2\ldots f(M)})\right\}$$
$$= J\left(A_1, A_{2\ldots f(M)}\right)$$
$$= J\left(A_1, J\left(A_2, A_{3\ldots f(M)}\right)\right)$$
$$= J\left(A_1, J\left(A_2, J\left(A_3, J\left(A_4, J\left(A_5, J\left(A_6, A_{7\ldots f(M)}\right)\right)\right)\right)\right)\right)$$
$$= J\left(A_1, J\left(A_2, J\left(A_3, J\left(A_4, J\left(A_5, J\left(A_6, \ldots J\left(A_{(f(M)-1)}, A_{f(M)}\right)\right)\right)\right)\right)\right)\right)$$

où

$$J(B, C) = \ln\left\{\exp(B) + \exp(C)\right\} = \max\{B, C\} + \ln\left\{1 + \exp\left\{-|B - C|\right\}\right\}$$

dans lequel l'appareil (20) comprend par ailleurs un estimateur (53) destiné à estimer une amplitude de signal reçu moyenne ($\mu$) et une puissance de bruit ($\sigma^2$), où l'estimateur (53) est couplé à l'entrée (21) pour l'échantillon de signal reçu et au processeur (22) pour fournir les estimations ($\mu$; $\sigma^2$) au processeur (22);
dans lequel le processeur (22) est configuré pour appliquer l'application récursive de logarithme jacobien pour déterminer les informations de probabilité au cas où un rapport signal-bruit est inférieur à une valeur de seuil de rapport signal-bruit ($\gamma_{th}$) qui est associée à un seuil de rapport d'erreur sur le bit non codé ($P_{e,th}$) de $10^{-3}$ à $10^{-1}$, et pour activer/désactiver l'application récursive du logarithme jacobien en fonction du rapport signal-bruit.

2. Appareil selon la revendication 1, dans lequel le symbole de transmission ($b$) est choisi parmi un alphabet de symboles à valeurs complexes d'un schéma de modulation numérique d'ordre supérieur choisi parmi le groupe composé de $M$-PSK, $M$-QAM, $M$-FSK, $M$-ASK, où $M \geq 4$ et désigne une grandeur de l'alphabet de symboles.

3. Appareil selon la revendication 1 ou 2, dans lequel le symbole de transmission ($b$) est choisi parmi un alphabet de symboles à valeurs complexes dans lequel différents symboles de transmission sont également probables, et dans lequel la pluralité de bits ($b_k$) est mappée au symbole de transmission à valeurs complexes sur base du Code de Gray, de sorte que le logarithme de rapport de vraisemblance ($\Lambda(b_k)$) d'une position de bit correspondant à une composante en phase de l'échantillon de signal reçu ($\hat{b}$) puisse être déterminé indépendamment du logarithme de rapport de vraisemblance d'une position de bit correspondant à une composante en quadrature de l'échantillon de signal reçu ($\hat{b}$).

**4.** Appareil selon l'une des revendications précédentes, dans lequel le processeur (22) est configuré pour déterminer le logarithme de rapport de vraisemblance ($\Lambda(b_k)$) du $k$-ième bit ($b_k$) sur base de

$$\Lambda(b_k) = \ln \frac{\sum_{\lambda=1}^{f(M)} \exp\left(f\left(\hat{b}, b_{i_{(k)\lambda}}\right)\right)}{\sum_{\lambda=1}^{f(M)} \exp\left(f\left(\hat{b}, b_{i_{(k)\lambda}}^0\right)\right)}, \quad k = 0,1,...,(v-1)$$

où v bits sont mappés à une composante en quadrature d'un $M$-aire alphabet de symboles à valeurs complexes, $f(M)$ désigne une fonction de la grandeur M de l'alphabet de symboles, $f\left(\hat{b}, \overset{\sim}{b}_{i_{(k)\lambda}}\right)$ désigne une fonction de l'échantillon de signal reçu $\hat{b}$ et d'un symbole de transmission à valeur complexes hypothétique $b_{i_{(k)\lambda}}$ comprenant la première valeur binaire à la $k$-ième position de bit, et $b_{i_{(k)\lambda}}^0$ désigne un symbole de transmission hypothétique comprenant la deuxième valeur binaire à la $k$-ième position de bit.

**5.** Appareil selon l'une des revendications 1 à 4, dans lequel le processeur (22) est configuré pour approximer le terme

$$J(B,C) = \max\{B,C\} + \ln\{1 + \exp\{-|B-C|\}\}$$

en déterminant un résultat du terme max $\{B,C\}$.

**6.** Appareil selon la revendication 5, dans lequel le processeur (22) est configuré pour approximer le terme

$$J(B,C) = \max\{B,C\} + \ln\{1 + \exp\{-|B-C|\}\}$$

en approximant un résultat du terme $\ln\{1+\exp\{-|B-C|\}\}$ par une opération de consultation dans un tableau de consultation mémorisé dans une mémoire numérique en plus d'en déterminant le résultat du terme max $\{B,C\}$.

**7.** Appareil selon l'une des revendications 1 à 6, dans lequel l'estimateur (53) est configuré pour estimer l'amplitude de signal reçu moyenne ($\mu$) et la puissance de bruit ($\sigma^2$) sur base de moments de deuxième et quatrième ordre respectivement du signal reçu ($\hat{b}$) et du signal de transmission (b).

**8.** Appareil selon la revendication 7, dans lequel l'estimateur (53) est configuré pour estimer l'amplitude de signal reçu moyenne ($\mu$) sur base de

$$\Rightarrow \mu = \sqrt{\frac{3m_2^2 - m_4}{\sqrt[4]{3\left(\sum_{i=1}^{M} p_i x_i^2\right)^2 - \sum_{i=1}^{M} p_i x_i^4}}}$$

et la puissance de bruit ($\sigma^2$) sur base de

$$\Rightarrow \sigma^2 = m_2 - \sum_{i=1}^{M} p_i x_i^2 \sqrt[2]{\frac{3m_2^2 - m_4}{\left(3\left(\sum_{i=1}^{M} p_i x_i^2\right) - \sum_{i=1}^{M} p_i x_i^4\right)}}$$

où $m_2$ désigne le moment de deuxième ordre et $m_4$ désigne le moment de quatrième ordre des échantillons de signal reçu ($\hat{b}$), et où $\sum_{i=1}^{M} p_i x_i^2$ désigne le moment de deuxième ordre et $\sum_{i=1}^{M} p_i x_i^4$ désigne le moment de quatrième ordre d'une composante en quadrature du symbole de transmission, $x_i$ désigne l'un des $M$ symboles de transmission à possibilité $p_i$.

9. Procédé (30) pour déterminer les informations de probabilité relatives à un échantillon de signal reçu ($\hat{b}$) correspondant à une pluralité de bits ($b_k$) mappés à un symbole de transmission ($b$), le procédé comprenant:

déterminer, pour chaque position de bit ($k$) de la pluralité de bits ($b_k$) correspondant à l'échantillon de signal reçu ($\hat{b}$), un logarithme de rapport de vraisemblance ($\Lambda(b_k)$) sur base d'une application récursive du logarithme jacobien ou d'une approximation de ce dernier;
dans lequel le logarithme de rapport de vraisemblance ($\Lambda(b_k)$) d'un bit à une position de bit actuelle ($k$) est déterminé sur base d'un logarithme d'un quotient de somme, le numérateur du quotient correspondant à une première somme de probabilités conditionnelles désignant la probabilité de l'échantillon de signal reçu ($\hat{b}$), vu la transmission d'une première valeur binaire à la position de bit actuelle ($k$), et le dominateur du quotient correspondant à une deuxième somme de probabilités conditionnelles désignant la probabilité de l'échantillon de signal reçu ($\hat{b}$), vu la transmission d'une deuxième valeur binaire à la position de bit actuelle ($k$), où les deux sommes sont évaluées sur base d'une application récursive du logarithme jacobien ($J(.,.)$);
dans lequel le procédé comprend le fait de déterminer, pour chaque bit de la pluralité de bits ($b_k$) correspondant à l'échantillon de signal reçu ($\hat{b}$), le logarithme de rapport de vraisemblance sur base du logarithme du quotient, le numérateur du quotient comprenant la première somme

$$\sum_{\lambda=1}^{f(M)} \exp\left(f\left(\hat{b}, b_{i(k)\lambda}^{1}\right)\right) \quad k = 0,1,...,(v-1)$$

où v bits sont mappés à une composante en quadrature d'un $M$-aire alphabet de symboles à valeurs complexes, $f(M)$ désigne une fonction de la grandeur $M$ de l'alphabet de symboles, $f\left(\hat{b}, b_{i(k)\lambda}^{1}\right)$ désigne une fonction de l'échantillon de signal reçu $\hat{b}$ et d'un symbole de transmission à valeurs complexes hypothétique $b_{i(k)\lambda}^{1}$ comprenant la première valeur binaire à la $k$-ième position de bit, et
le dominateur du quotient comprenant la deuxième somme

$$\sum_{\lambda=1}^{f(M)} \exp\left(f\left(\hat{b}, b_{i(k)\lambda}^{0}\right)\right) \quad k = 0,1,...,(v-1)$$

où $b_{i(k)\lambda}^{0}$ désigne un symbole de transmission hypothétique comprenant la deuxième valeur binaire à la $k$-ième position de bit;
dans lequel le procédé comprend le fait de déterminer une expression

$$\sum_{\lambda=1}^{f(M)} \exp\left(f\left(\hat{b}, b_{i_{(k)\lambda}}\right)\right)$$

avec

$$A_\lambda = f\left(\hat{b}, b_{i_{(k)\lambda}}\right) \quad \lambda = 1, 2, \ldots, f(M),$$

sur base d'une application récursive ($f(M$-1) fois du logarithme jacobien selon

$$\begin{aligned}
\ln\left\{\sum_{\lambda=1}^{f(M)} \exp(A_\lambda)\right\} &= \ln\left\{\exp(A_1) + \sum_{\lambda=2}^{f(M)} \exp(A_\lambda)\right\} \\
&= \ln\left\{\exp(A_1) + \exp\left(A_{2\ldots f(M)}\right)\right\} \\
&= J\left(A_1, A_{2\ldots f(M)}\right) \\
&= J\left(A_1, J\left(A_2, A_{3\ldots f(M)}\right)\right) \\
&= J\left(A_1, J\left(A_2, J\left(A_3, J\left(A_4, J\left(A_5, J\left(A_6, A_{7\ldots f(M)}\right)\right)\right)\right)\right)\right) \\
&= J\left(A_1, J\left(A_2, J\left(A_3, J\left(A_4, J\left(A_5, J\left(A_6, \ldots J\left(A_{(f(M)-1)}, A_{f(M)}\right)\right)\right)\right)\right)\right)\right)
\end{aligned}$$

où

$$J(B,C) = \ln\{\exp(B) + \exp(C)\} = \max\{B,C\} + \ln\{1 + \exp\{-|B-C|\}\}$$

dans lequel le procédé comprend le fait d'estimer une amplitude de signal reçu moyenne ($\mu$) et une puissance de bruit ($\sigma^2$);

dans lequel le procédé comprend le fait d'appliquer l'application récursive du logarithme jacobien pour déterminer les informations de probabilité au cas où un rapport signal-bruit est inférieur à une valeur de seuil de rapport signal-bruit ($\gamma_{th}$) qui est associée à un seuil de rapport d'erreur sur le bit non codé ($P_{e,th}$) de $10^{-3}$ à $10^{-1}$, et activer/désactiver l'application récursive du logarithme jacobien en fonction du rapport signal-bruit.

10. Programme d'ordinateur pour réaliser les étapes du procédé selon la revendication 9 lorsque le programme d'ordinateur est exécuté sur un processeur de signal numérique.

FIG 1A

FIG 1B

FIG 1C

FIG 1D

FIG 1E

FIG 1F

FIG 1G

FIG 1H

FIG 1J

FIG 1K

FIG 1M

FIG 1N

FIG 1P

<u>20</u>

$\mu$  $\sigma^2$

22

$\hat{b}$  LLR-processor  bit-LLR

21  23

FIG 2

$\underline{30}$

$$E_1 = A_{f(M)}; \; i = 1 \qquad \sim 31$$

$$32 \sim \quad E_{i+1} = J(A_{(f(M)-i)}, E_i)$$

$$33 \sim \quad i = i + 1$$

$$34 \sim \quad i = f(M)? \quad \text{no}$$

yes

end

FIG 3

FIG 4A

FIG 4B

72

FIG 4C

FIG 5

FIG 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2009127243 A1